# EUROPÄISCHE PATENTSCHRIFT

(11) **EP 3 912 512 B1**
(45) Veröffentlichungstag und Bekanntmachung des Hinweises auf die Patenterteilung: **01.04.2026**
(21) Anmeldenummer: 20175812.5
(22) Anmeldetag: 20.05.2020
(51) Int. Cl.: A46B 5/02, B29C 67/20

(54) **HYGIENEMITTEL, INSBESONDERE MUNDHYGIENEMITTEL**
HYGIENE PRODUCT, IN PARTICULAR ORAL HYGIENE PRODUCT
AGENT D'HYGIÈNE, EN PARTICULIER AGENT D'HYGIÈNE BUCCALE

(43) Veröffentlichungstag der Anmeldung: 24.11.2021
(73) Patentinhaber: Trisa Holding AG, 6234 Triengen (CH)
(72) Erfinder: Gross, Peter, 6204 Sempach-Stadt (CH); Schär, Michael, 6243 Egolzwil (CH); Zurfluh, Peter, 6055 Alpnach-Dorf (CH)
(74) Vertreter: Daub, Thomas

(56) Entgegenhaltungen:
- WO-A1-2016/105364
- DE-U1- 202008 008 841
- US-A- 4 283 808
- US-A- 6 024 903
- US-A1- 2003 172 498

## Beschreibung

### Stand der Technik

Die Erfindung betrifft ein Hygienemittel, insbesondere ein Mundhygienemittel.

Aus der EP 0 758 534 B1 und der US 4,283,808 sind bereits Hygienemittel, insbesondere Mundhygienemittel, mit zumindest einer Anwendungseinheit, mit zumindest einer mit der Anwendungseinheit verbundenen Griffeinheit und mit zumindest einem Volumenkörper, welcher zumindest teilweise die Anwendungseinheit und/oder die Griffeinheit ausbildet und der zumindest teilweise aus einem geschäumten Material besteht, bekannt. Aus der WO 2016/105364 A1 ist eine Zahnbürste mit einem Griffteil, der aus gespritzten Komponenten bestehen kann.

Ferner ist aus der DE 20 2004 015 133 U1 ebenfalls bereits ein Hygienemittel bekannt.

Die Aufgabe der Erfindung besteht insbesondere darin, eine gattungsgemäße Vorrichtung mit verbesserten Eigenschaften hinsichtlich einer Materialeffizienz, eines Gewichts und/oder einer Ergonomie bereitzustellen. Die Aufgabe wird erfindungsgemäß durch die Merkmale der Patentansprüche und 14 gelöst, während vorteilhafte Ausgestaltungen und Weiterbildungen der Erfindung den Unteransprüchen entnommen werden können.

### Vorteile der Erfindung

Die Erfindung geht aus von einem Hygienemittel, insbesondere von einem Mundhygienemittel, mit zumindest einer Anwendungseinheit, mit zumindest einer mit der Anwendungseinheit verbundenen Griffeinheit und mit zumindest einem Volumenkörper, welcher zumindest teilweise die Anwendungseinheit und/oder die Griffeinheit ausbildet und der zumindest teilweise aus einem geschäumten Material besteht.

Es wird vorgeschlagen, dass das Hygienemittel zumindest einen mit dem Volumenkörper verbundenen Grundkörper aufweist, welcher zumindest teilweise die Anwendungseinheit und/oder die Griffeinheit ausbildet, wobei der zumindest eine Volumenkörper an den zumindest einen Grundkörper angeformt ist. Der Volumenkörper ist vorzugsweise in einem Schäumverfahren hergestellt und bildet insbesondere mindestens einen Teil der Griffeinheit und/oder der Anwendungseinheit aus.

Vorzugsweise besteht das Hygienemittel aus einer Anwendungseinheit mit Borsten und der Griffeinheit, wobei die Anwendungseinheit insbesondere einen Halsbereich aufweist, der die Anwendungseinheit mit der Griffeinheit verbindet. Alle Teilelemente können aus mindestens einer Hart- und/oder einer oder mehreren Weichkomponente/-n und/oder einem geschäumten Material bestehen. Es sind konventionelle Hart- und/oder Weichkomponenten oder auch nachhaltige Hart- und/oder Weichkomponenten anwendbar.

Durch die erfindungsgemäße Ausgestaltung des Hygienemittels können vorteilhafte Eigenschaften hinsichtlich einer Ergonomie des Hygienemittels bereitgestellt werden. Es kann insbesondere eine vorteilhafte Greifbarkeit der Griffeinheit erreicht werden. Ferner kann dadurch insbesondere ein Gewicht des Hygienemittels gering gehalten werden, insbesondere ohne eine Ergonomie des Hygienemittels, insbesondere eine Greifbarkeit, zu beeinträchtigen. Es kann insbesondere ein leichter und trotzdem voluminöser Körper bereitgestellt werden. Beispielsweise kann eine leichte aber trotzdem voluminöse Zahnbürste hergestellt werden. Das Hygienemittel wird hierdurch insbesondere federleicht und eine Oberfläche ist eher weich und fühlt sich warm an. Es kann insbesondere ein Materialeinsatz für das Hygienemittel gering gehalten werden. Hierdurch kann insbesondere ein vorteilhaft ökologisches Hygienemittel bereitgestellt werden.

Unter einem "Hygienemittel" soll insbesondere ein Mundhygienemittel, vorzugsweise eine Zahnbürste verstanden werden. Alternativ kann das Hygienemittel von einem Mittel zur Haarentfernung wie insbesondere einem Rasierpinselgriff oder einem Nassrasierer, und/oder von einer Haarbürste, insbesondere einem länglichen Haarbürstengriff oder einem Haarbürstengriff beispielsweise in Form einer Schale (in welche das Borstenfeld eingebracht wird), gebildet sein. Ferner wäre denkbar, dass das Hygienemittel von einem Kosmetik-Applikator, wie insbesondere einem Griff für eine Mascarabürste oder einen Mascara-Applikator, einem Mascarabehälter, einem Nagellackpinselgriff, einem Nagellackpinselbehälter, einer Gesichtsbürste, einem Griff für einen Make-up-Applikator und/oder einem Behälter für Make-up gebildet ist. Alternativ kann das Hygienemittel von einem Haushaltsmittel, wie insbesondere einem Griffelement am Handgriff einer Abwaschbürste, einem Griffelement am Handgriff eines WC-Bürsten-Griffs, einem Griffelement am Handgriff eines Bodenwischers, am Handgriff einer Kehrschaufel und/oder einem Griffelement am Besenstiel eines Besens, verstanden werden. Des Weiteren kann das Hygienemittel von einer Verpackung und/oder einem Hilfsmittel gebildet sein, wie insbesondere einer Zahnseidenbox, einer Cremedose und/oder einem Gesichtsbürsten-Sockel. Unter einem "Mundhygienemittel" soll insbesondere eine Zahnbürste und/oder ein Interdentalreiniger und/oder eine Interdentalbürste und/oder ein Flosser und/oder ein Zungenreiniger und/oder ein Zahnstocher verstanden werden. Vorteilhaft ist das Mundhygienemittel als eine Zahnbürste, insbesondere eine Handzahnbürste, bevorzugt eine Kinder- oder Erwachsenenzahnbürste, vorteilhaft eine rein manuelle, Zahnbürste ausgebildet. Das Mundhygienemittel kann hierbei als eine Einwegzahnbürste, eine Mehrwegzahnbürste, eine Wechselkopfzahnbürste, eine Single-Tuft-Bürste, eine elektrische Zahnbürste, insbesondere ein Gehäuse einer elektrischen Zahnbürste, wie auch als eine Hybridzahnbürste, ein Interdentalreiniger, insbesondere mit eingedrehten Borsten, in gespritzter Form oder als Flosser, ein Zungenreiniger und/oder als Zahnseidenbox ausgebildet sein.

Das Hygienemittel weist insbesondere eine Längsachse auf, die vorteilhaft zumindest im Wesentlichen parallel zu einer Haupterstreckungsrichtung des Hygienemittels angeordnet ist. Bevorzugt verläuft die Längsachse zumindest abschnittsweise innerhalb des Hygienemittels und insbesondere durch dessen Schwerpunkt. Insbesondere ist die Längsachse des Hygienemittels eine Zentralachse des Hygienemittels und/oder eine Zentralachse der Griffeinheit. Unter einer "Zentralachse" eines Objekts soll dabei insbesondere eine gedachte Achse verstanden werden, die innerhalb des Objekts parallel zu einer Haupterstreckungsrichtung des Objekts verläuft und das Objekt an höchstens zwei Punkten schneidet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter einer "Haupterstreckung" eines Objekts soll in diesem Zusammenhang insbesondere eine Erstreckung einer längsten Kante eines kleinsten gedachten Quaders, welcher das Objekt gerade noch vollständig umschließt, verstanden werden.

Insbesondere weist das Hygienemittel eine Länge, insbesondere parallel zu der Längsachse des Hygienemittels, und gemessen parallel zur Auflagefläche, von 140 mm bis 210 mm und vorzugsweise von 165 mm bis 195 mm auf, wobei selbstverständlich auch andere, insbesondere kleinere oder größere, Längen denkbar sind. Insbesondere weist das Hygienemittel eine maximale Breite, insbesondere parallel zu einer Breitenachse des Hygienemittels, vorteilhaft senkrecht zu der Längsachse und/oder parallel zu einer Haupterstreckungsebene des Hygienemittels und/oder der Griffeinheit, von 10 mm bis 20 mm und vorzugsweise von 12 mm bis 17 mm auf. Ferner weist das Hygienemittel mit eingebrachten Filamenten/Borsten insbesondere eine Höhe, insbesondere parallel zu der Höhenachse gemessen senkrecht zur Auflagefläche, von 12 mm bis 25 mm und vorzugsweise von 15 mm bis 19 mm auf. Der Begriff "Höhe" bezieht sich hierbei insbesondere auf einen Zustand des Hygienemittels, in welchem dieses, beispielsweise auf einer Oberfläche wie einer Tischplatte, einem Waschbecken, einer Möbeloberseite oder dergleichen, abgelegt ist, insbesondere derart, dass die Längsachse parallel zu der Oberfläche angeordnet ist. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und durch den Mittelpunkt des Quaders verläuft.

Vorteilhaft weist die Anwendungseinheit zumindest einen Reinigungsbereich auf, der zu einer Zahnreinigungsanwendung, insbesondere in einem Mundraum des Benutzers, vorgesehen ist. Vorzugsweise umfasst der Reinigungsbereich zumindest eine Reinigungseinheit, insbesondere zumindest einen Bürstenkopf, vorteilhaft einen Zahnbürstenkopf, bevorzugt mit mehreren Borsten und/oder Borstenbündeln und/oder gespritzten Reinigungselementen bzw. gespritzten Borsten und/oder weichelastischen Reinigungselementen. Die Reinigungseinheit kann jedoch beispielsweise auch als eine Interdentalbürste und/oder als ein Single Tuft (z.B. einzelnes großes Borstenbündel) und/oder als ein mit Zahnseide bespannter Bogen, insbesondere als ein Flosser, oder dergleichen ausgebildet sein. Ferner weist die Anwendungseinheit vorteilhaft zumindest das Halselement auf, welches bevorzugt mit dem Reinigungsbereich, insbesondere unmittelbar und/oder einstückig, verbunden ist. Unter "einstückig" soll insbesondere zumindest stoffschlüssig und/oder materialschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Hygienemittel weist insbesondere eine Vorderseite und eine Rückseite auf, die insbesondere einander abgewandt angeordnet sind. Vorzugsweise ist der Reinigungsbereich auf der Vorderseite des Hygienemittels angeordnet. Die Vorderseite ist insbesondere eine in einer Betrachtungsrichtung senkrecht zu der Längsachse des Hygienemittels und senkrecht zu der Breitenachse des Hygienemittels sichtbare Seite des Hygienemittels. Als Vorderseite des Hygienemittels ist insbesondere jene Seite der Bürste bezeichnet, auf welcher der Daumen aufgelegt wird. Die Vorderseite ist normalerweise auch jene Seite, auf welche das Borstenfeld gerichtet ist. Die Rückseite entspricht vorteilhaft einer in einer hierzu entgegengesetzten Betrachtungsrichtung sichtbaren Seite des Hygienemittels. Als Rückseite des Hygienemittels wird die dem Borstenfeld entgegengesetzte Seite der Zahnbürste bezeichnet. Als linke Seite des Hygienemittels wird insbesondere eine Seite bezeichnet, welche links liegt, wenn man senkrecht auf die Vorderseite des Hygienemittels blickt. Als rechte Seite des Hygienemittels wird insbesondere eine Seite bezeichnet, welche rechts liegt, wenn man senkrecht auf die Vorderseite des Hygienemittels blickt. Als Oberseite wird insbesondere ein Ende des Hygienemittels bezeichnet, an welchem der Reinigungsbereich angeordnet ist. Als Unterseite wird insbesondere ein der Oberseite entgegengesetztes Ende des Hygienemittels bezeichnet, welches dem Griffbereich am nächsten liegt.

Vorzugsweise weist die Griffeinheit zumindest ein Griffelement auf, das vorteilhaft zu einem Halten mit einer Hand vorgesehen ist. Bevorzugt ist das Griffelement zumindest bereichsweise tailliert ausgebildet. Dies erlaubt vorteilhaft einen sicheren Halt und optimiert die Ergonomie. Besonders bevorzugt ist das Griffelement länglich ausgebildet, wobei vorteilhaft eine Längsachse des Griffelements der Längsachse des Hygienemittels entspricht. Das Griffelement weist insbesondere einen Griffkörper auf, welcher ein wesentliches Volumen des Griffelements ausbildet. Das Griffelement ist zumindest teilweise aus mindestens einer Hartkomponente und/oder aus einer oder mehreren Weichkomponenten und aus mindestens einem geschäumten Material ausgebildet. Insbesondere umfasst das Griffelement vorteilhaft zumindest einen Daumengriffbereich und/oder zumindest einen Handgriffbereich. Vorteilhaft ist der Daumengriffbereich auf der Vorderseite des Hygienemittels und insbesondere auf einer Vorderseite des Griffelements angeordnet. Es ist denkbar, dass der Daumengriffbereich und/oder der Handgriffbereich zumindest ein Element und/oder eine Oberflächenstrukturierung aus mindestens einer Weichkomponente und/oder mindestens einer Hartkomponente und/oder mindestens einem geschäumten Material aufweisen.

Die für die Herstellung eingesetzten Komponenten bzw. Materialien können insbesondere wie folgt eingeteilt werden - sie gelten u.a. für Weichkomponenten, Hartkomponenten und geschäumtes Material:
- Konventionelle Materialien bzw. Komponenten: Materialien, im Wesentlichen Neumaterialien, die größtenteils ölbasiert sind.
- Nachhaltige Materialien bzw. Komponenten: wie nachfolgend aufgezählt und später beschrieben vorzugsweise biobasiert, abbaubar und/oder recycliert.
   ∘ Biobasierte Materialien bzw. Komponenten: Material, welches insbesondere zu mehr als 60 %, vorzugsweise zu mehr als 80 % und besonders bevorzugt zu 100 % aus nachwachsenden Rohstoffen hergestellt ist. Eine weitere mögliche zusätzliche Eigenschaft biobasierter Materialien ist insbesondere, dass die biobasierten Materialien biologisch abbaubar sind. Vorzugsweise basieren die Materialien nicht auf Nahrungsmitteln wie insbesondere Mais etc.
   ∘ Biologisch abbaubare Materialien bzw. Komponenten: Material, das gemäß den gängigen Normen biologisch abbaubar ist. Hierzu zählen insbesondere die Kompostierbarkeit (industriell oder nicht industriell). Dabei können Materialien aus nachwachsenden Rohstoffen, wie insbesondere petrochemische Rohstoffe, diese Eigenschaft tragen.
   ∘ Recyclierte Materialien bzw. Komponenten: Materialien, die aus einem Recycling-Prozess stammen, wie beispielsweise Post Consumer Recycled Materialien, Ocean Waste Plastic oder Social Plastic.

Die eingesetzten Materialien bzw. Komponenten können recyclierbare Materialien sein. Für recyclierbare Materialien besteht nach dem Gebrauch vorteilhaft eine Recyclingmöglichkeit.

Im Rahmen dieser Offenbarung kommen nahezu beliebige Hartkomponenten und Weichkomponenten infrage, die der Fachmann zweckgemäß geeignet kombinieren und/oder auswählen wird. Als Hartkomponente kommen beispielsweise Styrolpolymerisate wie Styrolacrylnitril (SAN), Polystyrol (PS), Acrylnitrylbutadienstryrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephthalat (PET), insbesondere in Form von säuremodifiziertem Polyethylenterephthalat (PETA), glykolmodifiziertem Polyethylenterephthalat (PETG), Polybutylenterephthalat (PBT), säuremodifiziertes Polycyclohexylendimethylenterephthalat (PCT-A), glykolmodifiziertes Polycyclohexylendimethylenterephthalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphthalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen mehr umfassen. Insbesondere Polyethylen (PE) und/oder Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf. Als Hartkomponente wird bevorzugt Polypropylen (PP) eingesetzt. Mindestens gewisse unter der Hartkomponente genannte Materialien können nachhaltige Materialien sein. Insbesondere Materialien mit Celluloseanteil sind zumindest teilweise biobasiert.

Vorteilhaft werden Hartkomponenten für stabile und/oder strukturtragende Elemente, insbesondere in dem Griffelement und/oder in einem Trägerelement der Anwendungseinheit und/oder Schnittstellengeometrie zum Beispiel für Wechselköpfe oder dergleichen eingesetzt. Vorzugsweise wird die Hartkomponente für Elemente eingesetzt, deren Dauerhaftigkeit gewährleistet werden muss. Vorzugsweise weist das Hygienemittel oder zumindest ein Grundkörper des Hygienemittels eine einzige Hartkomponente auf, die aus einem der genannten Materialien oder auch aus einem Gemisch derselben ausgebildet sein kann. Es sind jedoch auch Kombinationen unterschiedlicher Hartkomponenten denkbar, wobei diese beispielsweise in einem Zwei- und/oder Mehrkomponentenspritzguss verarbeitet und/oder miteinander verklebt und/oder verschweißt, insbesondere ultraschallverschweißt, sein können. Alternativ oder zusätzlich können mehrere Hartkomponenten eingesetzt werden, die in einem Zwei- und/oder Mehrkomponentenspritzguss keinen Stoffschluss und/oder Materialschluss eingehen. Insbesondere ist denkbar, dass in diesem Fall ein Formschluss, beispielsweise in Form zumindest eines Hinterschnitts und/oder zumindest eines Durchbruchs und/oder zumindest einer zumindest teilweisen Umspritzung oder dergleichen, zwischen Hartkomponenten erzeugt ist. Hierbei ist denkbar, dass beispielsweise eine zweite Hartkomponente, die insbesondere auf eine erste Hartkomponente gespritzt ist, nach einem Spritzguss schwindet und/oder schrumpft und vorteilhaft eine Schwundverbindung mit der ersten Hartkomponente ausbildet. Geeignete Kombinationen können beispielsweise Polypropylen-Polyester, Polypropylen-Styrolacrylnitril oder andere Kombinationen sein.

Als Weichkomponenten kommen beispielsweise thermoplastische Styrol-Elastomere (TPE-S) wie etwa ein Styrol-Ethylen-Butylen-Styrol-Copolymer (SEBS), ein StyrolButadien-Styrol-Copolymer (SBS) oder dergleichen infrage. Zudem ist eine Verwendung thermoplastischer Polyurethan-Elastomere (TPE-U), thermoplastischer Polyamid-Elastomere (TPE-A), thermoplastischer Polyolefin-Elastomere (TPE-O), thermoplastischer Polyester-Elastomere (TPE-E) oder dergleichen denkbar. Weiterhin kann eine Weichkomponente beispielsweise zumindest ein Silikon umfassen. Vorteilhaft weist eine Weichkomponente eine Shorte-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Stoffschluss und/oder Materialschluss. Die unter der Weichkomponente genannten Materialien können nachhaltige Materialien sein.

Im Rahmen dieser Offenbarung kommen nahezu beliebige geschäumte Materialien infrage, die der Fachmann zweckgemäß geeignet kombinieren und/oder auswählen wird. Das geschäumte Material ist erfindungsgemäß von einem Partikelschaum aus expandierten Komponenten gebildet. Komponenten, die expandierbar sind, enthalten insbesondere ein E in der Bezeichnung. Das geschäumte Material kann aus einer Hartkomponente hergestellt sein, sodass insbesondere ein harter Schaum entsteht. Das geschäumte Material kann beispielsweise aus expandiertem Polystyrol (EPS), expandiertem Polyethylen (EPE), expandiertem Polypropylen (EPP), expandiertem Polyethylenterephthalat (EPET) und/oder expandiertem Polybutylenterephthalat (EPBT) als Grundkomponente bestehen. Grundsätzlich ist auch ein Schaum auf Basis von Cellulose oder PLA möglich. Das geschäumte Material kann auch aus einer Weichkomponente hergestellt sein, sodass insbesondere ein weicher Schaum entsteht. Das geschäumte Material kann dazu beispielsweise aus expandiertem thermoplastischem Polyurethan (ETPU) als Grundkomponente bestehen. Vorzugsweise umfasst das geschäumte Material Pentan in der Grundkomponente. Das Pentan dient insbesondere als Treibmittel. Das Pentan bewirkt insbesondere die Volumenvergrößerung in einem Herstellungsprozess. Es ist insbesondere eine Lagerbarkeit durch die Beladung mit z.B. Pentan gegeben. Ferner sind auch biologisch abbaubare Komponenten für das geschäumte Material möglich. Für eine Nachhaltigkeit wäre insbesondere ein Schaum denkbar, welcher vollständig biologisch abbaubar ist. Es ist beispielsweise ein Schaum auf Basis von Pflanzenöl, wie beispielsweise Palmöl, und/oder auf Basis von PLA, also insbesondere auf Basis von Pflanzenstärke/Cellulose und Wasser, denkbar.

Das geschäumte Material wird insbesondere aus einem expandierbaren Granulat hergestellt. Das geschäumte Material ist insbesondere aus Hartkomponente oder Weichkomponente realisierbar. Das geschäumte Material ist insbesondere von einem geschlossenzelligen Schaum gebildet. Es sind verschiedene, einem Fachmann als sinnvoll erscheinende Granulatherstellungsvarianten denkbar. Beispielsweise kann das Material in einem Autoklaven als Reaktor geschäumt werden. Dabei wird insbesondere in einem ersten Schritt das Granulat, beispielsweise Polypropylen (PP), im Autoklaven mit leicht verdampfendem Kohlenwasserstoff eingebracht und vermischt. Beim anschließenden Entleeren des Autoklaven schäumt das Granulat auf und bildet Perlen. Bei dem geschäumten Material ist man hier farbentechnisch sehr eingeschränkt, wobei meist nur weiß und grau möglich sind. Alternativ kann das Material im Extruder hergestellt werden. Dabei wird insbesondere in einem ersten Schritt der Extruder mit einer Schmelze und mit Treibmittel beladen und extrudiert. Anschließend wird das extrudierte Material nach der Extrusion mit Messern geschnitten und es bilden sich Perlen. Farben können dabei insbesondere direkt beigemischt werden. Es bestehen in diesem Verfahren vorzugsweise mehr Möglichkeiten für eine Einfärbung. Der Vorteil dieses Verfahrens ist insbesondere höhere Temperaturbeständigkeit des expandierten Granulats, wobei später höhere Verarbeitungsdrücke, insbesondere Dampfdrücke, bei der Formung notwendig sind.

Das expandierte Granulat für das geschäumte Material ist insbesondere schwimmfähig und weist eine Dichte von 0,01 g/cm³ bis 0,5 g/cm³, vorzugsweise von 0,02 g/cm³ bis 0,3 g/cm³, auf. Aufgrund der niedrigen Dichte des geschäumten Materials bleibt auch das fertige Hygienemittel, welches aus weiteren geschäumten und/oder nicht geschäumten Materialien bzw. Komponenten bestehen kann, vorzugsweise schwimmfähig. Vorzugsweise beträgt die mittlere Dichte des fertigen Hygienemittels unter 0,9 g/cm³, vorzugsweise unter 0,7 g/cm³ besonders bevorzugt unter 0,5 g/cm³. Neben der Schwimmfähigkeit erlaubt dies auch eine sehr einfache und angenehme Handhabung. Benchmark Polypropylen weist im Vergleich hierzu eine Dichte von rund 0,9 g/cm³ bis 1g/cm³ auf.

Ferner weist das expandierte Granulat für das geschäumte Material insbesondere eine gute Wärmedämmung auf. Das Material fühlt sich aufgrund der niedrigen Wärmeleitfähigkeit insbesondere warm an und bietet dadurch eine sehr angenehme Haptik, insbesondere im Vergleich mit einer gespritzten (d.h. mittels Spritzgussverfahren verarbeiteten) Kunststoffkomponente. Die Wärmeleitfähigkeit des expandierten Granulats für das geschäumte Material beträgt insbesondere von 10 W/(m*K) bis 70 W/(m*K), vorzugsweise von 25 W/(m*K) bis 45 W/(m*K).

Das geschäumte Material verfügt über eine angenehme weiche Haptik. Vorzugsweise verfügen die Oberflächen, welche mit dem geschäumten Material ausgeformt werden, über eine Shore Härte A von unter 90, vorzugsweise unter 70 und besonders bevorzugt unter 50. Falls am Hygienemittel Oberflächen aus Weichmaterial ausgeformt werden, wird vorzugsweise das Weichmaterial mit einer niedrigeren Shore Härte als das geschäumte Material gewählt. Die Dichte des geschäumten Materials wird entsprechend eingestellt, um die bevorzugte Shore Härte zu erreichen.

Des Weiteren weist das expandierte Granulat für das geschäumte Material insbesondere eine Dämpfungsfunktion auf. Es kann insbesondere eine akustische Geräuschreduktion erreicht werden, insbesondere um 10% bis 50%, vorzugsweise um 15% bis 30%.

Eine Korngröße des expandierten Granulats für das geschäumte Material beträgt insbesondere von 0,5 mm bis 5 mm, vorzugsweise von 1 mm bis 3 mm. Ferner weist das expandierte Granulat für das geschäumte Material insbesondere einen Schwund nach einer Verarbeitung von 0,5% bis 5%, vorzugsweise von 1% bis 2%, auf. Des Weiteren weist das expandierte Granulat für das geschäumte Material insbesondere eine Wärmeformstabilität von 100°C bis 180°C, vorzugsweise von 110°C bis 150°C, auf. Ein Recycling-Anteil in dem Granulat kann insbesondere bis zu 90% betragen. Vorzugsweise weist das expandierte Granulat einheitliche Partikelgrößen auf, damit die Oberfläche des geschäumten Materials glatt ist.

Ferner kann das geschäumte Material eine Färbung aufweisen. Insbesondere kann eine Farbe in das geschäumte Material integriert werden. Es kann insbesondere beispielsweise eine durchgehende Färbung in dem geschäumten Material erzeugt werden. Alternativ oder zusätzlich können auch transluzente Schäume eingesetzt werden. Hierdurch können insbesondere optische Effekte am geschäumten Teil erreicht werden.

Die akustische Dämpfungsfunktion kann insbesondere bei Gehäusen von elektrischen Zahnbürsten vorteilhaft genutzt werden. Das Gehäuse der elektrischen Zahnbürste kann partiell oder komplett mit geschäumtem Material ausgestattet sein. Die entsprechenden Partien dämpfen entsprechend die durch Antriebseinheit und Getriebe im Betrieb entstehenden Geräusche.

Vorteilhaft ist denkbar, dass eine verwendete Hartkomponente, eine verwendete Weichkomponente und/oder ein verwendetes geschäumtes Material unterschiedliche Farben aufweisen, sodass Oberflächenstrukturen, Beschriftungen, Motive und dergleichen mittels geeigneter Gestaltung der Hartkomponente, der Weichkomponente und/oder dem geschäumten Material realisierbar sind. Insbesondere können die Oberflächen der verschiedenen Komponenten bzw. Materialien über unterschiedliche Oberflächenrauheiten verfügen.

Ferner wird vorgeschlagen, dass die zumindest eine Anwendungseinheit einen Bürstenkopf, insbesondere Zahnbürstenkopf, aufweist. Die Anwendungseinheit weist vorteilhaft zumindest eine Reinigungseinheit, insbesondere einen Zahnbürstenkopf, mit Borsten auf. Die Reinigungseinheit weist zudem vorteilhaft zumindest einen Borstenträger, beispielsweise einen Bürstenkopfgrundkörper, auf. Zumindest einige oder alle der Borsten sind vorteilhaft konventionelle, extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT, PET) gefertigt, wobei beliebige andere Materialien denkbar sind und auch nachhaltige Materialien möglich sind. Ferner ist denkbar, dass zumindest einige der Borsten eine Zuspitzung und/oder einen veränderlichen Querschnitt aufweisen. Vorzugsweise sind die Borsten aus einem einzelnen, insbesondere auch gemischten, Komponenten bzw. Materialien ausgebildet. Es sind aber auch Borsten mit mehreren nicht gemischten Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein. Im Gegensatz zu gespritzten Borsten oder gummielastischen Massage- und Reinigungselementen, welche mittels Spritzgusses hergestellt sind, werden konventionelle Borsten extrudiert, geschnitten und am Zahnbürstengriff mittels angepasstem Verfahren eingesetzt, wie beispielsweise mittels des Ankerstanz-Verfahrens, des AFT-Verfahrens und/oder des IMT-Verfahrens, mittels welchen auch bestimmt wird, wann die Borsten weiter bearbeitet werden. Beispielsweise wann profiliert und/oder gerundet wird.

Insbesondere kommen zylindrische oder zugespitzte Borsten mit rundem Querschnitt infrage, wobei beliebige andere Querschnitte wie beispielsweise polygonale, dreieckige, rechteckige, quadratische, elliptische, sternförmige, trapezförmige, parallelogrammförmige, rhombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig, aber auch unregelmäßig angeordnet sein. Insbesondere können sich in Gruppen und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, einer Geometrie, einer Anspitzung und dergleichen, insbesondere abwechselnd, unterscheiden. Vorzugsweise weisen die Borsten für den Einsatz im Mundhygienebereich einen Durchmesser, insbesondere senkrecht zu deren Längsachse, von wenigstens 0,075 mm und/oder von höchstens 0,25 mm auf. Vorteilhaft weisen die Borsten eine Querschnittsfläche, insbesondere senkrecht zu deren Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden, insbesondere Borsten mit einem Durchmesser, insbesondere senkrecht zu deren Längsachse, von wenigstens 0,025 mm und/oder von höchstens 0,2 mm und/oder mit einer Querschnittsfläche, insbesondere senkrecht zu deren Längsachse, von wenigstens 0,001 mm² und/oder von höchstens 0,15 mm². Im Fall von zugespitzten Borsten ist insbesondere Polyester (PBT, PET) als Material geeignet, wobei auch nachhaltige Materialien möglich sind, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch auch gewellte und/oder gedrillte und/oder wendelförmige und/oder gedrehte Borsten denkbar sowie insbesondere auch Kombinationen unterschiedlicher Borsten. Ferner sind Borsten mit einer glatten Oberfläche denkbar, ebenso wie Borsten mit texturierter Oberfläche.

Ferner sind die Borsten, insbesondere als Borstenbündel, vorzugsweise mittels zumindest eines Ankerstanz-Verfahrens, eines Anchor-Free-Tufting-Verfahrens (AFT), eines In-Mold-Tufting-Verfahrens (IMT), eines PTt-Verfahrens oder dergleichen verarbeitet, insbesondere an dem Borstenträger befestigt. Vorzugsweise weist der Borstenträger eine Mehrzahl von, insbesondere gebohrten und/oder bei einem Spritzguss geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar.

Alternativ sind, wie erwähnt, auch ankerlose Verfahren denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist hierbei denkbar, dass die Borstenbündel zunächst vereinzelt, verschmolzen und/oder deren nicht nutzungsseitigen Borstenenden insbesondere anschließend zu deren Befestigung umspritzt werden. Hierbei können vorteilhaft Borstenbündel zusammengeführt werden. Möglich ist hierbei eine Herstellung mittels des In-Mold-Tufting-Verfahrens, wobei vorteilhaft bei dem Umspritzen der Borstenenden ein Grundkörper, beispielsweise des Bürstenkopfs und/oder der Griffeinheit und/oder der Befestigungseinheit, geformt wird. Ebenso ist denkbar, dass, insbesondere im Rahmen einer Integrated-Anchorless-Production, Borsten zunächst mit Plättchen oder dergleichen umspritzt werden und diese Plättchen anschließend wiederum umspritzt werden, beispielsweise um den Bürstenkopf und/oder die Griffeinheit auszubilden.

Ferner ist denkbar, dass die Anwendungseinheit aus einem Grundkörper und einem Borstenplättchen, welches mit Borsten und/oder alternativen Reinigungselementen besetzt ist, zusammengesetzt ist. Hierzu werden zunächst mittels Spritzgießens Borstenplättchen mit Durchgangslöchern gefertigt, durch welche anschließend Borsten geführt werden. Vorzugsweise werden die Borsten anschließend auf einer Rückseite verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verschweißt und/oder verklebt werden, vorzugsweise mittels eines Ultraschallschweißens. Hierzu weist der Grundkörper, insbesondere der Bürstenkopf, insbesondere eine Ausnehmung auf, in welche das Borstenplättchen eingesetzt werden kann. Als bekanntes Herstellungsverfahren ist in diesem Zusammenhang das Anchor-Free-Tufting-Verfahren zu nennen, das insbesondere ein Zusammenführen von Borstenbündeln ermöglicht. Als Unterseite des Borstenplättchens wird insbesondere eine Seite bezeichnet, welche in eine Ausnehmung des Grundkörpers gelegt wird und in Richtung Rückseite des Hygienemittels zeigt. Entsprechend zeigt die Oberseite des Borstenplättchens in Richtung der Oberseite des Hygienemittels.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs. Hierbei kommt beispielsweise ein AMR-Verfahren, welches insbesondere kein Zusammenführen von Borstenbündeln ermöglicht, oder ein AMR+-Verfahren, welches insbesondere ein Zusammenführen von Borsten ermöglicht, infrage.

Zudem ist denkbar, zunächst einen Bürstenkopf mit Sacklöchern, beispielsweise mittels Spritzgießens zu formen und/oder mittels eines Bohrens der Sacklöcher zu fertigen. Borsten werden in diesem Fall insbesondere zu Bündeln zusammengelegt und an einem Ende verschmolzen und/oder anderweitig verbunden. Der Bürstenkopf wird anschließend, insbesondere auf eine Glastemperatur seines Materials, erwärmt. Sodann können vorteilhaft Borstenbündel in die Sacklöcher eingeführt und mittels eines Andrückens an dem Bürstenkopf verankert werden. Insbesondere verformen sich hierbei die erwärmten Sacklöcher, sodass die Borstenbündel in denselben verankert werden. Hierbei bietet sich beispielsweise ein bekanntes PTt-Verfahren an.

Alternativ oder zusätzlich zu gestanzten und/oder angeschweißten und/oder angeklebten Borsten sind auch angespritzte Borsten denkbar. Diese können insbesondere während eines Mehrkomponentenspritzgießens gemeinsam mit der Anwendungseinheit, der Griffeinheit und/oder der Befestigungseinheit gefertigt sein, oder nachträglich an einen Grundkörper der Anwendungseinheit angespritzt sein. Die gespritzten Borsten sind nicht mit den konventionell extrudierten Borsten zu verwechseln, obwohl diese über ähnliche Dimensionen verfügen. Aufgrund der nötigen Entformung im Spritzgusswerkzeug verfügen die gespritzten Borsten über eine im Wesentlichen konische Grundform.

Ein weiteres mögliches Verfahren zur Beborstung des Bürstenkopfs stellt das Eindrehen dar. Hierbei wird beispielsweise Filament von einer Rolle zugeführt, wobei insbesondere mehrere Filamentstränge auf einer Rolle aufgewickelt sind. Für die Maschinenbeschickung sind jeweils mehrere Rollen vorgespannt, denn jedes Filament in der Bürste entspricht einem Filamentstrang. Die Filamente werden in der Breite korrekt ausgebreitet, damit sie die Breite haben, in welcher sie in die Bürste eingeführt werden. Die Filamente werden so vorgezogen, dass sie anschließend für den nächsten Schritt freistehen, d.h. dass ein Draht darüber geführt werden kann. Anschließend wird ein Draht ab einer Rolle auf die Maschine zugeführt, d.h. abgewickelt und in den Prozess eingeführt. Der Draht wird auf eine Länge geschnitten, welche grösser ist als die abgewickelte Länge der eingedrehten Bürste, das endgültige Ablängen erfolgt nach dem Eindrehen. Der Draht wird zu einem U gebogen, damit die offene Seite anschließend über die Filamente geschoben werden kann, um die Borsten einzufädeln. Der Draht wird am Boden des U's gehalten. Darauffolgend wird das offene Drahtende geklemmt, damit die Filamente zwischen den Drahtstücken halten. Die Filamente werden auf eine Länge geschnitten, welche grösser ist als die Endlänge in der Bürste, damit die Bürste anschließend, wenn die Filamente eingedreht sind, korrekt geschnitten werden kann. Der Draht wird gedreht, sodass die Filamente zwischen dem Draht eingeklemmt und damit fixiert werden. Nachdem die Filamente im Draht fixiert sind, werden sie auf die korrekte Länge geschnitten und profiliert. Nachdem der Bürstenteil fertiggestellt ist, wird der überschüssige Draht abgeschnitten.

Vorzugsweise gehen Materialien gespritzter Borsten bei einem Spritzgussprozess, insbesondere einem Zwei- und/oder Mehrkomponentenspritzgießen, keinen Stoffschluss und/oder Materialschluss mit anderen Weichkomponenten und/oder Hartkomponenten des Hygienemittels ein. Bevorzugt werden gespritzte Borsten vielmehr mittels eines Formschlusses, beispielsweise mittels zumindest eines Hinterschnitts und/oder zumindest eines Durchbruchs und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Es ist jedoch auch eine Verbindung mittels zumindest eines Stoffschluss und/oder Materialschlusses denkbar.

Für sämtliche erwähnte mögliche Spritzgussprozesse ist grundsätzlich ein Ein-, Zwei- und/oder Mehrkomponentenspritzguss denkbar. Verwendete Materialien, insbesondere unterschiedlicher Weichkomponenten und/oder Hartkomponenten, können hierbei, wie erwähnt, stoffschlüssig und/oder formschlüssig verbunden werden und/oder sein. Auch eine Ausbildung von gelenkigen bzw. beweglichen oder flexiblen Verbindungen mittels geeigneter Spritzgussschritte ist denkbar. Es kommen beim Spritzgießen grundsätzlich beispielsweise Heißkanalverfahren, Kaltkanalverfahren und/oder Co-Injektionsverfahren infrage.

Alternativ oder zusätzlich zu einem mit Borsten besetzten Bürstenkopf kann die Anwendungseinheit auch zumindest einen Zungenreiniger und/oder zumindest ein alternatives Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein. Wie die gespritzten Borsten werden die Reinigungs- und/oder Massageelemente im Spritzgussverfahren hergestellt. Sie unterscheiden sich jedoch von den gespritzten Borsten in der deutlich tieferen Shore Härte der verwendeten Komponente bzw. des Materials. Des Weiteren sind Reinigungs- und/oder Massageelemente deutlich voluminöser als gespritzte Borsten.

Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien denkbar, beispielsweise thermoplastische Polyester-Elastomere (TPE-E), thermoplastische Polyamid-Elastomere (TPE-A), Polyethylen (PE), beispielsweise in den Formen low density Polyethylen (LDPE) oder linear low density Polyethylen (LLDPE), oder dergleichen. Materialien für gespritzte Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-Härte eines Materials gespritzter Borsten vorteilhaft höher als eine Shore-Härte übriger verwendeter Weichkomponenten, beispielsweise für Griffelemente, Massageelemente, weitere Reinigungselemente oder dergleichen. Die für die Herstellung von gespritzten Borsten eingesetzten Materialien können nachhaltige Materialien sein.

Grundsätzlich ist ferner eine Verwendung wasserlöslicher Polymere denkbar, beispielsweise für Hartkomponenten, Weichkomponenten, gespritzte Borsten oder andere Elemente des Hygienemittels.

Ebenso können für die Hartkomponente, die Weichkomponente und/oder das Material für gespritzte Borsten Biokunststoffe herangezogen werden, welche insbesondere aus nachwachsenden Rohstoffen gewonnen sein können, biologisch abbaubar, insbesondere kompostierbar, sein können und/oder aus einem recycelten und/oder recycelbaren Material bestehen können. Vorzugsweise ist das Material insbesondere aus einem Kunststoff gebildet. Vorzugsweise ist das biologisch abbaubare, insbesondere kompostierbare, und/oder recycelte und/oder recycelbare Material von einem Biokunststoff, insbesondere aus einem Kunststoff auf Basis nachwachsender Rohstoffe und/oder aus einem biologisch abbaubaren Kunststoff, gebildet. Das Material kann daher insbesondere fossil-basiert und bioabbaubar sein, wie beispielsweise PVOH, PCL, PBAT, PET oder PBS, auf nachwachsenden Rohstoffen basieren und bioabbaubar sein, wie beispielsweise PLA, PHA, Cellophane oder Stärke-Blends, oder auf nachwachsenden Rohstoffen basieren und nicht bioabbaubar sind, wie beispielsweise Ca, Bio-PE, Bio-PP, Bio-PA, Bio-PET. Es sind verschiedene, einem Fachmann als sinnvoll erscheinende Biokunststoffe denkbar, wie beispielsweise stärkebasierte Biokunststoffe, cellulosebasierte Biokunststoffe, Polyhydroxy-Alkanoate, wie insbesondere Polyhydroxybuttersäure (PHB), Polymilchsäure (PLA), aliphatische und/oder aromatische Copolyester, oder weitere Biokunststoffe wie beispielsweise Lignin-basierte Biokunststoffe. Die Hartkomponente und/oder die Weichkomponente und/oder das Material für gespritzte Borsten besteht insbesondere aus einem Biokunststoff, welcher insbesondere aus nachwachsenden Rohstoffen gewonnen sein kann. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze / der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können.

Unter einem "Volumenkörper" soll in diesem Zusammenhang insbesondere ein das Hygienemittel teilweise ausbildender Körper verstanden werden, welcher insbesondere aus einem Vollmaterial besteht. Vorzugsweise bildet der Volumenkörper eine voluminöse Struktur des Hygienemittels aus. Vorzugsweise besteht der Volumenkörper zu einem Großteil, insbesondere vollständig, aus einem geschäumten Material. Unter einem "Grundkörper" soll in diesem Zusammenhang insbesondere ein das Hygienemittel teilweise ausbildender Körper verstanden werden, welcher insbesondere aus einem Vollmaterial besteht. Vorzugsweise bildet der Grundkörper eine Stützstruktur bzw. das Rückgrat des Hygienemittels aus. Vorzugsweise besteht der Volumenkörper zu einem Großteil, insbesondere vollständig, aus einer Hartkomponente. Darunter, dass "der zumindest eine Volumenkörper an den zumindest einen Grundkörper angeformt ist" soll insbesondere verstanden werden, dass zumindest ein Teil einer Formgebung des Volumenkörpers direkt an dem Grundkörper erfolgt. Insbesondere wird der Volumenkörper direkt, insbesondere bei einer Produktion, an dem, insbesondere um den, Grundkörper hergestellt. Alternativ oder zusätzlich kann der Volumenkörper zu einer Verbindung mit dem Grundkörper nachträglich an dem Grundkörper zu einer Ausbildung eines Formschlusses verformt, insbesondere verdichtet, werden. Vorzugsweise bildet der Volumenkörper direkt bei einer Produktion einen Form- und/oder Stoffschluss mit dem Grundkörper aus. Insbesondere ist der Volumenkörper zerstörungsfrei untrennbar mit dem Grundkörper verbunden.

Ferner wird vorgeschlagen, dass der zumindest eine Volumenkörper den zumindest einen Grundkörper zumindest teilweise umschließt. Vorzugsweise umschließt der zumindest eine Volumenkörper den zumindest einen Grundkörper zumindest teilweise in einem Bereich der Griffeinheit. Unter "zumindest teilweise umschließen" soll in diesem Zusammenhang insbesondere verstanden werden, dass der Grundkörper in zumindest einer Ebene, ausgehend von einem geometrischen Mittelpunkt des Grundkörpers in der Ebene, in einem Winkelbereich von zumindest 180°, vorzugsweise zumindest 270° und besonders bevorzugt zumindest annähernd 360° von dem Volumenkörper umgeben ist. Vorzugsweise umschließt der Volumenkörper den Grundkörper in zumindest einer Ebene vollständig. Dadurch kann insbesondere eine vorteilhaft hohe Ergonomie des Hygienemittels bereitgestellt werden. Es kann insbesondere ein Greifen des Volumenkörpers ermöglicht werden. Ferner kann insbesondere eine vorteilhafte Ausformung des Volumenkörpers und damit des Hygienemittels erreicht werden. Ferner kann dadurch insbesondere ein Gewicht des Hygienemittels gering gehalten werden, insbesondere ohne eine Ergonomie des Hygienemittels, insbesondere eine Greifbarkeit, zu beeinträchtigen. Des Weiteren wird damit eine gute Verbindung zwischen Volumenkörper und Grundkörper erreicht, welche der Langlebigkeit des Hygienemittels zugutekommt.

Es sind verschiedene, einem Fachmann als sinnvoll erscheinende Anordnungen des geschäumten Volumenkörpers denkbar. Der Volumenkörper kann bezogen auf das gesamte Hygienemittel in einzelnen Teilbereichen oder einer Kombination von Teilbereichen wie dem Griffbereich, dem Halsbereich und/oder dem Kopfbereich angeordnet sein. Beispielsweise im Griffbereich und im Halsbereich, im Halsbereich und im Kopfbereich, im Griffbereich und im Kopfbereich. Alternativ kann der Volumenkörper auch in allen Teilbereichen, also dem Griffbereich, dem Halsbereich und dem Kopfbereich des Hygienemittels, angeordnet sein. Hierdurch ergibt sich insbesondere ein komplett geschäumtes Produkt.

Eine Oberfläche des geschäumten Volumenkörpers ist insbesondere abhängig von einem Herstellungsprozess. Ferner kann die Oberfläche mit dem Prozess verändert werden. Eine längere und/oder heißere Bedampfung bringt glattere und/oder homogenere Oberflächen, und die Oberflächen des Werkzeugs werden besser abgenommen. Es bildet sich insbesondere eine ebene Oberfläche ohne spezielle Strukturen aus. Eine zu feine Struktur des Werkzeugs, insbesondere durch erodierte Oberflächen, kann für grobe Körnungen aufgrund der Korngröße der Schäumung gegebenenfalls nicht effektiv in Erscheinung treten. Ferner sind auch geätzte oder polierte Oberflächen im Werkzeug denkbar. Alternativ kann auch eine kombinierte Oberfläche in dem Werkzeug geschaffen werden, wie beispielsweise erodierte und geätzte Oberflächen. So können beispielsweise polierte Kanten und raue Flächen vorgesehen sein. Ferner können auf einer Oberfläche des Volumenkörpers auch Strukturen vorgesehen werden. Es sind insbesondere von der Oberfläche vorstehende Formen bzw. Strukturen von 0,1 mm bis 2 mm, vorzugsweise von 0,5 mm bis 1,5 mm, und/oder von der Oberfläche versenkte Formen von 0,1 mm bis 2 mm, vorzugsweise von 0,5 mm bis 1,5 mm, denkbar. Die Strukturen bzw. Formen weisen insbesondere eine grundsätzlich geschlossene Kontur auf. Es sind verschiedene, einem Fachmann als sinnvoll erscheinende Querschnittsformen denkbar, wie beispielsweise kreisförmig, oval, kreissegmentförmig, n-eckig, quadratisch, rechteckig, rautenförmig, rhombusförmig und/oder parallelogrammförmig. Ferner können auf der Oberfläche des Volumenkörpers Muster aus Formen geschaffen werden. Dabei sind insbesondere eine einmalige Anordnung oder eine repetitiv mehrmalige Anordnung der Muster denkbar. Es ist insbesondere eine partielle Anordnung von Strukturen auf dem Volumenkörper denkbar. Die Struktur kann dabei insbesondere an einer Stelle oder an mehreren Stellen vorgesehen sein. Ferner kann die Struktur auf einer Seite, auf zwei Seiten oder rund um den Körper vorgesehen sein. Eine Oberfläche der Spritzguss-Teile, insbesondere des Grundkörpers, ist insbesondere gemäß aktuellem Standard möglich.

Das Hygienemittel weist insbesondere einen voluminösen Griff auf. Vorzugsweise besteht die Griffeinheit zumindest teilweise aus dem Volumenkörper. Hierdurch kann insbesondere ein gleiches oder geringeres Gewicht bei gleicher Größe erreicht werden. Ferner besteht eine geringere Einfallstellen-Problematik als bei gespritzten Teilen. Der Volumenkörper weist insbesondere ein Volumen von 10 cm³ bis 70 cm³, vorzugsweise von 15 cm³ bis 50 cm³, auf. Vorzugsweise bildet der geschäumte Volumenkörper 60% bis 90%, vorzugsweise 70% bis 85%, eines Gesamtvolumens aus. Durch den geschäumten Volumenkörper ergibt sich insbesondere eine Gewichtsersparnis. Vorzugsweise kann bei einem rein geschäumten Zahnbürstengriff von 70% bis 95%, vorzugsweise von 80% bis 90%, des Gewichts gegenüber einer rein spritzgegossenen Zahnbürste mit demselben Volumen eingespart werden. Bei einem kombinierten Zahnbürstengriff kann insbesondere von 50% bis 75%, vorzugsweise von 50% bis 65%, des Gewichts gegenüber einer rein spritzgegossenen Zahnbürste mit demselben Volumen eingespart werden. Bevorzugt weist das Hygienemittel ein Gewicht von 3.5 g bis 12 g, vorzugsweise von 6 g bis 10 g, auf. Ein Anteil des geschäumten Teils am Gesamtgewicht beträgt dabei insbesondere von 5 % bis 50 %, vorzugsweise von 15 % bis 25 %. Ein maximaler Umfang (um die Längsachse) der Griffeinheit bei einem rein geschäumten Griff beträgt insbesondere von 5 cm bis 12 cm, vorzugsweise von 7 cm bis 10 cm. Die Lage des Schwerpunkts des Hygienemittels, gemessen vom hinteren Ende, liegt insbesondere bei einem Wert von 100 mm bis 170 mm, vorzugsweise von 120 mm bis 150 mm. Prozentual liegt der Schwerpunkt des Hygienemittels, gemessen vom hinteren Ende, insbesondere bei einem Wert von 50 % bis 80 % vorzugsweise von 60 % bis 75 % der Gesamtlänge. Eine Materialstärke des Grundkörpers beträgt insbesondere von 3 mm bis 10 mm, vorzugsweise 3,5 mm bis 7 mm, damit zusammen mit dem geschäumten Teil eine ausreichende Stabilität erreicht wird. Eine Schichtdicke des geschäumten Volumenkörpers beträgt insbesondere von 3 mm bis 300 mm, vorzugsweise von 3 mm bis 20 mm. Die minimale Schichtdicke des geschäumten Volumenkörpers hängt dabei insbesondere vom dafür eingesetzten Granulat ab. Große Wandstärken sind dagegen nicht kritisch.

Der gespritzte Grundkörper kann verschiedene, einem Fachmann als sinnvoll erscheinende Querschnittsformen aufweisen, wie beispielsweise H-förmig, rechteckig, U-förmig, kreuzförmig und/oder sternförmig, jeweils mit eckigen oder gerundeten Kanten. Der Querschnitt bildet sich dabei insbesondere vorzugsweise in Längsrichtung aus. Vorzugsweise weist der Grundkörper symmetrische Formen in Bezug auf die Längsachse auf. Die Form des Grundkörpers kann insbesondere mit Konturen zum Formschluss, insbesondere Formschlusselementen, wie z.B. einer vorstehenden Disc, Fortsatz, Vertiefung, Durchbruch oder dergleichen, kombiniert werden. Ferner können verfahrensspezifische Elemente für Funktionen am Produkt genutzt werden. So ist beispielsweise denkbar, dass Haltestrukturen durch Dampfaustritte, beispielsweise beim Anguss, oder Dampfaustritt ausgebildet sind. So können Dampfaustritte beispielsweise Oberflächenstrukturen bilden. Die Oberflächenstrukturen können beispielsweise gezielt als Daumengriff angeordnet werden. Dabei wäre insbesondere denkbar, dass Dampfaustrittsventile modifiziert werden, dass die Formen auch die nötige Funktion bieten können.

Vorzugsweise ist der Grundkörper so geformt, dass sich der geschäumte Volumenkörper, beispielsweise zu einer Entsorgung, davon trennen lässt. Eine Trennung kann beispielsweise durch Schneiden oder Reißen/Abziehen erfolgen.

Des Weiteren wird vorgeschlagen, dass der zumindest eine Grundkörper zumindest ein Formschlusselement aufweist, welches mit dem zumindest einen Volumenkörper einen Formschluss ausbildet. Unter einem "Formschlusselement" soll in diesem Zusammenhang insbesondere ein Element des Grundkörpers verstanden werden, welches dazu vorgesehen ist, in den Volumenkörper zu ragen oder eine Ausnehmung zu einem Eindringen des Volumenkörpers auszubilden. Vorzugsweise bildet das Formschlusselement einen Fortsatz aus und/oder eine Ausnehmung aus, welche/welches sich senkrecht zu einer Haupterstreckungsrichtung des Hygienemittels erstreckt und zu einer formschlüssigen Fixierung des Volumenkörpers parallel zu einer Haupterstreckungsrichtung des Hygienemittels vorgesehen ist. Unter "formschlüssig" soll insbesondere verstanden werden, dass aneinander liegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Das Formschlusselement kann insbesondere als ein Fortsatz, wie beispielsweise ein Stift, ein Steg und/oder eine Disk, als eine Verjüngung und/oder als ein Durchbruch ausgebildet sein. Dadurch kann insbesondere eine vorteilhaft stabile Verbindung zwischen dem Grundkörper und dem Volumenkörper realisiert werden. Es kann insbesondere auf einen Stoffschluss verzichtet werden. Hierdurch kann insbesondere eine getrennte Entsorgung ermöglicht werden. Ferner kann dadurch insbesondere ein vorteilhaft stabiles Hygienemittel bereitgestellt werden. Insbesondere wird dadurch vermieden, dass durch die Kräfte bei der vorgesehenen Nutzung (z.B. beim Zähneputzen und dem dadurch entstehenden Druck auf den Bürstenkopf) des Hygienemittels ein Spiel zwischen Grundkörper und dem Volumenkörper entsteht oder dieses Spiel zumindest kleiner gehalten werden kann als wenn man keine Formschlusselemente verwenden würde. Formschlusselemente machen natürlich insbesondere Sinn, wenn zwischen Grundkörper und dem Volumenkörper kein Stoffschluss und/oder Materialschluss vorgesehen ist.

Es wird ferner vorgeschlagen, dass die Griffeinheit zumindest ein Käfigelement aufweist, welches den zumindest einen Volumenkörper zumindest teilweise umgreift. Vorzugsweise bildet der zumindest eine Volumenkörper zumindest teilweise einen Formschluss mit dem Käfigelement aus. Insbesondere ist der Volumenkörper in dem Käfigelement hergestellt. Besonders bevorzugt schneidet das Käfigelement zumindest teilweise in den Volumenkörper ein. Das Käfigelement kann als Verankerungsstruktur auch komplett im Volumenkörper liegen und nicht aus diesem hervortreten. Aus dem Volumenkörper tritt in diesem Fall zumindest die mit dem Käfigelement einstückig geformte Anwendungseinheit aus. Unter einem "Käfigelement" soll in diesem Zusammenhang insbesondere ein den Volumenkörper zumindest teilweise umschließendes Element verstanden werden. Vorzugsweise erstreckt sich das Käfigelement über einen wesentlichen Teil einer Haupterstreckung und/oder Quererstreckung des Volumenkörpers, wobei das Käfigelement insbesondere weniger als 50%, vorzugsweise weniger als 30% und besonders bevorzugt weniger als 15% einer Außenfläche des Volumenkörpers überdeckt. Bevorzugt bildet das Käfigelement eine Gitterstruktur aus, welche sich zumindest teilweise um den Volumenkörper erstreckt. Unter einer "Quererstreckung" soll in diesem Zusammenhang insbesondere eine Erstreckung eines Bauteils verstanden werden, welche sich parallel zu einer Breite des Hygienemittels und senkrecht zu der Haupterstreckungsrichtung des Hygienemittels erstreckt. Ferner soll unter einer "Haupterstreckung" insbesondere eine Erstreckung eines Bauteils entlang der Haupterstreckungsrichtung verstanden werden. Des Weiteren soll in diesem Zusammenhang unter einem "wesentlichen Teil" insbesondere zumindest 30%, vorzugsweise zumindest 50% und besonders bevorzugt zumindest 70% eines Ganzen verstanden werden. Dadurch kann insbesondere eine vorteilhaft stabile Anordnung des Volumenkörpers realisiert werden. Ferner kann der Volumenkörper insbesondere vorteilhaft geschützt werden. Es kann insbesondere eine Formstabilität des Volumenkörpers gewährleistet werden. Ferner kann dadurch insbesondere ein vorteilhaft stabiles Hygienemittel bereitgestellt werden.

Es wird weiter vorgeschlagen, dass das zumindest eine Käfigelement direkt fest mit dem zumindest einen Grundkörper verbunden ist. Vorzugsweise ist das Käfigelement insbesondere aus dem gleichen Material wie der Grundkörper hergestellt. Bevorzugt ist das Käfigelement einstückig mit dem Grundkörper ausgebildet. Der Grundkörper und das Käfigelement sind insbesondere aus einem Guss hergestellt. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine vorteilhaft stabile Verbindung zwischen dem Grundkörper und dem Volumenkörper realisiert werden. Ferner kann insbesondere eine Anzahl an Bauteilen gering gehalten werden. Des Weiteren kann dadurch insbesondere ein vorteilhaft stabiles Hygienemittel bereitgestellt werden.

Zudem wird vorgeschlagen, dass das Hygienemittel zumindest einen, den zumindest einen Volumenkörper zumindest teilweise umschließenden, Hüllkörper aufweist, welcher kraft- und/oder stoffschlüssig mit dem zumindest einen Volumenkörper verbunden ist. Vorzugsweise ist der Hüllkörper stoffschlüssig mit dem Volumenkörper verbunden. Bevorzugt geht der Hüllkörper bei einer Herstellung einen Stoffschluss mit dem Volumenkörper und/oder dem Grundkörper ein. Unter einem "Hüllkörper" soll in diesem Zusammenhang insbesondere ein das Hygienemittel teilweise ausbildender Körper verstanden werden, welcher insbesondere aus einem Vollmaterial besteht. Vorzugsweise bildet der Hüllkörper zumindest teilweise eine Außenhülle des Hygienemittels aus. Bevorzugt umschließt der Hüllkörper zumindest teilweise den Volumenkörper und/oder den Grundkörper. Insbesondere bildet der Hüllkörper zumindest teilweise eine Außenfläche des Hygienemittels aus. Vorzugsweise besteht der Hüllkörper zu einem Großteil, insbesondere vollständig, aus einem Weichmaterial. Unter "kraftschlüssig verbunden" soll dabei insbesondere eine lösbare Verbindung verstanden werden, wobei eine Haltekraft zwischen zwei Bauteilen vorzugsweise durch eine Reibkraft zwischen den Bauteilen übertragen wird. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Dadurch kann insbesondere eine vorteilhafte Außenfläche des Hygienemittels bereitgestellt werden. Ferner kann insbesondere trotz des Volumenkörpers eine vorteilhaft gleichmäßige Oberfläche des Hygienemittels geschaffen werden.

Ferner wird vorgeschlagen, dass der zumindest eine Hüllkörper zumindest teilweise aus einer Weichkomponente besteht. Vorzugsweise besteht der Hüllkörper vollständig aus einer Weichkomponente. Dadurch kann insbesondere eine vorteilhafte Außenfläche des Hygienemittels bereitgestellt werden. Ferner kann insbesondere trotz des Volumenkörpers eine vorteilhaft gleichmäßige Oberfläche des Hygienemittels geschaffen werden. Es kann insbesondere eine vorteilhafte Rutschfestigkeit des Hygienemittels geschaffen werden. Hierdurch kann eine vorteilhafte Greifbarkeit bereitgestellt werden. Es kann eine hohe Ergonomie bereitgestellt werden.

Des Weiteren wird vorgeschlagen, dass der zumindest eine Grundkörper zumindest teilweise aus einer Hartkomponente besteht. Vorzugsweise besteht der Grundkörper vollständig aus einer Hartkomponente. Dadurch kann insbesondere eine vorteilhaft hohe Stabilität des Hygienemittels bereitgestellt werden. Es kann eine hohe Ergonomie und Stabilität bereitgestellt werden.

Es wird ferner vorgeschlagen, dass das Hygienemittel zumindest einen, den zumindest einen Volumenkörper zumindest teilweise durchdringenden Hüllkörper aufweist, welcher kraft- und/oder stoffschlüssig mit dem zumindest einen Volumenkörper und/oder Grundkörper verbunden ist. Der Hüllkörper kann mit dem Volumenkörper keinen Stoffschluss eingehen, mit dem Grundkörper aber sehr wohl. Vorzugsweise weist der Volumenkörper zumindest eine Aussparung und/oder zumindest eine Lücke auf, in welcher der Hüllkörper angeordnet ist. Besonders bevorzugt kann sich der Hüllkörper bis zu dem Grundkörper durch den Volumenkörper erstrecken. Unter einem "durchdringenden Hüllkörper" soll in diesem Zusammenhang insbesondere ein Hüllkörper verstanden werden, welcher in zumindest einer Ebene in zumindest zwei entgegengesetzte Richtungen von dem Volumenkörper begrenzt ist. Vorzugsweise wird der Hüllkörper bei einer Herstellung direkt in eine Ausnehmung und/oder eine Lücke des Volumenkörpers eingebracht, wobei der Hüllkörper nach einer Herstellung insbesondere direkt von dem Volumenkörper begrenzt ist. Dadurch können insbesondere vorteilhaft haptisch angenehme Griffflächen an dem Hygienemittel bereitgestellt werden. Es können insbesondere verschiedene Oberflächen und/oder Festigkeiten und/oder Shore Härten des Hygienemittels bereitgestellt werden. Hierdurch kann insbesondere eine vorteilhaft hohe Ergonomie bereitgestellt werden.

Es wird weiter vorgeschlagen, dass die Anwendungseinheit zumindest teilweise vom dem Volumenkörper gebildet ist, welche in einem Bereich der Anwendungseinheit zumindest abschnittsweise, insbesondere nachträglich, verdichtet ist. Vorzugsweise ist ein geschäumtes Material des Volumenkörpers zumindest abschnittsweise nach einer Herstellung des Volumenkörpers verdichtet. Bei dem Verdichten wird insbesondere eine Dichte des Volumenkörpers zumindest abschnittsweise erhöht. Insbesondere wird bei dem Verdichten ein in dem geschäumten Material gespeichertes Gas beispielsweise in Form von Luft verdrängt bzw. entlassen. Dadurch kann insbesondere eine vorteilhaft hohe Festigkeit der Anwendungseinheit bereitgestellt werden. Zusätzlich können verdichtete Zonen über andere physikalische und mechanische Eigenschaften verfügen als andere Zonen des Volumenkörpers. Hierdurch kann z.B. eine zuverlässige Fixierung von Reinigungsmitteln, wie insbesondere Borsten, erreicht werden.

Zudem wird vorgeschlagen, dass die Griffeinheit zumindest teilweise von dem Volumenkörper gebildet ist, welche in einem Bereich der Griffeinheit zumindest abschnittsweise, insbesondere nachträglich, verdichtet ist. Vorzugsweise ist ein geschäumtes Material des Volumenkörpers zumindest abschnittsweise in einem Bereich der Griffeinheit nach einer Herstellung des Volumenkörpers verdichtet. Dadurch kann insbesondere eine vorteilhaft hohe Festigkeit der Griffeinheit bereitgestellt werden. Es kann insbesondere eine nachträgliche Konturierung der Griffeinheit erreicht werden. Es können insbesondere komplexe Formen hergestellt werden, welche beispielsweise bei der Herstellung des geschäumten Materials nicht realisierbar sind.

Ferner wird vorgeschlagen, dass das Hygienemittel zumindest ein Borstenplättchen aufweist, welches in eine Ausnehmung der Anwendungseinheit eingesetzt ist. Das Borstenplättchen ist insbesondere mit Borsten und/oder alternativen Reinigungselementen besetzt (z.B. gespritzte Borsten oder/oder Massage und Reinigungselemente aus Weichmaterial). Hierzu werden zunächst insbesondere mittels Spritzgießens Borstenplättchen mit Durchgangslöchern oder Sacklöchern gefertigt, durch bzw. in welche anschließend Borsten und/oder alternative Reinigungselemente geführt werden. Vorzugsweise werden die Borsten anschließend mit den beschriebenen Verfahren wie AFT, PTT oder Ankerstanzen mit dem Plättchen verbunden. Vorzugsweise ist die Anwendungseinheit in einem Bereich der Ausnehmung verdichtet ausgebildet. Bevorzugt besteht die Anwendungseinheit in einem Bereich der Ausnehmung aus dem geschäumten Material. Dadurch kann insbesondere eine vorteilhaft einfache und zuverlässige Befestigung des Borstenplättchens mit Reinigungselementen, insbesondere in Form von konventionellen, extrudierten und oder gespritzten Borsten oder Reinigungs- oder Massageelementen aus Weichmaterial, erreicht werden. Es kann insbesondere ein vorteilhaft stabiles Hygienemittel bereitgestellt werden.

Des Weiteren wird vorgeschlagen, dass das Hygienemittel ein Borstenbündel aufweist, welches mittels Stanzung mit der Anwendungseinheit verbunden ist. Die Borstenbündel sind vorzugsweise mittels zumindest eines Ankerstanz-Verfahrens oder dergleichen verarbeitet, insbesondere an der Anwendungseinheit befestigt. Vorzugsweise weist ein Borstenträger der Anwendungseinheit eine Mehrzahl von, insbesondere gebohrten und/oder bei einem Gussverfahren und/oder einem Partikelschaum-Verfahren geformten, Borstenaufnahmen, insbesondere Löcher für Borstenbündel, auf. Im Fall eines Ankerstanzens ist beispielsweise denkbar, dass zunächst ein Grundkörper vorzugsweise des Bürstenkopfs, mittels eines Gussverfahrens und/oder eines Partikelschaum-Verfahrens gefertigt wird, wobei vorteilhaft Sacklöcher für Borstenbündel bei dem Gussverfahren und/oder dem Partikelschaum-Verfahren geformt werden. Selbstverständlich ist jedoch auch ein anschließendes Bohren von Sacklöchern denkbar.

Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar. Dadurch kann insbesondere eine vorteilhaft einfache und zuverlässige Befestigung von Borstenbündeln erreicht werden. Es kann insbesondere ein vorteilhaft stabiles und zuverlässiges Hygienemittel bereitgestellt werden.

Ferner geht die Erfindung aus von einem Verfahren zu einer Herstellung des Hygienemittels. Es wird insbesondere vorgeschlagen, dass in zumindest einem Verfahrensschritt der Volumenkörper mittels eines Schaumverfahrens, insbesondere mittels eines Partikelschaum-Verfahrens, direkt an den Grundkörper angeformt wird. Vorzugsweise erfolgt zumindest ein Teil einer Formgebung des Volumenkörpers direkt an dem Grundkörper. Vorzugsweise begrenzt der Grundkörper bei einer Formgebung des Volumenkörpers insbesondere einen formgebenden Hohlraum eines Formgebungswerkzeugs für den Volumenkörper. Besonders bevorzugt wird der Volumenkörper zumindest teilweise um den Grundkörper herum hergestellt. Insbesondere wird der Volumenkörper direkt, insbesondere bei einer Produktion, an dem, insbesondere um den, Grundkörper hergestellt. Vorzugsweise bildet der Volumenkörper direkt bei einer Produktion einen Form- und/oder Stoffschluss mit dem Grundkörper aus.

Das Partikelschaum-Verfahren, insbesondere auch Partikelschäumung oder Styroporverfahren genannt, bildet insbesondere ein physikalisches Schäumen, bei dem das Material durch einen physikalischen Vorgang geschäumt wird. Bei dem Partikelschaum-Verfahren wird insbesondere expandierbarer Kunststoff, wie beispielsweise Polystyrol (PS) in Form von expandiertem Polystyrol (EPS) oder Polypropylen (PP) in Form von expandiertem Polypropylen (EPP), eingesetzt. In einem ersten Schritt des Partikelschaum-Verfahrens wird insbesondere das Rohmaterial in Form von Perlen und/oder Kügelchen in eine Form gegeben, der Hohlraum wird gefüllt. Anschließend wird durch verschiedene kleine Öffnungen im Werkzeug bzw. in der Kavität Wasserdampf unter Druck und hoher Temperatur eingespritzt. Diese Wärmeeinleitung führt zur Ausdehnung und Sinterung der Perlen, die sich an ihren Oberflächen verbinden. Im Anschluss muss der Wassergehalt reduziert werden, beispielsweise in einem Temperofen. Im Detail wird bei dem Partikelschaum-Verfahren insbesondere in einem ersten Verfahrensschritt das Granulat in einem Druckbeladungsbehälter und/oder Druckfüllgerät bereitgestellt. Anschließend wird in einem zweiten Verfahrensschritt oder auch parallel eine Schäumform geschlossen. Die Schäumform definiert in Form eines Hohlraums insbesondere eine Form des Volumenkörpers. Darauffolgend wird in einem dritten Verfahrensschritt die Schäumform ab dem Druckbeladungsbehälter und/oder Druckfüllgerät gefüllt. Der Druck bei der Materialeinbringung beträgt insbesondere von 0,5 bar bis 3 bar, vorzugsweise von 1 bar bis 2 bar. In einem weiteren Verfahrensschritt wird die Schäumform gegebenenfalls, insbesondere mittels eines Vakuums, entlüftet. Anschließend wird der Inhalt der Schäumform in einem weiteren Verfahrensschritt insbesondere bedampft. Ein Dampfdruck beträgt insbesondere bis 40 bar, vorzugsweise bis 25 bar und besonders bevorzugt unter 5 bar. Der Dampfdruck und die Dampftemperatur hängen insbesondere zusammen, da höhere Temperaturen höhere Drücke bringen. Die Dampftemperatur beträgt insbesondere bis 250°C, vorzugsweise bis 170°C und besonders bevorzugt bis 150°C. Die Dampftemperatur beträgt ferner insbesondere mindestens 80°C. Die Dauer der Bedampfung beträgt insbesondere von 20 s bis 50 s, vorzugsweise von 25 s bis 40 s. Hierbei wird insbesondere das Granulat bzw. die Perlen verschweißt. Eine Materialexpandierung beträgt insbesondere das 20-fache bis 100-fache, vorzugsweise das 40-fache bis 80-fache, des ursprünglichen Volumens. Optional kann dies insbesondere mit Vakuum unterstützt werden, damit Dampf besser eindringen kann. Neueste Schäume lassen sich insbesondere auch ohne Dampf herstellen. Basis hierfür ist insbesondere eine RF-Technologie, bei der das Schäumen mit Energie in Form von elektromagnetischen Wellen erfolgt. Das Verschweißen passiert so insbesondere vom Inneren des geschäumten Volumenkörpers nach außen, was eine bessere Produktqualität mit sich bringt. Ferner ist eine entsprechende RF-Technologie energieeffizienter und weniger prozessaufwändig. Darauffolgend wird die Schäumform gekühlt, sodass sich das Granulat stabilisiert und/oder fixiert. Das Kühlen passiert insbesondere über ein Hohlraumsystem mit Wasser (gesprühtes Wasser) über dieselben Kanäle, wie der Dampfeintrag erfolgt. Anschließend wird die Schäumform in einem weiteren Verfahrensschritt geöffnet. Die Zykluszeiten des Schäumverfahrens betragen insbesondere von 60 s bis 200 s, vorzugsweise von 80 s bis 120 s. Abhängig von einer Größe des Granulats weist das Partikelschaum-Verfahren eine Mindestwandstärke des Volumenkörpers auf. Die Mindestwandstärke beträgt insbesondere 3 mm. Ferner ist insbesondere denkbar, dass der Volumenkörper nach einer Herstellung zwischengelagert wird, damit beispielsweise die Reste des Treibmittels, insbesondere des Pentans, entweichen können. Des Weiteren ist denkbar, dass das Material vorgeschäumt wird.

Insbesondere kann das Rohmaterial in Form von Perlen und/oder Kügelchen separat hergestellt werden. Insbesondere wird der expandierbare Kunststoff dazu unter Zugabe von Treibmitteln, wie beispielsweise Kohlenwasserstoff und/oder Penthan, durch Suspersions-(Perl-) Polymerisation hergestellt. Die Granulatgröße kann dabei insbesondere zwischen 0,2 mm und 0,3 mm betragen. Mit Hilfe von Wasserdampf wird der expandierbare Kunststoff, insbesondere bei Temperaturen von 80°C bis 110°C, insbesondere bis zu einem 80-fachen Volumen, vorgeschäumt. Hierzu dienen insbesondere diskontinuierlich oder kontinuierlich arbeitende Vorschäumer. Der in die Zellwände diffundierende Wasserdampf unterstützt dabei den Schäumvorgang. Dadurch kann insbesondere ein Hygienemittel mit vorteilhaften Eigenschaften hinsichtlich einer Ergonomie des Hygienemittels hergestellt werden. Es kann insbesondere eine vorteilhafte Greifbarkeit und angenehme Haptik und eine verbesserte Rutschfestigkeit der Griffeinheit erreicht werden. Ferner kann dadurch insbesondere ein Gewicht des Hygienemittels gering gehalten werden, insbesondere ohne eine Ergonomie des Hygienemittels, insbesondere eine Greifbarkeit, zu beeinträchtigen. Es kann insbesondere ein Materialeinsatz für das Hygienemittel gering gehalten werden. Hierdurch kann insbesondere ein vorteilhaft ökologisches Hygienemittel bereitgestellt werden.

Vorzugsweise ist das Formgebungswerkzeug für den Volumenkörper von einer Schäumwerkzeugform gebildet. Die Schäumwerkzeugform weist insbesondere mindestens einen Anspritzpunkt bzw. Einlass auf. Der Anspritzpunkt ist vorzugsweise bei einem symmetrischen Volumenkörper zentral auf der Symmetrieachse. Insbesondere ist der Anspritzpunkt zwischen den Dampfeintritten und -austritten angeordnet. Der Anspritzpunkt ist vorzugsweise kaschiert oder so platziert, dass er nicht stört, insbesondere beispielsweise auf der Längsachse mittig an einem hinteren Ende. Ferner können Strukturen in der Schäumwerkzeugform realisiert sein. Es können beispielsweise verschiedene Oberflächen in derselben Form, erodierte Oberflächen und/oder strukturierte Flächen realisiert sein. Ferner wäre denkbar, dass die Schäumwerkzeugform partiell anders temperiert ist. Es können insbesondere verschiedene Heiz-Zonen und/oder verschiedene Kühl-Zonen realisiert sein. Die Oberflächentemperaturen im Werkzeug entsprechen vorzugsweise der Dampftemperatur. Bei einer späteren Kühlung wird insbesondere auch die Schäumwerkzeugform gekühlt. Ferner muss bei der Schäumwerkzeugform insbesondere die Anordnung der Dampfeintrittsstellen und -austrittsstellen berücksichtigt werden. Die Anordnung spielt insbesondere eine entscheidende Rolle für Oberflächenqualitäten und Bauteileigenschaften des Volumenkörpers. Entstehende Fehler können insbesondere Lufteinschlüsse oder falsches Sintern sein. Insbesondere ist ein Dampfeintritt wie auch der Dampfaustritt am Endprodukt erkennbar, insbesondere in Form von ventilartigen Inserts. Die Dampfeintritts- wie auch die Dampfaustrittstellen sind vorzugsweise im späteren Volumenkörper von außen nicht sichtbar, deshalb sind die Dampfaustrittstellen vorzugsweise an nicht funktionalen Bereichen angeordnet. Vorzugsweise sind die Dampfaustrittstellen auf der Unterseite des Volumenkörpers angebracht. Die Weichheit des Materials des Volumenkörpers ermöglicht ferner relativ große Hinterschnitte im Vergleich zum Spritzgießprozess. Die Schäumwerkzeugform ist vorzugsweise aus Metall hergestellt.

Alternativ oder zusätzlich sind auch noch andere, einem Fachmann als sinnvoll erscheinende Schäumverfahren denkbar. Alternative Schäumverfahren sind beispielsweise das chemische Schäumen. Beim chemischen Schäumen wird dem Kunststoff Treibmittel in Form von Pulver oder Granulat zugefügt. Dieser chemische Zusatz zersetzt sich unter Abgabe eines Gases, insbesondere meist Kohlendioxid, während der Plastifizierung des Kunststoffs mit steigender Temperatur. Auch hier geht das Gas in der Schmelze in Lösung unter Aufrechterhaltung eines Mindestdrucks. Der weitere Verfahrensablauf entspricht dem des physikalischen Schäumens. Vorteil dieses Verfahrens ist, dass man keine spezielle Anlagentechnik benötigt. Alternative Schäumverfahren sind ferner beispielsweise das mechanische Schäumen.

Des Weiteren wird vorgeschlagen, dass in zumindest einem Verfahrensschritt der zumindest eine Hüllkörper und/oder der zumindest eine Grundkörper mittels eines Spritzgussverfahrens an den Volumenkörper angeformt wird. Vorzugsweise wird der zumindest eine Hüllkörper und/oder der zumindest einen Grundkörper und der Volumenkörper in einem Partikelschaum-Verbundspritzgießprozess hergestellt. Das Partikelschaum-Verbundspritzgießen ist eine Technologie, bei der ein geschäumtes Formteil im Spritzguss unlösbar mit Kunststoff verbunden wird. Vorzugsweise wird in einem ersten Schritt der Volumenkörper beispielsweise aus einem expandierten Polypropylen (EPP) hergestellt. Bevorzugt wird der Volumenkörper anschließend in eine Kavität eines Spritzgießwerkzeugs eingelegt. Darauffolgend wird das Spritzgießwerkzeug insbesondere geschlossen und es wird eine Kunststoffkomponente des Hüllkörpers und/oder des Grundkörpers an den Volumenkörper angespritzt. Da das Spritzgießen eine höhere Schmelztemperatur hat bzw. die Schmelze eine höhere Temperatur aufweist als die Schmelztemperatur des geschäumten Volumenkörpers, passiert durch ein definiertes Aufschmelzen des geschäumten Volumenkörpers insbesondere eine stoffschlüssige, feste mechanische Verbindung. Vorzugsweise wird der zumindest eine Hüllkörper und/oder der zumindest eine Grundkörper stoffschlüssig mit dem Volumenkörper verbunden. Formschlüssige Verbindungen können zusätzlich gebildet werden. Optional kann beispielsweise der geschäumte Volumenkörper mit einer Weichkomponente überspritzt werden. Hierdurch können insbesondere die positiven Eigenschaften der Partikelschäume mit den positiven Eigenschaften der Thermoplasten verbunden werden, sodass insbesondere ein funktionelles Leichtbauteil entsteht. Es sind insbesondere verschiedene Verfahrensoptionen und/oder -kombinationen denkbar. So ist beispielsweise das Überschäumen eines bestehenden Teils denkbar. Es kann insbesondere ein geschäumtes Teil überschäumt werden. Insbesondere besteht so die Möglichkeit der Kombination von verschiedenen Schaumkomponenten, wie beispielsweise harte und weiche Schaumkomponenten und/oder wie beispielsweise Schaumkomponenten mit verschiedenen Basen (Basis Kunststoffkomponenten z.B. EPS mit EPP). Die beiden Schaumkomponenten können dabei insbesondere verschiedene Verbindungen eingehen, wie insbesondere einen Stoffschluss oder bevorzugt einen Kraft- und/oder Formschluss. Alternativ ist auch denkbar, dass ein Spritzgussteil überschäumt wird. Dabei wird insbesondere ein Spritzgussteil erstellt, welches anschließend überschäumt wird. Die Verbindungsmöglichkeiten zwischen verschiedenen Teilen sind dabei insbesondere abhängig von der Materialkombination. So können insbesondere chemische (Stoffschluss/Materialschluss) und/oder mechanische (Kraftschluss/Formschluss) Verbindungen der Teile realisiert werden. Dadurch kann insbesondere eine vorteilhafte, insbesondere hygienische, Außenfläche des Hygienemittels bereitgestellt werden. Ferner kann insbesondere trotz des Volumenkörpers eine vorteilhaft gleichmäßige Oberfläche des Hygienemittels geschaffen werden. Es kann insbesondere eine vorteilhafte Rutschfestigkeit des Hygienemittels geschaffen werden. Hierdurch kann eine vorteilhafte Greifbarkeit bereitgestellt werden. Es kann eine hohe Ergonomie bereitgestellt werden.

Es sind insbesondere verschiedene, einem Fachmann als sinnvoll erscheinende Verfahrensvarianten und Herstellreihenfolgen denkbar.

In einer ersten Variante kann beispielsweise der Volumenkörper mittels Schäumen hergestellt werden. Der geschäumte Volumenkörper kann anschließend in ein Spritzgießwerkzeug einlegt werden und der geschäumte Volumenkörper kann mit einer Hartkomponente, insbesondere dem Grundkörper, umspritzt werden. Darauffolgend kann optional die Hartkomponente, insbesondere der Grundkörper, mit einer Weichkomponente, insbesondere dem Hüllkörper und/oder einer Materialkomponente für gespritzte Borsten und/oder die geschäumte Komponente mit Weichkomponenten umspritzt werden.

In einer zweiten Variante kann beispielsweise der Volumenkörper mittels Schäumen hergestellt werden. Der geschäumte Volumenkörper kann anschließend in ein Spritzgießwerkzeug einlegt werden und der geschäumte Volumenkörper kann mit einer Hart- und/oder Weichkomponente in einer Kavität hergestellt werden. Falls die Hart- und Weichkomponente verarbeitet wird, sind die entsprechenden Volumina bzw. Zonen der Hart- und Weichkomponente vorzugsweise separiert, d.h. berühren sich nicht. Optional kann, insbesondere auch zusammen mit der Herstellung der Hart- und Weichkomponenten, der geschäumte Volumenkörper mit Materialkomponenten für gespritzte Borsten umspritzt werden.

In einer dritten Variante kann beispielsweise der Grundkörper mittels Spritzgießen hergestellt werden. Der Grundkörper kann anschließend in ein Schäumwerkzeug einlegt werden und der Grundkörper mit dem geschäumten Material für den Volumenkörper umschäumt werden. Der Grundkörper weist vorzugsweise mindestens eine Teilgeometrie auf, welche durch gute Anker- und/oder Verbindungsstrukturen ein Ausreißen verhindert und die Teile zusammenhält. Ein Anwendungsbeispiel könnte beispielsweise ein Zahnbürstengriff, insbesondere ein als Grundkörper (z.B. ein gespritzter Stengel) mit einem daran geschäumten Volumenkörper und/oder eine gespritzte Käfigstruktur mit einem durch- oder angeschäumten Volumenkörper, sein.

In einer vierten Variante kann beispielsweise der Grundkörper mittels Spritzgießen hergestellt werden. Alternativ kann ein aus einem Nicht-Kunststoff bestehender (z.B. mechanisch bearbeiteter Körper, Körper aus Holz, Metall oder Glas etc.) als Grundkörper hergestellt werden. Der Grundkörper kann anschließend optional mit einer Weichkomponente, insbesondere dem Hüllkörper, umspritzt bzw. montiert werden. Mittels der Weichkomponente kann beispielsweise ein Daumengriff und/oder ein Zungenreiniger ausgebildet werden. Anschließend wird der umspritzte oder montierte Grundkörper in ein Schäumwerkzeug eingelegt und der Grundkörper wird mit dem geschäumten Material für den Volumenkörper umschäumt.

In einer fünften Variante kann beispielsweise der Grundkörper mittels Spritzgießen hergestellt werden. Alternativ kann ein aus einem Nicht-Kunststoff bestehender (z.B. mechanisch bearbeiteter Körper, Körper aus Holz, Metall oder Glas etc.) als Grundkörper hergestellt werden. Der Grundkörper kann anschließend optional mit einer Weichkomponente, insbesondere dem Hüllkörper, umspritzt bzw. montiert werden. Mittels der Weichkomponente kann beispielsweise ein Daumengriff und/oder ein Zungenreiniger ausgebildet werden. Anschließend kann der geschäumte Volumenkörper separat hergestellt werden und an dem Grundkörper montiert werden.

In einer sechsten Variante kann beispielsweise der Volumenkörper mittels Schäumen hergestellt werden. Der Volumenkörper kann aus einem oder mehreren Schaumkomponenten bestehen. Der geschäumte Volumenkörper wird anschließend optional mindestens partiell verdichtet.

In einer siebten Variante kann beispielsweise der Volumenkörper mittels Schäumen aus einer Hartkomponente hergestellt werden. Anschließend kann optional ein weiterer Körper, insbesondere aus einer Weichkomponente, an den Volumenkörper angeschäumt werden. Der geschäumte Volumenkörper kann anschließend in ein Spritzgießwerkzeug einlegt und mit einer Hartkomponente, insbesondere dem Grundkörper, umspritzt werden.

Es sind insbesondere verschiedene Verfahrensvarianten denkbar. Beispielsweise kann in dem Verfahren ein Umschäumen von Kleinteilen erfolgen. Insbesondere kann dies in den Schäum-Anwendungs-Varianten genutzt werden. Es kann insbesondere ein Einlegeteil umschäumt werden. Dabei wird insbesondere das Einlegeteil in eine Schäumungsform eingebracht und das Einlegeteil umschäumt. Möglichkeiten für ein entsprechendes Einlegeteil sind beispielsweise transparente Fenster, Daumengriff-Elemente, Kunststoffplättchen mit oder ohne Reinigungselemente, Filmscharniere, Anwendungseinheiten mit Rasierklingen und/oder funktionale Teile mit einer Schnittstelle bzw. Verbindungsmöglichkeiten zu einem weiteren Teil. Alternativ wäre jedoch auch ein montiertes Teil denkbar. Dazu müssten dann entsprechende Schnittstellengeometrien geschaffen werden, die die Montage erlauben.

Eine weitere Verfahrensvariante bildet insbesondere das Hinterschäumen. Hierbei können insbesondere Folie und/oder Gewebe hinterschäumt werden, insbesondere mit dem Ziel eine glatte Oberfläche, insbesondere bei Anwendung einer Folie, oder eine Gewebeoberfläche bzw. eine stoffige oder strukturierte Oberfläche, insbesondere bei der Anwendung eines Gewebes, zu erzielen. Bei dem Hinterschäumen wird insbesondere lediglich eine Seite umschäumt, während eine zweite Seite mindestens teilweise freiliegend ausgebildet ist. Zusätzlich wäre denkbar, dass an der Folie oder auch dem Gewebe eine spezielle Oberfläche ausgebildet ist, welche eine Haftung möglich macht. Beispielsweise kann eine Polypropylen hinterlegte Folie für die Haftung mit einem Polypropylen-Schaum ausgebildet sein.

Vorzugsweise sind die Verfahrensparameter bei einem Spritzgießen nach dem Schäumen, insbesondere auf den geschäumten Volumenkörper, von herkömmlichen Spitzgießparametern verschieden. Insbesondere müssen die Druckverhältnisse auf die Komponente und die Geometrie des zu überspritzenden Volumenkörpers angepasst werden, sodass eine Zerstörung des Volumenkörpers durch den Druck verhindert wird. Die Temperaturverhältnisse betragen bei einer Weichkomponente insbesondere von 150°C bis 250°C, vorzugsweise von 180°C bis 230°C. Bei einer Hartkomponente betragen die Temperaturverhältnisse insbesondere von 180°C bis 290°C, vorzugsweise von 210°C bis 260°C. Es ist insbesondere eine Materialauswahl und/oder Materialparameterauswahl sinnvoll, welche bei wenig Druck und tiefen Temperaturen gut fließt. Vorzugsweise werden bei dem Spritzgießprozess die Anspritzpunkte, Einlässe, Entlüftungszonen, Dampfeintritts- /Dampfaustrittstellen der vorherigen Herstellschritte vorzugsweise überdeckt. Beispielsweise werden Anspritzpunkte eines spritzgegossenen Teils vom nachfolgend überschäumten Teil überdeckt. Es kann insbesondere sowohl das geschäumte Teil als auch das spritzgegossene Teil überdeckt werden. Aufgrund der Druckverhältnisse müssen der Anspritzpunkt und die Einspritzrichtung so gewählt werden, dass das geschäumte Teil nicht zerstört wird. Die Einspritzrichtung darf vorzugsweise nicht auf das geschäumte Material gerichtet sein, ist dies nicht möglich, muss der Abstand zum Auftreffen aufeinander möglichst maximiert werden, damit die Schädigungsgefahr reduziert wird. Damit dies möglich ist, muss der Einspritzpunkt vorzugsweise in Abhängigkeit von der Geometrie des Volumenkörpers festgelegt werden und auch in Bezug auf die Anordnung im finalen Produkt geprüft werden.

Es bestehen insbesondere verschiedene Verbindungsmöglichkeiten zwischen den geschäumten Teilen, insbesondere dem Volumenkörper und den spritzgegossenen Teilen, insbesondere dem Grundkörper und/oder dem Hüllkörper. Es ist beispielsweise ein Stoffschluss und/oder Materialschluss denkbar. Die Voraussetzung für einen Stoffschluss und/oder Materialschluss sind insbesondere kompatible Komponenten, insbesondere ein Material mit derselben Basis. Mögliche Kombinationen des geschäumten Teils und des spritzgegossenen Teils können beispielsweise EPE und PE, EPP und PP, EPS und PS, EPS und SAN, EPS und ABS, EPET und PET sein. Ein Stoffschluss und/oder Materialschluss ist insbesondere möglich, wenn die nachgelagert verarbeitete Komponente einen höheren Schmelzpunkt hat als die vorgelagert bearbeitete Komponente. Dies ist insbesondere bei einem nachträglichen Umspritzen der Fall. Für die Druckverteilung und den Erhalt des geschäumten Teils ist es am besten, wenn dieses an einer Wandung anliegt und auf der anderen Seite angespritzt wird. Hierdurch kann ein Druck von innen nach außen aufgebracht werden und damit eine bessere Druckaufnahme realisiert werden. Bei dem Stoffschluss und/oder Materialschluss schmilzt die nachgelagert verarbeitete Komponente im Grenzbereich die vorgelagert verarbeitete Komponente auf und die Komponenten vermischen und verbinden sich. Es entsteht ein Stoffschluss und/oder Materialschluss. Alternativ oder zusätzlich zu einem Stoffschluss und/oder Materialschluss kann eine Verbindung auch mittels eines Kraft- und/oder Formschlusses erfolgen. Bei einem Kraft- und/oder Formschluss ist vorzugsweise eine Ankerstruktur bestehend aus einem Formschlusselement in der Hartkomponente vorgesehen, welche eine formschlüssige Verbindung ermöglicht. Ein Kraft- und/oder Formschluss kann beispielsweise durch Umschäumen einer Struktur mit vorstehenden Elementen, insbesondere auch mit Hinterschnitten, erfolgen. Die vorstehenden Elemente können beispielsweise aus ringförmigen Elementen am zu umschäumenden Teil, insbesondere dem Grundkörper, gebildet sein. Die ringförmigen Elemente bilden insbesondere ein Rückhalteelement in Längsrichtung. Vorzugsweise können die ringförmigen Elemente 360° um die Längsachse verlaufen. Der Grundkörper kann so insbesondere vollständig 360° umschäumt werden, wobei das ringförmige Element eine Fixierung in Längsrichtung ermöglicht. Weitere Strukturen an dem Grundkörper können eine Fixierung der Drehung bilden. Hierzu sind insbesondere säulenartig vorstehende Elemente am zu umschäumenden Element, insbesondere dem Grundkörper, denkbar. So ist insbesondere beispielsweise denkbar, dass auf dem Grundkörper aus gespritzter Hartkomponente eine Säule aus Weichkomponente gespritzt ist, die den Daumengriff bilden soll. Durch Umschäumen des Grundkörpers wird die formschlüssige Verbindung durch die Säule erreicht. Ferner ist auch die Realisierung einer Vielzahl von Säulen an dem Grundkörper denkbar. Alternativ oder zusätzlich kann ein Kraft- und/oder Formschluss auch durch Umschäumen von Formschlusselementen mit Ausnehmungen, Umschäumen von Formschlusselementen mit Durchbrüchen, Umschäumen von Formschlusselementen mit Hinterschnitten oder Umschäumen von innen realisiert werden. Bei einem Umschäumen von innen können Formschlusselemente mit Hohlräumen im Innern von innen her umschäumt werden. So kann beispielsweise ein Netz gespritzt werden, wobei eine Schäumung durch ein Netz in den durch das Netz ausgebildeten Hohlraum eingespritzt wird. Ferner kann ein Käfig in Schäumung angeordnet sein. Der Käfig kann quasi auf der Schäumung aufliegen und/oder nur teilweise umschäumt werden. Auch das Ausfüllen von Leerräumen in gespritzten Produkten ist denkbar. Alternativ ist es möglich, das ringförmige Element in einem von 90° verschiedenen Winkel zur Längsachse anzuordnen, womit automatisch eine Fixierung der Drehung erfolgen würde. Die erwähnten Formschlusselemente sind so ausgerichtet, dass sie die durch die Kräfte, welche durch die bestimmungsgemäße Anwendung des Hygienemittels entstehen, auffangen können.

Bevorzugt sind bei einer Kombination von Spritzgießen und Schäumen verschiedene Herstellparameter zu beachten. Bei dem Schäumprozess und dem Spritzgießprozess werden insbesondere verschiedene Anlagen zum Schäumen und zum Spritzgießen benötigt. Ferner können die Schritte des Schäumprozesses und des Spritzgießprozesses explizit getrennt werden. So kann in einer Offline-Lösung (Prozessschritte sind explizit getrennt) beispielsweise ein Teil, insbesondere der Volumenkörper, geschäumt werden, das geschäumte Teil zwischengelagert werden und anschließend mit einer oder mehreren Komponenten in einer Spritzgieß-Maschine umspritzt werden. Bei einer Inline-Lösung (Prozessschritte sind direkt nacheinander folgend) kann beispielsweise ein Teil, insbesondere der Volumenkörper, geschäumt werden, das geschäumte Teil transferiert werden und anschließend mit einer oder mehreren Komponenten in einer Spritzgieß-Maschine umspritzt werden. Dies hat den Vorteil, dass der Stoffschluss bzw. Materialschluss besser ist, da das geschäumte Teil noch warm ist und dadurch die Oberfläche zu einer besseren Verbindung neigt. Die in diesem Abschnitt besprochenen Prozessschritte zwischen Schäumen und Spritzgießen können in der Reihenfolge vertauscht werden. Es gelten die gleichen Überlegungen.

Es wird ferner vorgeschlagen, dass der zumindest eine Volumenkörper zumindest abschnittsweise nach einem mindestens ersten Formgebungsprozess verdichtet wird. Ein Verdichten erfolgt insbesondere nach einem Schäumen. Es wird daher insbesondere in einem ersten Schritt der Volumenkörper oder mehrere Schäumkomponenten geschäumt und anschließend der Volumenkörper mindestens partiell verdichtet. Ziel der Verdichtung ist, z.B. eine Beborstung zu ermöglichen, zumindest abschnittsweise eine stabile Struktur zu schaffen, den Volumenkörper als Ganzes stabil zu gestalten, ein Filmscharnier im Volumenkörper einzubringen, eine Oberflächenstruktur zu erreichen. Bei einem Verdichten erfolgt insbesondere eine Verformung des Volumenkörpers unter Druck und Wärme mit Hilfe eines der Verdichtung entsprechenden Stempels, wobei eine Stempeloberfläche vorzugsweise insbesondere bereits einen Teil einer Endgeometrie beinhaltet. Eine Verdichtung erfolgt dabei insbesondere in zwei Prozessschritten. In einem ersten Schritt wird insbesondere das Produkt mit dem Volumenkörper in eine Negativ-Form eingelegt. Die daran anliegende Form des Produkts verändert sich insbesondere nicht. Anschließend wird in einem zweiten Schritt ein Stempel auf das Produkt angelegt und drückt das Produkt entsprechend in Position. Die am Stempel anliegende Fläche formt sich dem Stempel entsprechend. Der Volumenkörper wird dabei komprimiert. Die Verdichtung kann in mehreren Verdichtungsschritten erfolgen, da sich immer ein Teil der Form nicht verändert. Dies ist insbesondere nötig, um eine definierte Form zu schaffen und/oder eine definierte Ausrichtung des Produkts in der Form zu gewährleisten. Mit dem Verdichten kann gleichzeitig ein weiteres Formen des Volumenkörpers erfolgen. So können beispielsweise Borstenlöcher zusammen mit der Kopfverdichtung geformt werden. Dies kann insbesondere beispielsweise mittels eines geheizten Stempels mit Borstenlochstempel erfolgen. Vor einem Verdichten wird der Volumenkörper insbesondere auf eine definierte Temperatur vorgewärmt. Ferner erfolgt der Verdichtungsprozess vorzugsweise direkt nach dem Schäumprozess, sodass der Volumenkörper nicht separat gewärmt werden muss, sondern noch Wärme enthält. Ein Vorwärmen kann dazu genutzt werden, die Verdichtung einheitlicher zu erhalten und die Ausführung schneller machen zu können. Eine maximale Vorwärmung erfolgt insbesondere auf Glastemperatur des geschäumten Volumenkörpers. Eine Temperatur des Stempels liegt insbesondere im Bereich der Schmelztemperatur der zu verdichtenden Komponente und/oder zwischen der Glastemperatur und der Schmelztemperatur der zu verdichtenden Komponente. Bei der Verdichtung erfolgt insbesondere eine Kompression des verdichteten Teilbereichs des Volumenkörpers auf 30% bis 80%, vorzugsweise 50% bis 70%, eines ursprünglichen Volumens. Eine Dauer des Haltens der Kompression beträgt insbesondere von 1 s bis 20 s, vorzugsweise von 1 s bis 10 s. Die Kompression wird insbesondere gehalten, damit sich die Schäumung nicht erholt. Dadurch kann insbesondere ein vorteilhaft variables Hygienemittel bereitgestellt werden. Es kann beispielsweise eine vorteilhaft hohe Festigkeit der Anwendungseinheit bereitgestellt werden. Hierdurch kann wiederum eine zuverlässige Fixierung von Reinigungsmitteln, wie insbesondere Borsten, erreicht werden. Alternativ oder zusätzlich kann insbesondere eine nachträgliche Konturierung der Griffeinheit erreicht werden. Es können insbesondere komplexe Formen hergestellt werden, welche beispielsweise bei der Herstellung des geschäumten Materials nicht realisierbar sind.

Mittels der Verdichtung können insbesondere festere, dichtere und/oder stabilere Partien im geschäumten Körper geschaffen werden. Hierdurch kann beispielsweise ein Filmscharnier durch Komprimieren der geschäumten Masse geschaffen werden. Bei der Verdichtung wird insbesondere das Gas / die Luft zumindest aus Teilbereichen des Volumenkörpers herausgedrückt, sodass wieder zumindest annähernd eine Vollmasse entsteht. Es kann in einem verdichteten Teilbereich hinsichtlich einer Dichte insbesondere eine Annäherung an gespritzte Teile erreicht werden. Durch die Verdichtung kann in dem Volumenkörper beispielsweise eine Schnittstellengeometrie ausgebildet werden, welche zur Verbindung mit einem anderen Teil dient. Es kann insbesondere ein Teilbereich der Schnittstelle komprimiert werden, um eine härtere, definierte bzw. kalibrierte Struktur zu schaffen. Die Schnittstelle kann beispielsweise für Wechselköpfe oder für Haarbürstenvorderteile ausgebildet sein. Mittels des Verdichtens wäre insbesondere denkbar, dass direkt zusammensetzt mehrere geschäumte Teile mittels Schweißen und/oder Zusammendrücken verbunden werden können. Ferner wäre bei dem Verdichten insbesondere denkbar, dass das Verdichten auch direkt im Schäumwerkzeug mit einem beweglichen Kern und/oder Stempel realisiert werden kann. Mittels des Verdichtens kann ferner Variabilität geschaffen werden. So kann beispielsweise ein Vorprodukt, insbesondere beispielsweise ein geschäumtes Produkt oder geschäumtes und gespritztes Produkt, bereitgestellt werden, welches verschieden verdichtet wird, um beispielsweise verschiedene Griff-Formen realisieren zu können. Auf diese Weise kann insbesondere ein Grundgriff geschaffen werden, der in verschiedenen Formen verdichtet wird und so unterschiedliche Produktformen, beispielsweise für verschiedene Kunden, bringt.

Es wird ferner vorgeschlagen, dass der Volumenkörper in einem Bereich der Anwendungseinheit zumindest abschnittsweise nach einem Formgebungsprozess verdichtet wird. Ziel der Verdichtung ist, insbesondere eine Beborstung zu ermöglichen. Es kann durch die Verdichtung in dem Volumenkörper direkt ein Borstenfeld realisiert werden. Insbesondere kann der Volumenkörper in einem Bereich eines Bürstenkörpers verdichtet werden, sodass bekannte Verfahren für eine Beborstung eingesetzt werden können. Dabei wäre insbesondere denkbar, dass eine Verdichtung und eine Beborstung parallel stattfinden. Mit dem Verdichten kann gleichzeitig ein weiteres Formen des Volumenkörpers erfolgen. So können beispielsweise Borstenlöcher zusammen mit der Kopfverdichtung geformt werden. Dies kann insbesondere beispielsweise mittels eines geheizten Stempels mit Borstenlochstempel erfolgen. Es kann insbesondere ein Borstenfeld in einem verdichteten Körper geschaffen werden. Damit die Beborstung möglich ist, wird der Bürstenkopf in einem Verfahrensschritt verdichtet. Die Verdichtung kann dabei mit Ausbildung von Borstenlöchern für eine normale Ankerstanzung erfolgen.

Alternativ kann die Verdichtung mit der Ausbildung einer Ausnehmung für ein Borstenplättchen erfolgen. Das Borstenplättchen kann insbesondere normal gespritzt, beborstet und im Anschluss in den Kopfbereich geschweißt werden. Das Borstenplättchen kann mittels der weiter vorn beschriebenen AFT, PTT, AMR oder Inmouldverfahren beborstet werden.

Es wäre jedoch auch ein gleichzeitiges Verdichten und Beborsten denkbar. Hierbei könnten in einem ersten Schritt Borstenbündel mit einem pilzförmigen Ende hergestellt werden, wobei das pilzförmige Ende wie ein Anker wirkt. Anschließend können die Borstenbündel in Ausnehmungen im Bürstenkopf eingebracht werden. Darauffolgend wird der Bürstenkopf verdichtet und die Borstenbündel damit fixiert. Dadurch kann insbesondere ein vorteilhaft variables Hygienemittel bereitgestellt werden. Es kann beispielsweise eine vorteilhaft hohe Festigkeit der Anwendungseinheit bereitgestellt werden. Hierdurch kann wiederum eine zuverlässige Fixierung von Reinigungsmitteln, wie insbesondere Borsten, erreicht werden.

Alternativ oder zusätzlich kann ein Borstenfeld auch in einen umschäumten Körper eingebracht werden, wie insbesondere in den umschäumten Grundkörper. Es kann beispielsweise ein Borstenplättchen, wie insbesondere ein AFT-/PTT-/AMR-/ oder Inmould-Plättchen, umschäumt werden. Hierzu wird insbesondere in einem ersten Schritt ein beborstetes Plättchen bzw. Borstenplättchen hergestellt. Anschließend wird das beborstete Plättchen insbesondere umschäumt und mindestens ein Teil der Anwendungseinheit und/oder der Griffeinheit durch geschäumte Komponente hergestellt. Alternativ wäre auch denkbar, dass einzelne Borstenbündel umschäumt werden. Hierzu werden insbesondere in einem ersten Schritt Borstenbündel mit einem pilzförmigen Ende hergestellt, wobei das pilzförmige Ende wie ein Anker wirkt. Darauffolgend werden die Borstenbündel in ein Schäumwerkzeug eingebracht und umschäumt. Durch die Umschäumung werden die Borstenbündel fixiert. Alternativ oder zusätzlich ist der Einsatz von eingedrehten Bürsten denkbar. Dazu wird ein Drahtende in einem geschäumten Griff gehalten. Die Verankerung ist hier insbesondere wichtig, da das Drahtende eine entsprechende Formung, beispielsweise in der Form eines Angelhakens (Form eines "J") aufweisen muss, dass die Bürste nicht ausgerissen werden kann. Die eingedrehte Bürste wird bei der Herstellung in ein Spritzgieß- oder Schäumwerkzeug eingelegt und umspritzt. Die Schäumung kann direkt an der Bürste bzw. dem Drahtende oder auf einem spritzgegossenen Teil, der an das Drahtende angespritzt wurde, erfolgen. Alternativ oder zusätzlich kann ein Borstenfeld am gespritzten Körper, insbesondere dem Grundkörper, angeordnet werden. Der gespritzte Grundkörper, der auch den Kopfbereich der Zahnbürste bildet, oder ein einfach gespritzter Körper bildet den Kopfbereich aus. Dabei ist insbesondere eine Variante mit einem gestanzten Borstenfeld denkbar. Dazu enthält der Kopfbereich der Anwendungseinheit insbesondere Borstenlöcher, wobei eine Beborstung direkt in den Borstenlöchern angebracht werden kann. Dafür sind insbesondere Ankerstanz-Verfahren denkbar. Alternativ ist insbesondere eine Variante mit einem AFT-Borstenfeld als AFT-Verfahren denkbar. Dazu enthält der Kopfbereich der Anwendungseinheit insbesondere eine Ausnehmung für ein Borstenplättchen, insbesondere ein AFT-Plättchen. Das Borstenplättchen wird normal gespritzt, beborstet und im Anschluss in den Kopfbereich geschweißt.

Das Hygienemittel kann insbesondere beliebig bedruckt und/oder dekoriert werden. Eine Bedruckung oder Dekorierung kann beispielsweise mittels einer Oberflächenbehandlung erfolgen. Die Oberflächenbehandlung kann in einen Herstellungsprozess integriert sein oder dem Herstellungsprozess nachgeschaltet sein. Das Hygienemittel kann beispielsweise durch Lackieren oder Abflammen versiegelt werden. Bei einem Lackieren werden insbesondere die Löcher in der Oberfläche aufgefüllt, was dazu führen kann, dass die Lackierung nicht überall gleich dick aufgetragen ist. Eine Lackierung kann beispielsweise durch Besprühen oder Bestreichen des Hygienemittels mit Farbe oder durch eine Tauchlackierung erfolgen. Eine Tauchlackierung ist insbesondere materialabhängig und ist aufgrund der Verarbeitungstemperaturen nicht für alle Materialien geeignet. Alternativ oder zusätzlich kann das Hygienemittel geprägt werden. Das Prägen stellt dabei eine Art partielles Verdichten dar, das eine Oberflächenstruktur und/oder Form bringt oder auch eine Beschriftung und/oder ein Logo abbildet. Bei einem Prägen ist insbesondere auch ein Folienaufbau mit einer Bedruckungsschicht und einer Verbindungsschicht, wie insbesondere Klebstoff, möglich. Bei einem Bildprägen wird insbesondere mit einem geheizten Stempel eine Folie, beispielsweise ab einer Rolle, auf den Körper gedrückt. Die Prägung findet dabei an jenen Stellen statt, an welcher die Folie mit entsprechendem Klebstoff versehen ist. Der Stempel für die Prägung hat dabei insbesondere die Form der Körperoberfläche. Eine Bedruckung erfolgt dabei insbesondere definiert, sodass Druckmarken gegenüber dem zu bedruckenden Körper ausgerichtet werden müssen. Bei einem Heißprägen dagegen wird mit einem geheizten Stempel mit Kontur der Prägung eine Folie, insbesondere beispielsweise ab einer Rolle, auf den Körper gedrückt. Die berührenden Flächen des Körpers werden mit dem Dekor ab Folie bestückt. Die Kontur der Bedruckung wird daher insbesondere von dem Stempel gemacht. Der Stempel ist insbesondere von einem Metallstempel gebildet. Der Stempel kann insbesondere für weitere Funktionen verwendet werden. Ferner können mittels Heißprägen Schriftzüge eingebrannt werden. Es können daher insbesondere Vertiefungen durch Hitze geschaffen werden, wobei eine Prägung ab Folie am Boden der Vertiefung ausgebildet wird. Der Stempel wird dazu insbesondere tiefer als die Oberfläche gefahren. Alternativ ist auch das Formen von Negativ-Formen denkbar. So kann ein Prägen insbesondere ohne Folie erfolgen, wobei lediglich ein partielles Verdichten erfolgt. So können insbesondere dreidimensionale Schriftzüge, Strukturen oder dergleichen erzeugt werden. Alternativ oder zusätzlich kann ein Dekorieren des Hygienemittels auch mittels eines Einlegeteils in einem Hinterschnitt erzeugt werden. So kann beispielsweise ein Diamant oder dergleichen eingelegt werden.

Bei einer Herstellung des Hygienemittels können insbesondere zusätzliche Elemente an dem Grundkörper, dem Volumenkörper und/oder dem Hüllkörper montiert werden. Es kann insbesondere eine Montage von kleineren Elementen erfolgen. Beispielsweise können Zusatzelemente, wie beispielsweise Metallteile, Diamanten, Glasperlen oder dergleichen nachträglich montiert werden. Alternativ oder zusätzlich können auch Spritzgussteile, wie harte Elemente oder weiche Elemente, oder beispielsweise Elemente mit anderen Funktionen bei einer Montage nachträglich eingebracht werden. Alternativ ist auch die Montage von Griffteilen als Spezialfall denkbar. Es ist insbesondere denkbar, dass beispielsweise das geschäumte Teil ein Loch aufweist, wobei ein zu montierendes Teil zu einer Montage durch das Loch hindurchgeführt wird. Dabei sind insbesondere weitere Abschlussteil denkbar. Eine Fixierung der Teile kann beispielsweise mechanisch, mittels Hinterschnitten, mittels einer Verschraubung, mittels Verklemmen, mittels Verrasten und/oder Vernieten, wobei insbesondere ein Teil angenietet und/oder verrastet wird, und/oder mittels Verklemmen erreicht werden. Bei einem Verschrauben werden Teile des Hygienemittels insbesondere zusammengeschraubt. So können beispielsweise zwei gespritzte Teile durch den geschäumten Körper durch Abschluss mit mutterähnlichem, aufgeschraubtem Teil verbunden werden. Alternativ oder zusätzlich kann eine Fixierung mittels Kleben oder Schweißen erfolgen.

Das erfindungsgemäße Hygienemittel soll hierbei nicht auf die oben beschriebenen Anwendungen und Ausführungsformen beschränkt sein. Insbesondere kann das erfindungsgemäße Hygienemittel zu einer Erfüllung einer hierin beschriebenen Funktionsweise eine von einer hierin genannten Anzahl von einzelnen Elementen, Bauteilen und Einheiten abweichende Anzahl und/oder eine beliebig sinnvolle Kombination derselben aufweisen. Zudem sollen bei den in dieser Offenbarung angegebenen Wertebereichen auch innerhalb der genannten Grenzen liegende Werte als offenbart und als beliebig einsetzbar gelten.

Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen.

### Zeichnungen

Weitere Vorteile ergeben sich aus der folgenden Zeichnungsbeschreibung. In den Zeichnungen sind vierzehn Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1A: einen Grundkörper eines als Zahnbürste ausgebildeten Hygienemittels mit einer Anwendungseinheit und mit einer Griffeinheit in einer 3D-Ansicht,
- Fig. 1B: den Grundkörper des Hygienemittels mit der Anwendungseinheit und mit der Griffeinheit in einer Schnittdarstellung,
- Fig. 1C: das Hygienemittel mit der Anwendungseinheit, mit der Griffeinheit, mit dem Grundkörper und mit dem Volumenkörper in einer 3D-Ansicht,
- Fig. 1D: das Hygienemittel mit der Anwendungseinheit, mit der Griffeinheit, mit dem Grundkörper und mit dem Volumenkörper in einer Schnittdarstellung,
- Fig. 2A: ein alternatives, als Zahnbürste ausgebildetes Hygienemittel mit einer Anwendungseinheit, mit einer Griffeinheit, mit einem Grundkörper, mit einem Volumenkörper und mit einem Hüllkörper in einer 3D-Ansicht,
- Fig. 2B: das alternative Hygienemittel mit der Anwendungseinheit, mit der Griffeinheit, mit dem Grundkörper, mit dem Volumenkörper und mit dem Hüllkörper in einer Schnittdarstellung,
- Fig. 3A: einen weiteres alternatives, als Zahnbürste ausgebildetes Hygienemittel mit einer Anwendungseinheit, mit einer Griffeinheit, mit einem Grundkörper und mit einem Volumenkörper in einer 3D-Ansicht bei einer Herstellung,
- Fig. 3B: das weitere alternative Hygienemittel mit der Anwendungseinheit, mit der Griffeinheit, mit dem Grundkörper, mit dem Volumenkörper und mit einem Hüllkörper in einer 3D-Ansicht,
- Fig. 3C: das weitere alternative Hygienemittel mit der Anwendungseinheit, mit der Griffeinheit, mit dem Grundkörper, mit dem Volumenkörper und mit dem Hüllkörper in einer Schnittdarstellung,
- Fig. 4A: ein weiteres alternatives, als Zahnbürste ausgebildetes Hygienemittel mit einer Anwendungseinheit, mit einer Griffeinheit, welche ein Käfigelement aufweist, mit einem Grundkörper und mit einem Volumenkörper in einer 3D-Ansicht,
- Fig. 4B: das weitere alternative Hygienemittel mit der Anwendungseinheit, mit der Griffeinheit, welche das Käfigelement aufweist, mit dem Grundkörper und mit dem Volumenkörper in einer Schnittdarstellung,
- Fig. 5A: ein weiteres alternatives, als Zahnbürste ausgebildetes Hygienemittel mit einer Anwendungseinheit, mit einer Griffeinheit, welche ein Käfigelement aufweist, mit einem Grundkörper und mit einem Volumenkörper in einer 3D-Ansicht,
- Fig. 5B: das weitere alternative Hygienemittel mit der Anwendungseinheit, mit der Griffeinheit, welche das Käfigelement aufweist, mit dem Grundkörper und mit dem Volumenkörper in einer Schnittdarstellung,
- Fig. 6A: ein weiteres alternatives, als Zahnbürste ausgebildetes Hygienemittel mit einer Anwendungseinheit, mit einer Griffeinheit und mit einem Volumenkörper in einer Seitenansicht, unverdichtet nach dem Schäumen,
- Fig. 6B: das weitere alternative Hygienemittel mit der Anwendungseinheit, mit der Griffeinheit und mit dem Volumenkörper in einer Seitenansicht, mit verdichtetem Bürstenkopf,
- Fig. 6C: das weitere alternative Hygienemittel mit der Anwendungseinheit, mit der Griffeinheit und mit dem Volumenkörper in einer Seitenansicht, vollständig verdichtet,
- Fig. 7A: ein weiteres alternatives, als Zahnbürste ausgebildetes Hygienemittel mit einer Anwendungseinheit, welche eine Ausnehmung für ein AFT-Plättchen aufweist, mit einer Griffeinheit und mit einem Volumenkörper in einer 3D-Ansicht, unverdichtet nach dem Schäumen,
- Fig. 7B: das weitere alternative Hygienemittel mit der Anwendungseinheit, mit der Griffeinheit und mit dem Volumenkörper in einer 3D-Ansicht, vollständig verdichtet,
- Fig. 7C: das weitere alternative Hygienemittel mit der Anwendungseinheit, mit der Griffeinheit, mit dem Volumenkörper und mit einem in der Ausnehmung der Anwendungseinheit aufgenommenen AFT-Plättchen in einer 3D-Ansicht, vollständig verdichtet,
- Fig. 8: ein als Interdentalbürste ausgebildetes Hygienemittel mit einer Anwendungseinheit, mit einer Griffeinheit und mit einem Volumenkörper in einer 3D-Ansicht,
- Fig. 9: ein als elektrische Zahnbürste ausgebildetes Hygienemittel mit einer Anwendungseinheit, mit einer Griffeinheit, welche ein Gehäuse aufweist, mit einem das Gehäuse ausbildenden Grundkörper und mit einem Volumenkörper, welcher an dem Gehäuse angeordnet ist in einer 3D-Ansicht,
- Fig. 10: ein alternatives als elektrische Zahnbürste ausgebildetes Hygienemittel mit einer Anwendungseinheit, mit einer Griffeinheit, welche ein Gehäuse aufweist, mit einem das Gehäuse ausbildenden Grundkörper und mit verschiedenen Teil-Volumenkörper, welcher an dem Gehäuse angeordnet ist, und eine Ladestation in einer 3D-Ansicht,
- Fig. 11A: ein als Mascara ausgebildetes Hygienemittel mit einer Anwendungseinheit, mit einer Griffeinheit, mit einem Tank, mit einem Grundkörper und mit einem Volumenkörper in einer Seitenansicht,
- Fig. 11B: das Hygienemittel mit der Anwendungseinheit, mit der Griffeinheit, mit dem Grundkörper und mit dem Volumenkörper in einer Seitenansicht ohne den Tank dargestellt,
- Fig. 11C: das Hygienemittel mit der Anwendungseinheit, mit der Griffeinheit, mit dem Tank, mit dem Grundkörper und mit dem Volumenkörper in einer Schnittdarstellung,
- Fig. 12: ein als Rasierer ausgebildetes Hygienemittel mit einer Anwendungseinheit, mit einer Griffeinheit, mit einem Grundkörper und mit einem Volumenkörper in einer 3D-Ansicht,
- Fig. 13A: ein als Zahnseidenbox ausgebildetes Hygienemittel mit einer Anwendungseinheit, mit einer als Box ausgebildeten Griffeinheit und mit einem Volumenkörper in einer 3D-Ansicht auseinandergeklappt,
- Fig. 13B: das Hygienemittel mit der Anwendungseinheit, mit der als Box ausgebildeten Griffeinheit und mit einem Volumenkörper in einer 3D-Ansicht zusammengeklappt mit einem geöffneten Deckel und
- Fig. 14: ein als Handbesen ausgebildetes Hygienemittel mit einer Anwendungseinheit, mit einer Griffeinheit und mit einem die Griffeinheit ausbildenden Volumenkörper in einer 3D-Ansicht.

### Beschreibung der Ausführungsbeispiele

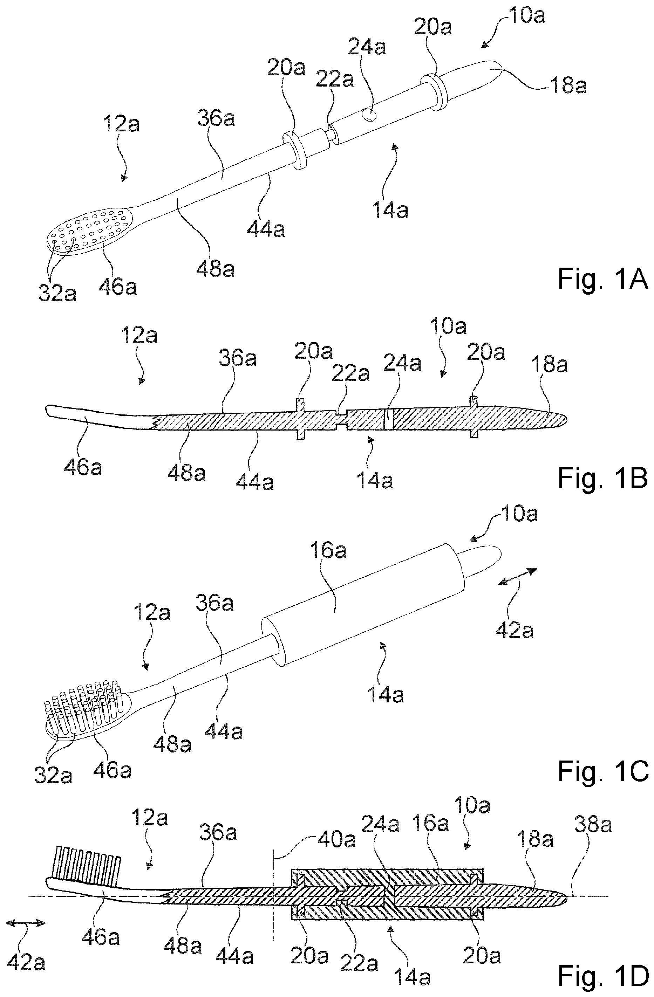

Die Figur 1A zeigt eine Vorderseite 36a eines Hygienemittels 10a in einer schematischen perspektivischen Darstellung. Das Hygienemittel 10a ist im vorliegenden Fall als eine Zahnbürste ausgebildet. Das Hygienemittel 10a kann ebenso als eine Einmalzahnbürste oder auch als eine Wechselkopfzahnbürste ausgebildet sein. Zudem könnte das Hygienemittel 10a als ein Flosser, eine Single-Tuft-Bürste, ein Zwischenzahnreiniger, ein Zungenreiniger oder dergleichen ausgebildet sein. Ferner sind kombinierte Hygienemittel denkbar, die zumindest zwei unterschiedliche Funktionen kombinieren, beispielsweise eine Zahnbürste mit Zungenreiniger, eine Zahnbürste mit Massageelementen, einen Interdentalreiniger mit Flosser oder dergleichen mehr.

Das Hygienemittel 10a weist zumindest eine Anwendungseinheit 12a auf. Ferner weist das Hygienemittel 10a zumindest eine Griffeinheit 14a auf.

Im Folgenden wird auf die Figuren 1A bis 1D Bezug genommen, welche unterschiedliche Ansichten und Fertigungsstufen des Hygienemittels 10a zeigen. Aufgrund der unterschiedlichen Ansichten sind einige Elemente nicht in sämtlichen Figuren dargestellt und entsprechend nicht in sämtlichen Figuren mit Bezugszeichen versehen.

Das Hygienemittel 10a weist eine Längsachse 38a, eine Höhenachse 40a und eine Breitenachse auf. Die Längsachse 38a ist parallel zu einer Haupterstreckungsrichtung 42a des Hygienemittels 10a angeordnet. Ist das Hygienemittel 10a mit einer Rückseite 44a auf eine ebene Oberfläche gelegt, sodass die Längsachse 38a parallel zu der Oberfläche angeordnet ist, ist die Höhenachse 40a senkrecht zu der Längsachse 38a und senkrecht zu der Oberfläche und der Breitenachse angeordnet. Die Breitenachse ist senkrecht zu der Längsachse 38a und senkrecht zu der Höhenachse 40a angeordnet. Im vorliegenden Fall weist das Hygienemittel 10a eine Länge, insbesondere parallel zu der Längsachse 38a und gemessen parallel zur Auflagefläche, von 140 mm bis 210 mm und vorzugsweise von 165 mm bis 195 mm auf.

Die zumindest eine Anwendungseinheit 12a weist einen Kopfbereich 46a auf. Der Kopfbereich 46a bildet einen Bürstenkopf des Hygienemittels 10a. Im vorliegenden Fall ist der Kopfbereich 46a als ein Zahnbürstenkopf ausgebildet. Der Kopfbereich 46a weist insbesondere einen als Borstenträger ausgebildeten Grundkörper auf. Der Grundkörper des Kopfbereichs 46a ist vollständig aus einer Hartkomponente ausgebildet. Es wäre jedoch auch denkbar, dass der Grundkörper des Kopfbereichs 46a aus einer Hartkomponente und einer Weichkomponente gebildet ist. Der Grundkörper des Kopfbereichs 46a bildet einen Borstenträger aus. Das Hygienemittel 10a weist ferner im Kopfbereich 46a eine Mehrzahl von Borstenlöchern in Form von Ausnehmungen 32a auf, welche jeweils ein Borstenbündel umfassen.

Alternativ könnte das Hygienemittel 10a ein von dem Kopfbereich 46a aufgenommenes Borstenplättchen aufweisen, welches eine Mehrzahl von Borstenbündeln umfasst. Das Borstenplättchen ist beispielhaft von einem AFT-Plättchen gebildet. Auf der Vorderseite 36a des Kopfbereichs 46a ist eine Ausnehmung ausgeformt. Die Ausnehmung ist zur Aufnahme des Borstenplättchens vorgesehen.

Als Borsten kommen beliebige geeignete Borsten infrage. Ferner umfasst die Anwendungseinheit 12a im vorliegenden Fall einen Halsbereich 48a, welcher insbesondere den Kopfbereich 46a mit der Griffeinheit 14a verbindet. Der Halsbereich 48a bildet einen Hals aus.

Die Anwendungseinheit 12a ist an der Oberseite des Hygienemittels 10a angeordnet. Die Anwendungseinheit 12a bildet einen obersten Punkt des Hygienemittels 10a. Grundsätzlich kann die Anwendungseinheit 12a zumindest ein Zungenreinigerelement aufweisen. Das Zungenreinigerelement kann insbesondere Noppen und/oder Lamellen aufweisen. Vorzugsweise ist das Zungenreinigerelement auf der Rückseite des Kopfbereichs 46a angeordnet, insbesondere kann dieses auf einem Ring aus einer Weichkomponente und/oder auf einer Fläche aus Weichkomponente und/oder auf einer Insel aus einer Hartkomponente angeordnet sein. Das Zungenreinigerelement kann aus Hart- und/oder Weichkomponente geformt sein.

Der Halsbereich 48a bildet einen Übergang zwischen der Anwendungseinheit 12a und der Griffeinheit 14a aus. Das untere Ende des Halsbereichs 48a ist zumindest teilweise federnd ausgebildet.

Das Hygienemittel 10a weist ferner einen Volumenkörper 16a auf. Der Volumenkörper 16a besteht zumindest teilweise aus einem geschäumten Material. Der Volumenkörper 16a besteht vollständig aus einem geschäumten Material. Das geschäumte Material wird aus einem expandierbaren Granulat hergestellt. Das geschäumte Material kann aus einer Hartkomponente hergestellt sein, sodass insbesondere ein harter Schaum entsteht. Das geschäumte Material kann beispielsweise aus expandiertem Polystyrol (EPS), expandiertem Polyethylen (EPE), expandiertem Polypropylen (EPP), expandiertem Polyethylenterephthalat (EPET) und/oder expandiertem Polybutylenterephthalat (EPBT) als Grundkomponente bestehen. Grundsätzlich ist auch ein Schaum auf Basis von Cellulose oder PLA möglich.

Der Volumenkörper 16a bildet zumindest teilweise die Anwendungseinheit 12a und/oder die Griffeinheit 14a aus. Der Volumenkörper 16a bildet teilweise die Griffeinheit 14a aus. Der Volumenkörper 16a bildet eine Außenhülle eines Griffbereichs der Griffeinheit 14a aus. Der Volumenkörper 16a weist beispielhaft eine kreiszylindrische Grundform auf, wobei sich eine Mittelachse entlang der Längsachse 38a des Hygienemittels 10a erstreckt. Der Volumenkörper 16a ist hohlzylindrisch ausgebildet. Es sind jedoch auch andere, einem Fachmann als sinnvoll erscheinende Formen denkbar.

Ferner weist das Hygienemittel 10a einen mit dem Volumenkörper 16a verbundenen Grundkörper 18a auf. Der Grundkörper 18a besteht zumindest teilweise aus einer Hartkomponente. Der Grundkörper 18a besteht vollständig aus einer Hartkomponente. Der Grundkörper 18a ist einteilig ausgebildet. Als Hartkomponente kommen beispielsweise Styrolpolymerisate wie Styrolacrylnitril (SAN), Polystyrol (PS), Acrylnitrylbutadienstryrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephthalat (PET), insbesondere in Form von säuremodifiziertem Polyethylenterephthalat (PETA), glykolmodifiziertem Polyethylenterephthalat (PETG), Polybutylenterephthalat (PBT), säuremodifiziertes Polycyclohexylendimethylenterephthalat (PCT-A), glykolmodifiziertes Polycyclohexylendimethylenterephthalat (PCT-G) oder dergleichen infrage.

Der Grundkörper 18a bildet zumindest teilweise die Anwendungseinheit 12a und/oder die Griffeinheit 14a aus. Der Grundkörper 18a bildet die Anwendungseinheit 12a aus. Der Grundkörper 18a bildet die Anwendungseinheit 12a vollständig aus. Es wäre jedoch auch denkbar, dass an der Anwendungseinheit 12a zusätzlich Elemente aus einer Weichkomponente vorgesehen sind. Der Grundkörper 18a bildet ferner teilweise die Griffeinheit 14a aus. Der Grundkörper 18a bildet einen Kern der Griffeinheit 14a aus. Der Grundkörper 18a weist in einem Bereich der Griffeinheit 14a eine zumindest annähernd zylindrische Grundform auf. Der Grundkörper 18a erstreckt sich entlang der Längsachse 38a entlang des gesamten Hygienemittels 10a. Der Grundkörper 18a weist an einem hinteren Ende des Hygienemittels 10a ein abgerundetes Ende auf.

Der Volumenkörper 16a ist an den Grundkörper 18a angeformt. Der Volumenkörper 16a ist direkt an dem Grundkörper 18a in einem Schäumverfahren hergestellt. Der Grundkörper 18a ist in einem Spritzgussverfahren hergestellt, wobei der Grundkörper 18a mit dem Volumenkörper 16a umschäumt wird. Der Volumenkörper 16a umschließt den Grundkörper 18a zumindest teilweise. Der Volumenkörper 16a umschließt den Grundkörper 18a in einem Bereich der Griffeinheit 14a. Der Volumenkörper 16a umschließt den Grundkörper 18a in zumindest einer Ebene senkrecht zu der Längsachse 38a vollständig.

Der Grundkörper 18a und der Volumenkörper 16a bilden einen Formschluss aus. Der Grundkörper 18a weist zumindest ein Formschlusselement 20a, 22a, 24a auf, welches mit dem Volumenkörper 16a einen Formschluss ausbildet. Der Grundkörper 18a weist mehrere Formschlusselemente 20a, 22a, 24a auf. Ein erstes Formschlusselement 20a des Grundkörpers 18a ist als eine Disk ausgebildet. Das erste Formschlusselement 20a ist von einem Ring gebildet, welcher sich vollständig um eine Grundform des Grundkörpers 18a erstreckt. Das erste Formschlusselement 20a ist in einer Ebene senkrecht zu der Längsachse 38a angeordnet. Das erste Formschlusselement 20a weist in einer Ebene parallel zu der Längsachse 38a betrachtet einen rechteckigen Querschnitt auf. Der Grundkörper 18a weist beispielhaft zwei erste Formschlusselemente 20a auf, welche beabstandet zueinander angeordnet sind. Ein zweites Formschlusselement 22a des Grundkörpers 18a bildet eine umlaufende Nut aus. Die Nut des zweiten Formschlusselements 22a erstreckt sich in einer Ebene senkrecht zu der Längsachse 38a vollständig um den Grundkörper 18a. Die Nut des zweiten Formschlusselements 22a ist ringförmig ausgebildet und weist beispielhaft einen rechteckigen Querschnitt auf. Es sind jedoch auch andere, einem Fachmann als sinnvoll erscheinende Formen des zweiten Formschlusselements 22a denkbar. Ein drittes Formschlusselement 24a des Grundkörpers 18a bildet einen Durchbruch durch den Grundkörper 18a aus. Der Durchbruch des dritten Formschlusselements 24a erstreckt sich senkrecht zu der Längsachse 38a durch den Grundkörper 18a. Der Durchbruch des dritten Formschlusselements 24a weist einen runden Querschnitt auf. Der Durchbruch des dritten Formschlusselements 24a erstreckt sich vollständig durch eine Grundform des Grundkörpers 18a. Grundsätzlich wäre jedoch auch eine andere, einem Fachmann als sinnvoll erscheinende Ausgestaltung der Formschlusselemente 20a, 22a, 24a denkbar. Die Formschlusselemente 20a, 22a, 24a bilden jeweils einen Fortsatz und/oder eine Ausnehmung aus, welche/welches sich senkrecht zu der Haupterstreckungsrichtung 42a des Hygienemittels 10a erstreckt, und zu einer formschlüssigen Fixierung des Volumenkörpers 16a parallel zu der Haupterstreckungsrichtung 42a des Hygienemittels 10a vorgesehen ist. Insbesondere befinden sich die Formschlusselemente 20a, 22a, 24a und der Volumenkörper 16a in einem geometrischen Eingriff miteinander. Die ersten Formschlusselemente 20a erstrecken sich teilweise in den Volumenkörper 16a. Ferner erstreckt sich der Volumenkörper 16a in die Nut des zweiten Formschlusselements 22a und durch den Durchbruch des dritten Formschlusselements 24a. Das zweite Formschlusselement 22a und das dritte Formschlusselement 24a sind entlang der Längsachse 38a zwischen den ersten Formschlusselementen 20a angeordnet. Der Grundkörper 18a kann so vollständig 360° umschäumt werden, wobei die ersten Formschlusselemente 20a und das zweite Formschlusselement 22a eine Fixierung in Längsrichtung ermöglichen. Das dritte Formschlusselement 24a an dem Grundkörper 18a realisiert eine Fixierung der Drehung des Volumenkörpers 16a auf dem Grundkörper 18a und gleichzeitig auch eine Fixierung in Längsrichtung.

Das Hygienemittel 10a ist in einem Verfahren hergestellt. In dem Verfahren wird der Grundkörper 18a mittels Spritzgießen hergestellt. Anschließend wird in einem Verfahrensschritt der Volumenkörper 16a mittels eines Schaumverfahrens, insbesondere mittels eines Partikelschaum-Verfahrens, direkt an den Grundkörper 18a angeformt. Dazu wird der Grundkörper 18a in ein Schäumwerkzeug eingelegt und der Grundkörper 18a wird mit dem geschäumten Material für den Volumenkörper 16a umschäumt. Der Volumenkörper 16a wird dabei um den Grundkörper 18a herum hergestellt. Der Volumenkörper 16a bildet direkt bei einer Produktion einen Formschluss mit dem Grundkörper 18a aus. Bei dem Partikelschaum-Verfahren wird insbesondere expandierbarer Kunststoff eingesetzt. In einem ersten Schritt des Partikelschaum-Verfahrens wird das Rohmaterial des Volumenkörpers 16a in Form von Perlen und/oder Kügelchen in eine Form gegeben, in welcher bereits der Grundkörper 18a eingelegt ist. Durch verschiedene kleine Öffnungen im Werkzeug bzw. in der Kavität wird anschließend Wasserdampf unter Druck und hoher Temperatur eingespritzt. Diese Wärmeeinleitung führt zur Ausdehnung und Sinterung der Perlen, die sich an ihren Oberflächen verbinden. Im Anschluss wird der Wassergehalt vorzugsweise reduziert werden, beispielsweise in einem Temperofen. Im Detail wird bei dem Partikelschaum-Verfahren insbesondere in einem ersten Verfahrensschritt das Granulat in einem Druckbeladungsbehälter und/oder Druckfüllgerät bereitgestellt. Anschließend wird in einem zweiten Verfahrensschritt eine Schäumform geschlossen. Die Schäumform definiert insbesondere eine Form des Volumenkörpers 16a. Darauffolgend wird in einem dritten Verfahrensschritt die Schäumform gefüllt. Der Druck bei der Materialeinbringung beträgt insbesondere von 0,5 bar bis 3 bar, vorzugsweise von 1 bar bis 2 bar. In einem weiteren Verfahrensschritt wird die Schäumform gegebenenfalls, insbesondere mittels eines Vakuums, entlüftet. Anschließend wird der Inhalt der Schäumform in einem weiteren Verfahrensschritt insbesondere bedampft. Ein Dampfdruck beträgt insbesondere bis 40 bar, vorzugsweise bis 25 bar und besonders bevorzugt unter 5 bar. Der Dampfdruck und die Dampftemperatur hängen insbesondere zusammen, da höhere Temperaturen höhere Drücke bringen. Die Dampftemperatur beträgt insbesondere bis 250°C, vorzugsweise bis 170°C und besonders bevorzugt bis 150°C. Die Dampftemperatur beträgt ferner insbesondere mindestens 80°C. Die Dauer der Bedampfung beträgt insbesondere von 20 s bis 50 s, vorzugweise von 25 s bis 40 s. Hierbei wird insbesondere das Granulat bzw. die Perlen verschweißt. Eine Materialexpandierung beträgt insbesondere das 20-fache bis 100-fache, vorzugsweise das 40-fache bis 80-fache, des ursprünglichen Volumens. Optional kann dies insbesondere mit Vakuum unterstützt werden, damit Dampf besser eindringen kann. Darauffolgend wird die Schäumform gekühlt, sodass sich das Granulat stabilisiert und/oder fixiert. Das Kühlen passiert insbesondere über ein Hohlraumsystem mit Wasser (gesprühtes Wasser) über dieselben Kanäle wie der Dampfeintrag erfolgt. Anschließend wird die Schäumform in einem weiteren Verfahrensschritt geöffnet.

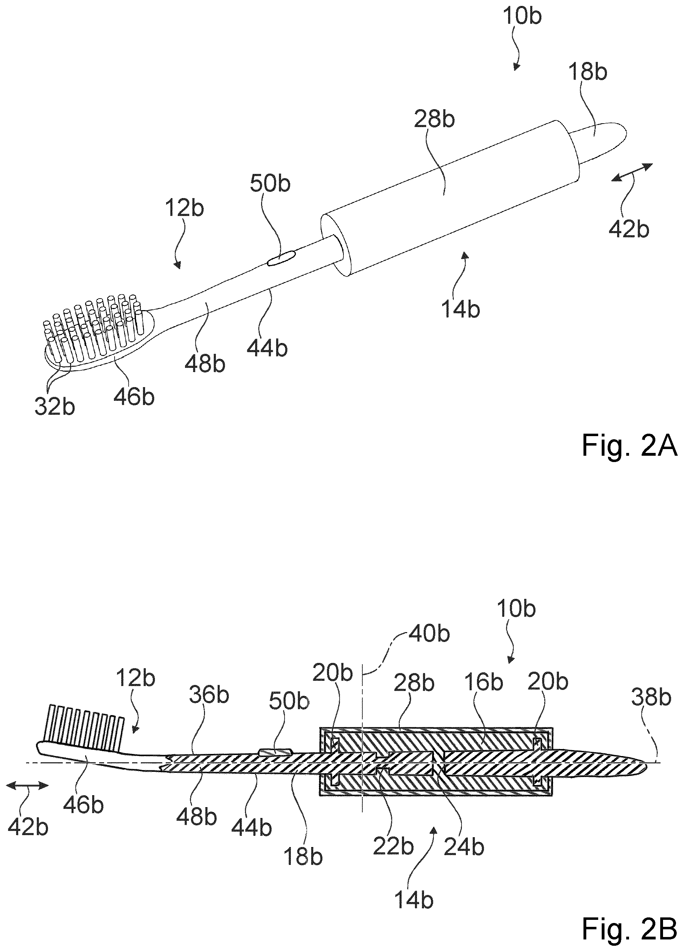

In den Figuren 2A bis 14 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1A bis 1D, verwiesen werden kann. Zur Unterscheidung der Ausführungsbeispiele ist der Buchstabe a in den Bezugszeichen des Ausführungsbeispiels der Figuren 1 bis 1D durch die Buchstaben b bis n in den Bezugszeichen der Ausführungsbeispiele der Figuren 2A bis 14 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1A bis 1D, verwiesen werden.

Die Figur 2A zeigt eine Vorderseite 36b eines Hygienemittels 10b in einer schematischen perspektivischen Darstellung. Das Hygienemittel 10b ist im vorliegenden Fall als eine Zahnbürste ausgebildet.

Das Hygienemittel 10b weist zumindest eine Anwendungseinheit 12b auf. Ferner weist das Hygienemittel 10b zumindest eine Griffeinheit 14b auf.

Das Hygienemittel 10b weist ferner einen Volumenkörper 16b auf. Der Volumenkörper 16b besteht zumindest teilweise aus einem geschäumten Material. Der Volumenkörper 16b besteht vollständig aus einem geschäumten Material. Der Volumenkörper 16b bildet teilweise die Griffeinheit 14b aus. Der Volumenkörper 16b bildet einen Griffkörper eines Griffbereichs der Griffeinheit 14b aus. Der Volumenkörper 16b weist beispielhaft eine kreiszylindrische Grundform auf, wobei sich eine Mittelachse entlang einer Längsachse 38b des Hygienemittels 10b erstreckt. Der Volumenkörper 16b ist hohlzylindrisch ausgebildet. Es sind jedoch auch andere, einem Fachmann als sinnvoll erscheinende Formen denkbar.

Ferner weist das Hygienemittel 10b einen mit dem Volumenkörper 16b verbundenen Grundkörper 18b auf. Der Grundkörper 18b besteht zumindest teilweise aus einer Hartkomponente. Der Grundkörper 18b besteht vollständig aus einer Hartkomponente. Der Grundkörper 18b ist einteilig ausgebildet. Der Grundkörper 18b bildet die Anwendungseinheit 12b aus. Der Grundkörper 18b bildet die Anwendungseinheit 12b vollständig aus. Der Grundkörper 18b bildet ferner teilweise die Griffeinheit 14b aus. Der Grundkörper 18b bildet einen Kern der Griffeinheit 14b aus. Der Grundkörper 18b weist in einem Bereich der Griffeinheit 14b eine zumindest annähernd zylindrische Grundform auf. Der Grundkörper 18b erstreckt sich entlang der Längsachse 38b entlang des gesamten Hygienemittels 10b. Der Grundkörper 18b weist an einem hinteren Ende des Hygienemittels 10b ein abgerundetes Ende auf.

Der Volumenkörper 16b ist an den Grundkörper 18b angeformt. Der Volumenkörper 16b ist direkt an dem Grundkörper 18b in einem Schäumverfahren hergestellt. Der Grundkörper 18b ist in einem Spritzgussverfahren hergestellt, wobei der Grundkörper 18b mit dem Volumenkörper 16b umschäumt wird. Der Volumenkörper 16b umschließt den Grundkörper 18b zumindest teilweise. Der Volumenkörper 16b umschließt den Grundkörper 18b in einem Bereich der Griffeinheit 14b. Der Volumenkörper 16b umschließt den Grundkörper 18b in zumindest einer Ebene senkrecht zu der Längsachse 38b vollständig.

Der Grundkörper 18b und der Volumenkörper 16b bilden einen Formschluss aus. Der Grundkörper 18b weist zumindest ein Formschlusselement 20b, 22b, 24b auf, welches mit dem Volumenkörper 16b einen Formschluss ausbildet. Der Grundkörper 18b weist mehrere Formschlusselemente 20b, 22b, 24b auf.

Des Weiteren weist das Hygienemittel 10b einen, den zumindest einen Volumenkörper 16b umschließenden Hüllkörper 28b auf. Der Hüllkörper 28b ist stoffschlüssig mit dem Volumenkörper 16b verbunden. Der Hüllkörper 28b geht bei einer Herstellung einen Formschluss und/oder Stoffschluss mit dem Volumenkörper 16b ein. Der Hüllkörper 28b bildet zumindest teilweise eine Außenhülle des Hygienemittels 10b aus. Der Hüllkörper 28b umschließt den Volumenkörper 16b vollständig. Ferner erstreckt sich der Hüllkörper 28b direkt an den Grundkörper 18b. Der Hüllkörper 28b ist als dünne Schicht auf dem Volumenkörper 16b ausgebildet. Der Hüllkörper 28b besteht zumindest teilweise aus einer Weichkomponente. Als Weichkomponenten kommen beispielsweise thermoplastische Styrol-Elastomere (TPE-S) wie etwa ein Styrol-Ethylen-Butylen-Styrol-Copolymer (SEBS), ein Styrol-Butadien-Styrol-Copolymer (SBS) oder dergleichen infrage. Zudem ist eine Verwendung thermoplastischer Polyurethan-Elastomere (TPE-U), thermoplastischer Polyamid-Elastomere (TPE-A), thermoplastischer Polyolefin-Elastomere (TPE-O), thermoplastischer Polyester-Elastomere (TPE-E) oder dergleichen denkbar.

Zudem weist das Hygienemittel 10b eine Daumenauflage 50b auf. Das Daumenauflage 50b ist in einem Daumengriffbereich der Griffeinheit 14a angeordnet. Die Daumenauflage 50b besteht aus einer Weichkomponente. Die Daumenauflage 50b besteht aus der gleichen Komponente wie der Hüllkörper 28b. Die Daumenauflage 50b ist an dem Grundkörper 18b angeordnet. Die Daumenauflage 50b ist stoffschlüssig mit dem Grundkörper 18b verbunden. Die Daumenauflage 50b kann zusätzlich formschlüssig mit dem Grundkörper 18b verbunden werden. Es sind verschiedene, einem Fachmann als sinnvoll erscheinende Formgebungen der Daumenauflage 50b denkbar.

Das Hygienemittel 10b ist in einem Verfahren hergestellt. In dem Verfahren wird der Grundkörper 18b mittels Spritzgießen hergestellt. Anschließend wird in einem Verfahrensschritt der Volumenkörper 16b mittels eines Schaumverfahrens, insbesondere mittels eines Partikelschaum-Verfahrens, direkt an den Grundkörper 18b angeformt. Dazu wird der Grundkörper 18b in ein Schäumwerkzeug einlegt und der Grundkörper 18b wird mit dem geschäumten Material für den Volumenkörper 16b umschäumt. Der Volumenkörper 16b wird dabei um den Grundkörper 18b herum hergestellt. Der Volumenkörper 16b bildet direkt bei einer Produktion einen Formschluss mit dem Grundkörper 18b aus. Darauffolgend wird in einem Verfahrensschritt der zumindest eine Hüllkörper 28b mittels eines Spritzgussverfahrens an den Volumenkörper 16b angeformt. Ferner wird in dem Verfahrensschritt die Daumenauflage 50b mittels eines Spritzgussverfahrens an den Grundkörper 18b angeformt. Dazu werden der Volumenkörper 16b und der Grundkörper 18b in eine Kavität eines Spritzgießwerkzeugs eingelegt. Darauffolgend wird das Spritzgießwerkzeug geschlossen und es wird eine Kunststoffkomponente des Hüllkörpers 28b an den Volumenkörper 16b und der Daumenauflage 50b an den Grundkörper 18b angespritzt. Da das Spritzgießen eine höhere Schmelztemperatur hat bzw. die Schmelze eine höhere Temperatur aufweist als die Schmelztemperatur des geschäumten Volumenkörpers 16b, passiert durch ein definiertes Aufschmelzen des geschäumten Volumenkörpers 16b eine stoffschlüssige, feste mechanische Verbindung. Der Hüllkörper 28b wird stoffschlüssig mit dem Volumenkörper 16b verbunden. Ferner wird die Daumenauflage 50b stoffschlüssig mit dem Grundkörper 18b verbunden.

Vom Ablauf her betrachtet kann das gemäß Figur 2A und 2B geschaffene Produkt auf dem Produkt aus Figur 1A bis 1D aufbauen. Das in den Figuren 1A bis 1D geschaffene Produkt ist gebrauchsfertig, kann aber durch den zusätzlichen Verfahrensschritt zu einem Produkt gemäß Figur 2A und 2B werden.

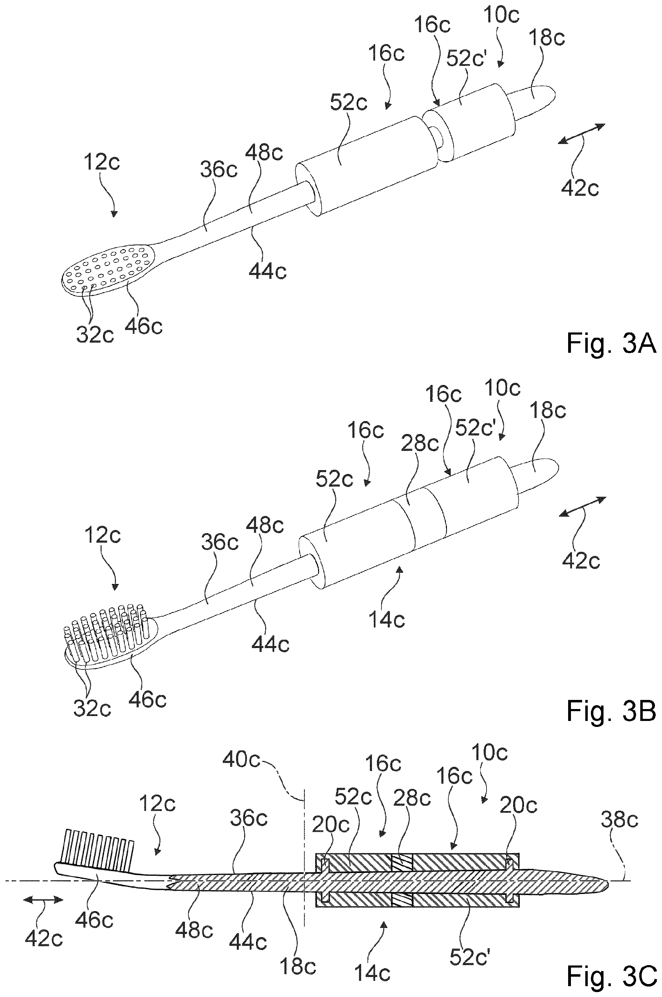

Die Figur 3A zeigt eine Vorderseite 36c eines Hygienemittels 10c in einer schematischen perspektivischen Darstellung. Das Hygienemittel 10c ist im vorliegenden Fall als eine Zahnbürste ausgebildet.

Das Hygienemittel 10c weist zumindest eine Anwendungseinheit 12c auf. Ferner weist das Hygienemittel 10c zumindest eine Griffeinheit 14c auf.

Das Hygienemittel 10c weist ferner einen Volumenkörper 16c auf. Der Volumenkörper 16c besteht zumindest teilweise aus einem geschäumten Material. Der Volumenkörper 16c besteht vollständig aus einem geschäumten Material. Der Volumenkörper 16c bildet teilweise die Griffeinheit 14c aus. Der Volumenkörper 16c bildet einen Griffkörper eines Griffbereichs der Griffeinheit 14c aus. Der Volumenkörper 16c ist zweiteilig ausgebildet und weist zwei zueinander beabstandete Teilkörper 52c, 52c' auf. Die Teilkörper 52c, 52c' des Volumenkörpers 16c weisen beispielhaft jeweils eine kreiszylindrische Grundform auf, wobei sich eine Mittelachse entlang einer Längsachse 38c des Hygienemittels 10c erstreckt. Die Teilkörper 52c, 52c' sind koaxial zueinander angeordnet. Die Teilkörper 52c, 52c' des Volumenkörpers 16c sind jeweils hohlzylindrisch ausgebildet. Es sind jedoch auch andere, einem Fachmann als sinnvoll erscheinende Formen denkbar.

Ferner weist das Hygienemittel 10c einen mit dem Volumenkörper 16c verbundenen Grundkörper 18c auf. Der Grundkörper 18c besteht zumindest teilweise aus einer Hartkomponente. Der Grundkörper 18c besteht vollständig aus einer Hartkomponente. Der Grundkörper 18c ist einteilig ausgebildet. Der Grundkörper 18c bildet die Anwendungseinheit 12c aus. Der Grundkörper 18c bildet die Anwendungseinheit 12c vollständig aus. Der Grundkörper 18c bildet ferner teilweise die Griffeinheit 14c aus. Der Grundkörper 18c bildet einen Kern der Griffeinheit 14c aus. Der Grundkörper 18c weist in einem Bereich der Griffeinheit 14c eine zumindest annähernd zylindrische Grundform auf. Der Grundkörper 18c erstreckt sich entlang der Längsachse 38c entlang des gesamten Hygienemittels 10c. Der Grundkörper 18c weist an einem hinteren Ende des Hygienemittels 10c ein abgerundetes Ende auf.

Der Volumenkörper 16c ist an den Grundkörper 18c angeformt. Der Volumenkörper 16c ist direkt an dem Grundkörper 18c in einem Schäumverfahren hergestellt. Der Grundkörper 18c ist in einem Spritzgussverfahren hergestellt, wobei der Grundkörper 18c mit dem Volumenkörper 16c umschäumt wird. Der Volumenkörper 16c umschließt den Grundkörper 18c zumindest teilweise. Der Volumenkörper 16c umschließt den Grundkörper 18c in einem Bereich der Griffeinheit 14c. Der Volumenkörper 16c umschließt den Grundkörper 18c in zumindest einer Ebene senkrecht zu der Längsachse 38c vollständig.

Der Grundkörper 18c und der Volumenkörper 16c bilden einen Formschluss aus. Der Grundkörper 18c weist zumindest ein Formschlusselement 20c auf, welches mit dem Volumenkörper 16c einen Formschluss ausbildet. Der Grundkörper 18c weist ein erstes Formschlusselement 20c auf, welches als eine Disk ausgebildet ist. Das erste Formschlusselement 20c ist von einem kreisförmigen Ring gebildet, welcher sich vollständig um eine Grundform des Grundkörpers 18c erstreckt. Das erste Formschlusselement 20c ist in einer Ebene senkrecht zu der Längsachse 38c angeordnet. Das erste Formschlusselement 20c weist in einer Ebene parallel zu der Längsachse 38c betrachtet einen rechteckigen Querschnitt auf. Der Grundkörper 18c weist beispielhaft zwei erste Formschlusselemente 20c auf, welche beabstandet zueinander angeordnet sind. Der Grundkörper 18c weist beispielhaft zwei erste Formschlusselemente 20c auf, welche voneinander beabstandet je in einem Teilkörper 52c, 52c' des Volumenkörpers 16c angeordnet sind. Die Teilkörper 52c, 52c' können aus verschiedenem geschäumtem Material hergestellt werden.

Des Weiteren weist das Hygienemittel 10c einen, den zumindest einen Volumenkörper 16c teilweise durchdringenden Hüllkörper 28c auf. Der Hüllkörper 28c ist mindestens teilweise stoffschlüssig mit dem Volumenkörper 16c verbunden. Der Hüllkörper 28c geht bei einer Herstellung einen Stoffschluss mit dem Volumenkörper 16c ein. Der Hüllkörper 28c bildet teilweise eine Außenhülle des Hygienemittels 10c aus. Der Hüllkörper 28c ist zwischen den Teilkörpern 52c, 52c' des Volumenkörpers 16c angeordnet. Der Hüllkörper 28c verbindet die Teilkörper 52c, 52c'. Ferner erstreckt sich der Hüllkörper 28c direkt an den Grundkörper 18c. Der Hüllkörper 28c besteht aus einer Weichkomponente. Der Hüllkörper 28c ist mindestens teilweise stoffschlüssig mit dem Grundkörper 18c verbunden.

Das Hygienemittel 10c ist in einem Verfahren hergestellt. In dem Verfahren wird der Grundkörper 18c mittels Spritzgießen hergestellt. Anschließend wird in einem Verfahrensschritt der Volumenkörper 16c mittels eines Schaumverfahrens, insbesondere mittels eines Partikelschaum-Verfahrens, direkt an den Grundkörper 18c angeformt. Dazu wird der Grundkörper 18c in ein Schäumwerkzeug einlegt und der Grundkörper 18c wird mit dem geschäumten Material für den Volumenkörper 16c umschäumt. Der Volumenkörper 16c wird dabei um den Grundkörper 18c herum hergestellt. Der Volumenkörper 16c bildet direkt bei einer Produktion einen Formschluss mit dem Grundkörper 18c aus. Darauffolgend wird in einem Verfahrensschritt der zumindest eine Hüllkörper 28c mittels eines Spritzgussverfahrens an den Volumenkörper 16c angeformt. Dazu werden der Volumenkörper 16c und der Grundkörper 18c in eine Kavität eines Spritzgießwerkzeugs eingelegt. Darauffolgend wird das Spritzgießwerkzeug geschlossen und es wird eine Kunststoffkomponente des Hüllkörpers 28c an den Volumenkörper 16c und den Grundkörper 18c angespritzt. Der Hüllkörper 28c wird mindestens teilweise stoffschlüssig mit dem Volumenkörper 16c verbunden. Der Hüllkörper 28c ist mindestens teilweise stoffschlüssig mit dem Grundkörper 18c verbunden.

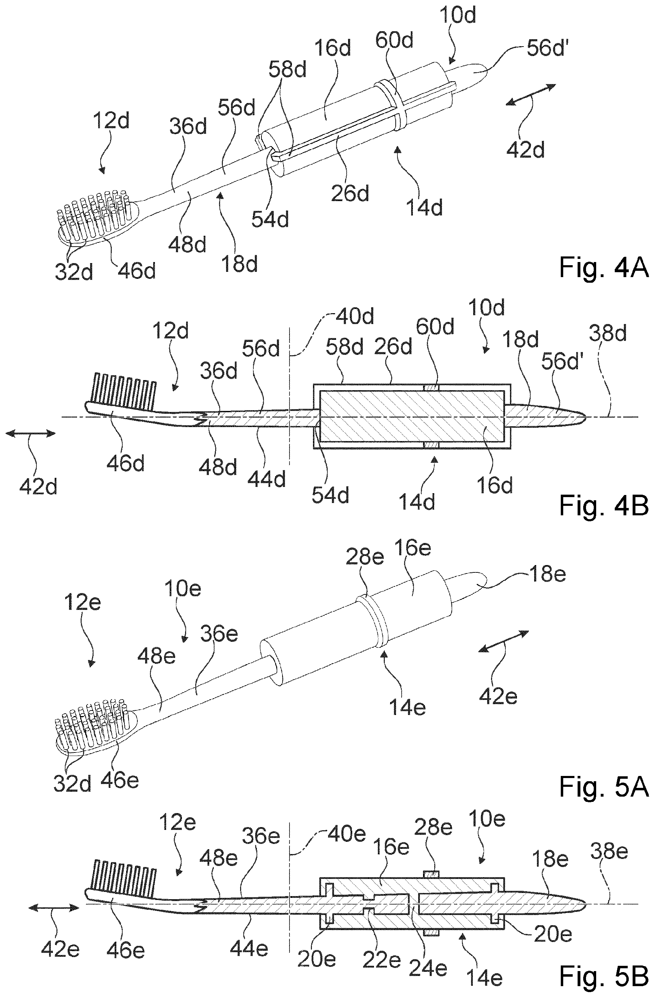

Die Figur 4A zeigt eine Vorderseite 36d eines Hygienemittels 10d in einer schematischen perspektivischen Darstellung. Das Hygienemittel 10d ist im vorliegenden Fall als eine Zahnbürste ausgebildet.

Das Hygienemittel 10d weist zumindest eine Anwendungseinheit 12d auf. Ferner weist das Hygienemittel 10d zumindest eine Griffeinheit 14d auf.

Das Hygienemittel 10d weist ferner einen Volumenkörper 16d auf. Der Volumenkörper 16d besteht zumindest teilweise aus einem geschäumten Material. Der Volumenkörper 16d besteht vollständig aus einem geschäumten Material. Der Volumenkörper 16d bildet teilweise die Griffeinheit 14d aus. Der Volumenkörper 16d bildet einen Griffkörper eines Griffbereichs der Griffeinheit 14d aus. Der Volumenkörper 16d weist beispielhaft eine kreiszylindrische Grundform auf, wobei sich eine Mittelachse entlang einer Längsachse 38d des Hygienemittels 10d erstreckt. Der Volumenkörper 16d ist kreiszylindrisch ausgebildet. Es sind jedoch auch andere, einem Fachmann als sinnvoll erscheinende Formen denkbar.

Ferner weist das Hygienemittel 10d einen mit dem Volumenkörper 16d verbundenen Grundkörper 18d auf. Der Grundkörper 18d besteht zumindest teilweise aus einer Hartkomponente. Der Grundkörper 18d besteht vollständig aus einer Hartkomponente. Der Grundkörper 18d ist einteilig ausgebildet. Der Grundkörper 18d bildet die Anwendungseinheit 12d aus. Der Grundkörper 18d bildet die Anwendungseinheit 12d vollständig aus. Der Grundkörper 18d bildet ferner teilweise die Griffeinheit 14d aus. Der Grundkörper 18d weist in einem Griffbereich der Griffeinheit 14d eine Aussparung 54d auf. Die Aussparung 54d erstreckt sich über den gesamten Griffbereich der Griffeinheit 14d. Die Aussparung 54d dient zu einer Aufnahme des Volumenkörpers 16d. Die Aussparung 54d trennt den Grundkörper 18d in zwei Teilgrundkörper 56d, 56d'. Der Grundkörper 18d weist in einem Bereich der Griffeinheit 14d eine zumindest annähernd zylindrische Grundform auf. Der Grundkörper 18d weist an einem hinteren Ende des Hygienemittels 10d ein abgerundetes Ende auf.

Der Volumenkörper 16d ist an den Grundkörper 18d angeformt. Der Volumenkörper 16d ist direkt an dem Grundkörper 18d in einem Schäumverfahren hergestellt. Der Volumenkörper 16d ist in die Aussparung 54d des Grundkörpers 18d eingebracht. Der Grundkörper 18d ist in einem Spritzgussverfahren hergestellt, wobei die Aussparung 54d des Grundkörpers 18d mit dem Volumenkörper 16d ausgeschäumt wird.

Die Griffeinheit 14d weist ferner ein Käfigelement 26d auf, welches den Volumenkörper 16d zumindest teilweise umgreift. Das Käfigelement 26d bildet eine Gitterstruktur um den Volumenkörper 16d aus. Das Käfigelement 26d erstreckt sich entlang der Längsachse 38d vollständig über den Volumenkörper 16d hinweg. Das Käfigelement 26d weist drei in Umfangsrichtungen verteilt angeordnete Längsstege 58d auf, welche sich um den Volumenkörper 16d erstrecken. Ferner weist das Käfigelement 26d einen Quersteg 60d auf, welcher den Volumenkörper 16d in Umfangsrichtung umschließt und die Längsstege 58d verbindet. Ferner erstreckt sich das Käfigelement 26d über die Aussparung 54d des Grundkörpers 18d hinweg. Das Käfigelement 26d verbindet die Teilgrundkörper 56d des Grundkörpers 18d miteinander. Das Käfigelement 26d ist direkt fest mit dem Grundkörper 18d verbunden. Das Käfigelement 26d ist an beiden Enden des Volumenkörpers 16d fest mit dem Grundkörper 18d verbunden. Das Käfigelement 26d ist einstückig mit dem Grundkörper 18d ausgebildet. Das Käfigelement 26d bildet zumindest teilweise eine Außenhülle des Hygienemittels 10d.

Das Hygienemittel 10d ist in einem Verfahren hergestellt. In dem Verfahren wird der Grundkörper 18d mit dem Käfigelement 26d mittels Spritzgießen hergestellt. Anschließend wird in einem Verfahrensschritt der Volumenkörper 16d mittels eines Schaumverfahrens, insbesondere mittels eines Partikelschaum-Verfahrens, direkt an den Grundkörper 18d angeformt. Die Aussparung 54d des Grundkörpers 18d wird mit dem Volumenkörper 16d ausgeschäumt. Dazu wird der Grundkörper 18d in ein Schäumwerkzeug einlegt und die Aussparung 54d des Grundkörpers 18d wird mit dem geschäumten Material für den Volumenkörper 16d ausgeschäumt.

Die Figur 5A zeigt eine Vorderseite 36e eines Hygienemittels 10e in einer schematischen perspektivischen Darstellung. Das Hygienemittel 10e ist im vorliegenden Fall als eine Zahnbürste ausgebildet.

Das Hygienemittel 10e weist zumindest eine Anwendungseinheit 12e auf. Ferner weist das Hygienemittel 10e zumindest eine Griffeinheit 14e auf.

Das Hygienemittel 10e weist ferner einen Volumenkörper 16e auf. Der Volumenkörper 16e besteht zumindest teilweise aus einem geschäumten Material. Der Volumenkörper 16e besteht vollständig aus einem geschäumten Material. Der Volumenkörper 16e bildet teilweise die Griffeinheit 14e aus. Der Volumenkörper 16e bildet einen Griffkörper eines Griffbereichs der Griffeinheit 14e aus. Der Volumenkörper 16e weist beispielhaft eine kreiszylindrische Grundform auf, wobei sich eine Mittelachse entlang einer Längsachse 38e des Hygienemittels 10e erstreckt. Der Volumenkörper 16e ist hohlzylindrisch ausgebildet. Es sind jedoch auch andere, einem Fachmann als sinnvoll erscheinende Formen denkbar.

Ferner weist das Hygienemittel 10e einen mit dem Volumenkörper 16e verbundenen Grundkörper 18e auf. Der Grundkörper 18e besteht zumindest teilweise aus einer Hartkomponente. Der Grundkörper 18e besteht vollständig aus einer Hartkomponente. Der Grundkörper 18e ist einteilig ausgebildet. Der Grundkörper 18e bildet die Anwendungseinheit 12e aus. Der Grundkörper 18e bildet die Anwendungseinheit 12e vollständig aus. Der Grundkörper 18e bildet ferner teilweise die Griffeinheit 14e aus. Der Grundkörper 18e bildet einen Kern der Griffeinheit 14e aus. Der Grundkörper 18e weist in einem Bereich der Griffeinheit 14e eine zumindest annähernd zylindrische Grundform auf. Der Grundkörper 18e erstreckt sich entlang der Längsachse 38e entlang des gesamten Hygienemittels 10e. Der Grundkörper 18e weist an einem hinteren Ende des Hygienemittels 10e ein abgerundetes Ende auf.

Der Volumenkörper 16e ist an den Grundkörper 18e angeformt. Der Volumenkörper 16e ist direkt an dem Grundkörper 18e in einem Schäumverfahren hergestellt. Der Grundkörper 18e ist in einem Spritzgussverfahren hergestellt, wobei der Grundkörper 18e mit dem Volumenkörper 16e umschäumt wird. Der Volumenkörper 16e umschließt den Grundkörper 18e zumindest teilweise. Der Volumenkörper 16e umschließt den Grundkörper 18e in einem Bereich der Griffeinheit 14e. Der Volumenkörper 16e umschließt den Grundkörper 18e in zumindest einer Ebene senkrecht zu der Längsachse 38e vollständig.

Der Grundkörper 18e und der Volumenkörper 16e bilden einen Formschluss aus. Der Grundkörper 18e weist zumindest ein Formschlusselement 20e, 22e, 24e auf, welches mit dem Volumenkörper 16e einen Formschluss ausbildet. Der Grundkörper 18e weist mehrere Formschlusselemente 20e, 22e, 24e auf.

Des Weiteren weist das Hygienemittel 10e einen, den zumindest einen Volumenkörper 16e teilweise umschließenden, Hüllkörper 28e auf. Der Hüllkörper 28e ist stoffschlüssig mit dem Volumenkörper 16e verbunden. Der Hüllkörper 28e geht bei einer Herstellung einen Stoffschluss mit dem Volumenkörper 16e ein. Der Hüllkörper 28e bildet zumindest teilweise eine Außenhülle des Hygienemittels 10e aus. Der Hüllkörper 28e ist von einem Ring gebildet, welcher den Volumenkörper 16e quer zu der Längsachse 38e umschließt. Der Hüllkörper 28e kann zusätzlich zum Stoffschluss einen Formschluss ausbilden, oder keinen Stoffschluss ausbilden und nur einen Formschluss ausbilden.

Das Hygienemittel 10e ist in einem Verfahren hergestellt. In dem Verfahren wird der Grundkörper 18e mittels Spritzgießen hergestellt. Anschließend wird in einem Verfahrensschritt der Volumenkörper 16e mittels eines Schaumverfahrens, insbesondere mittels eines Partikelschaum-Verfahrens, direkt an den Grundkörper 18e angeformt. Dazu wird der Grundkörper 18e in ein Schäumwerkzeug einlegt und der Grundkörper 18e wird mit dem geschäumten Material für den Volumenkörper 16e umschäumt. Der Volumenkörper 16e wird dabei um den Grundkörper 18e herum hergestellt. Der Volumenkörper 16e bildet direkt bei einer Produktion einen Formschluss mit dem Grundkörper 18e aus. Darauffolgend wird in einem Verfahrensschritt der zumindest eine Hüllkörper 28e mittels eines Spritzgussverfahrens an den Volumenkörper 16e angeformt. Dazu werden der Volumenkörper 16e und der Grundkörper 18e in eine Kavität eines Spritzgießwerkzeugs eingelegt. Darauffolgend wird das Spritzgießwerkzeug geschlossen und es wird eine Kunststoffkomponente des Hüllkörpers 28e an den Volumenkörper 16e angespritzt. Der Hüllkörper 28e wird stoffschlüssig mit dem Volumenkörper 16e verbunden.

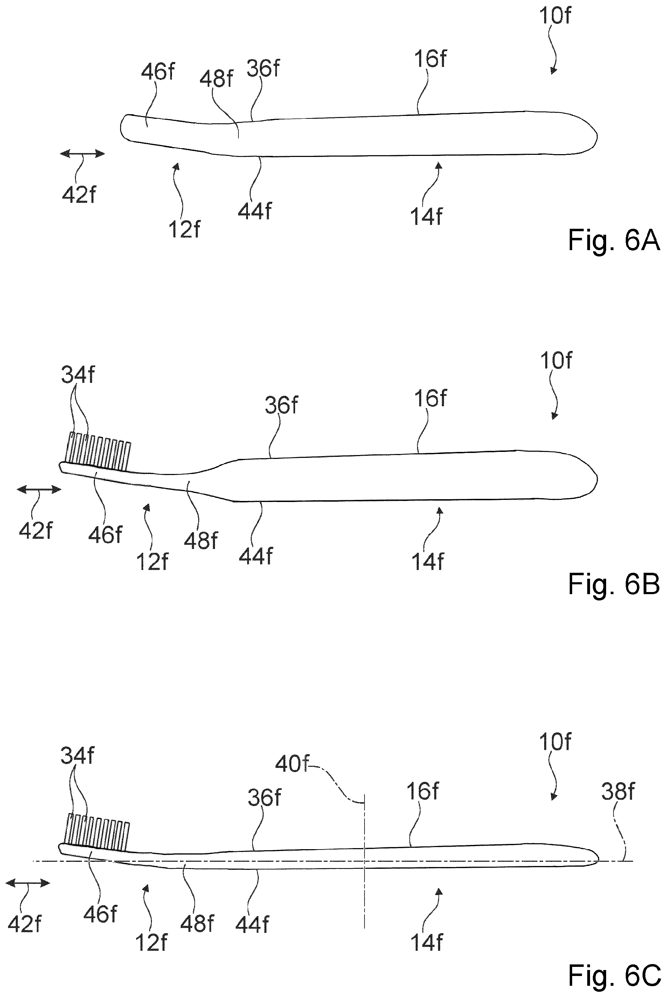

Die Figuren 6B und 6C zeigen ein Hygienemittel 10f in einer schematischen Seitenansicht. Das Hygienemittel 10f ist im vorliegenden Fall als eine Zahnbürste ausgebildet.

Das Hygienemittel 10f weist zumindest eine Anwendungseinheit 12f auf. Die zumindest eine Anwendungseinheit 12f weist einen Kopfbereich 46f auf. Der Kopfbereich 46f bildet einen Bürstenkopf des Hygienemittels 10f. Im vorliegenden Fall ist der Kopfbereich 46f als ein Zahnbürstenkopf ausgebildet. Der Kopfbereich 46f weist insbesondere einen als Borstenträger ausgebildeten Grundkörper auf. Der Grundkörper des Kopfbereichs 46f ist vollständig aus einer Hartkomponente ausgebildet. Es wäre jedoch auch denkbar, dass der Grundkörper des Kopfbereichs 46f aus einer Hartkomponente und einer Weichkomponente gebildet ist. Der Grundkörper des Kopfbereichs 46f bildet einen Borstenträger aus. Auf einer Vorderseite 36f des Kopfbereichs 46f ist zumindest eine Ausnehmung 32f ausgeformt. Die zumindest eine Ausnehmung 32f ist zur Aufnahme eines Borstenbündels 34f vorgesehen. Der Kopfbereich 46f weist eine Vielzahl von Ausnehmungen 32f auf. Die Ausnehmungen 32f sind von in einem Partikelschaum-Verfahren geformten Borstenlöchern gebildet. Als Borsten der Borstenbündel 34f kommen beliebige geeignete Borsten infrage, die, wie oben beschrieben, beispielsweise im Ankerstanz-Verfahren angestanzt sein können. Das Hygienemittel 10f weist die Borstenbündel 34f auf. Die Borstenbündel 34f sind mittels Stanzung mit der Anwendungseinheit 12f verbunden. Die Borstenbündel 34f sind mittels eines Ankerstanz-Verfahrens an der Anwendungseinheit 12f befestigt.

Ferner weist das Hygienemittel 10f zumindest eine Griffeinheit 14f auf.

Das Hygienemittel 10f weist ferner einen Volumenkörper 16f auf. Der Volumenkörper 16f besteht zumindest teilweise aus einem geschäumten Material. Der Volumenkörper 16f besteht vollständig aus einem geschäumten Material. Der Volumenkörper 16f bildet die Anwendungseinheit 12f und die Griffeinheit 14f aus. Die Anwendungseinheit 12f ist von dem Volumenkörper 16f gebildet. Die Griffeinheit 14f ist von dem Volumenkörper 16f gebildet. Der Volumenkörper 16f weist beispielhaft eine kreiszylindrische Grundform auf, wobei sich eine Mittelachse entlang einer Längsachse 38f des Hygienemittels 10f erstreckt. Es sind jedoch auch andere, einem Fachmann als sinnvoll erscheinende Formen denkbar.

Der Volumenkörper 16f ist in einem Bereich der Anwendungseinheit 12f zumindest abschnittsweise nachträglich verdichtet. Der Volumenkörper 16f ist in einem Bereich der Anwendungseinheit 12f vollständig nachträglich verdichtet. Ein geschäumtes Material des Volumenkörpers 16f ist nach einer Herstellung des Volumenkörpers 16f verdichtet. Bei dem Verdichten wird eine Dichte des Volumenkörpers 16f abschnittsweise erhöht. Der Volumenkörper 16f wird insbesondere auf ein Normalmaß der Anwendungseinheit 12f komprimiert. Ferner ist der Volumenkörper 16f in einem Bereich der Griffeinheit 14f zumindest abschnittsweise nachträglich verdichtet. Der Volumenkörper 16f ist in einem Bereich der Griffeinheit 14f vollständig nachträglich verdichtet. Das geschäumte Material des Volumenkörpers 16f ist in einem Bereich der Griffeinheit 14f nach einer Herstellung des Volumenkörpers 16f verdichtet.

Das Hygienemittel 10f ist in einem Verfahren hergestellt. In dem Verfahren wird der Volumenkörper 16f mittels eines Partikelschaum-Verfahrens hergestellt (vgl. Fig. 6A). Anschließend wird der Volumenkörper 16f zumindest abschnittsweise nach einem Formgebungsprozess verdichtet. In einem ersten Verdichtungsschritt wird der Volumenkörper 16f in einem Bereich der Anwendungseinheit 12f zumindest abschnittsweise nach einem Formgebungsprozess verdichtet (vgl. Fig. 6B). Je nach gewünschter Formgebung kann das Produkt in diesem Zustand bereits fertig hergestellt sein. In einem möglichen zweiten Verdichtungsschritt wird der Volumenkörper 16f in einem Bereich der Griffeinheit 14f zumindest abschnittsweise nach einem Formgebungsprozess verdichtet (vgl. Fig. 6C). Das Verdichten erfolgt nach dem Schäumen. Bei einem Verdichten erfolgt insbesondere eine Verformung des Volumenkörpers 16f unter Druck und Wärme mit Hilfe eines Stempels, wobei eine Stempeloberfläche insbesondere bereits mindestens ein Teil einer Endgeometrie beinhaltet. Eine Verdichtung erfolgt dabei insbesondere in zwei Schritten. In einem ersten Schritt wird der Volumenkörper 16f in eine Negativ-Form eingelegt. Anschließend wird in einem zweiten Schritt ein Stempel auf den Volumenkörper 16f angelegt und drückt den Volumenkörper 16f entsprechend in Position. Der Volumenkörper 16f wird dabei komprimiert. Die Verdichtung erfolgt hier beispielhaft in zwei Schritten, also in einem Bereich der Anwendungseinheit 12f und in einem Bereich der Griffeinheit 14f. Mit dem Verdichten erfolgt gleichzeitig ein weiteres Formen des Volumenkörpers 16f. Zusammen mit der Kopfverdichtung werden Borstenlöcher in der Anwendungseinheit 12f geformt. Dies kann insbesondere beispielsweise mittels eines geheizten Stempels mit Borstenlochstempel erfolgen. Anschließend erfolgt eine Stanzung der Borstenbündel 34f. Vorzugsweise werden hierbei die Borstenbündel 34f gefaltet und mittels zumindest eines Ankers in jeweils einem Sackloch befestigt, insbesondere mittels eines Einstanzens. Ebenso ist ein Schlingenstanzen denkbar.

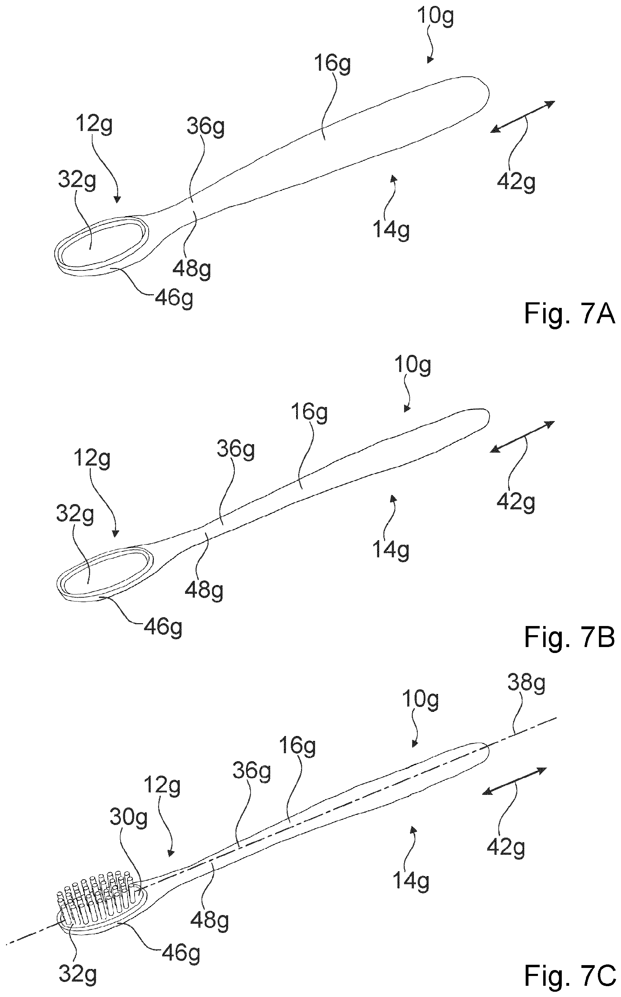

Die Figur 7C zeigt ein Hygienemittel 10g in einer schematischen Seitenansicht. Das Hygienemittel 10g ist im vorliegenden Fall als eine Zahnbürste ausgebildet.

Das Hygienemittel 10g weist zumindest eine Anwendungseinheit 12g auf. Die zumindest eine Anwendungseinheit 12g weist einen Kopfbereich 46g auf. Der Kopfbereich 46g bildet einen Bürstenkopf des Hygienemittels 10g. Im vorliegenden Fall ist der Kopfbereich 46g als ein Zahnbürstenkopf ausgebildet. Der Kopfbereich 46g weist insbesondere einen als Borstenträger ausgebildeten Grundkörper auf. Ein Grundkörper des Kopfbereichs 46g ist vollständig aus einer Hartkomponente ausgebildet. Es wäre jedoch auch denkbar, dass der Grundkörper des Kopfbereichs 46g aus einer Hartkomponente und einer Weichkomponente gebildet ist. Der Grundkörper des Kopfbereichs 46g bildet einen Borstenträger aus. Das Hygienemittel 10g weist ferner ein von dem Kopfbereich 46g aufgenommenes Borstenplättchen 30g auf, das eine Mehrzahl von Borstenbündeln umfasst. Das Borstenplättchen 30g ist beispielhaft von einem AFT-Plättchen gebildet. Auf einer Vorderseite 36g des Kopfbereichs 46g ist eine Ausnehmung 32g ausgeformt. Die Ausnehmung 32g ist zur Aufnahme des Borstenplättchens 30g vorgesehen. Das Borstenplättchen 30g ist in die Ausnehmung 32g der Anwendungseinheit 12g eingesetzt.

Ferner weist das Hygienemittel 10g zumindest eine Griffeinheit 14g auf.

Das Hygienemittel 10g weist ferner einen Volumenkörper 16g auf. Der Volumenkörper 16g besteht zumindest teilweise aus einem geschäumten Material. Der Volumenkörper 16g besteht vollständig aus einem geschäumten Material. Der Volumenkörper 16g bildet die Anwendungseinheit 12g und die Griffeinheit 14g aus. Die Anwendungseinheit 12g ist von dem Volumenkörper 16g gebildet. Die Griffeinheit 14g ist von dem Volumenkörper 16g gebildet. Der Volumenkörper 16g weist beispielhaft eine kreiszylindrische Grundform auf, wobei sich eine Mittelachse entlang einer Längsachse 38g des Hygienemittels 10g erstreckt. Es sind jedoch auch andere, einem Fachmann als sinnvoll erscheinende Formen denkbar.

Der Volumenkörper 16g ist in einem Bereich der Anwendungseinheit 12g zumindest abschnittsweise nachträglich verdichtet. Der Volumenkörper 16g ist in einem Bereich der Anwendungseinheit 12g vollständig nachträglich verdichtet. Ein geschäumtes Material des Volumenkörpers 16g ist nach einer Herstellung des Volumenkörpers 16g verdichtet. Bei dem Verdichten wird eine Dichte des Volumenkörpers 16g abschnittsweise erhöht. Der Volumenkörper 16g wird insbesondere auf ein Normalmaß der Anwendungseinheit 12g komprimiert. Ferner ist der Volumenkörper 16g in einem Bereich der Griffeinheit 14g zumindest abschnittsweise nachträglich verdichtet. Der Volumenkörper 16g ist in einem Bereich der Griffeinheit 14g vollständig nachträglich verdichtet. Das geschäumte Material des Volumenkörpers 16g ist in einem Bereich der Griffeinheit 14g nach einer Herstellung des Volumenkörpers 16g verdichtet.

Das Hygienemittel 10g ist in einem Verfahren hergestellt. In dem Verfahren wird der Volumenkörper 16g mit der Ausnehmung 32g mittels eines Partikelschaum-Verfahrens hergestellt (vgl. Fig. 7A). Anschließend wird der Volumenkörper 16g zumindest nach einem Formgebungsprozess verdichtet. In einem Verdichtungsschritt wird der Volumenkörper 16g in einem Bereich der Anwendungseinheit 12g und der Griffeinheit 14g nach einem Formgebungsprozess verdichtet (vgl. Fig. 7B). Eine Verdichtung erfolgt dabei insbesondere in zwei Schritten. In einem ersten Schritt wird der Volumenkörper 16g in eine Negativ-Form eingelegt. Anschließend wird in einem zweiten Schritt ein Stempel auf den Volumenkörper 16g angelegt und drückt den Volumenkörper 16g entsprechend in Position. Der Volumenkörper 16g wird dabei komprimiert. Anschließend wird das Borstenplättchen 30g in die Ausnehmung 32g eingesetzt und beispielsweise verschweißt.

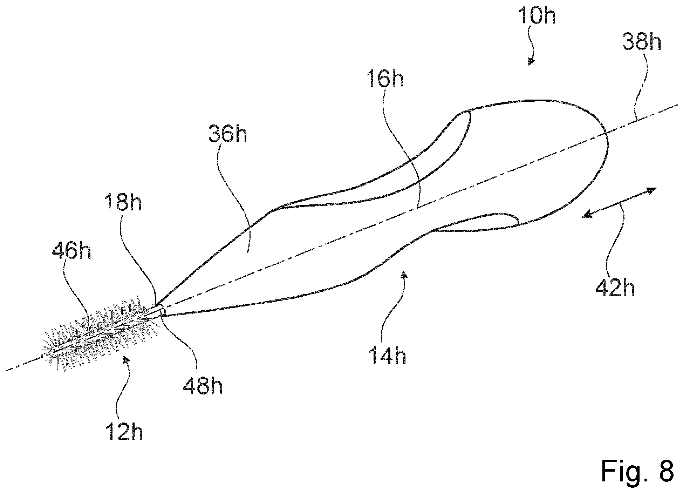

Die Figur 8 zeigt eine Vorderseite 36h eines Hygienemittels 10h in einer schematischen perspektivischen Darstellung. Das Hygienemittel 10h ist im vorliegenden Fall als eine Interdentalbürste ausgebildet.

Das Hygienemittel 10h weist zumindest eine Anwendungseinheit 12h auf. Ferner weist das Hygienemittel 10h zumindest eine Griffeinheit 14h auf.

Die zumindest eine Anwendungseinheit 12h weist einen Kopfbereich 46h auf. Der Kopfbereich 46h bildet einen Interdentalbürstenkopf des Hygienemittels 10h. Der Kopfbereich 46h weist insbesondere einen als Borstenträger ausgebildeten Grundkörper auf.

Das Hygienemittel 10h weist ferner einen Volumenkörper 16h auf. Der Volumenkörper 16h besteht zumindest teilweise aus einem geschäumten Material. Der Volumenkörper 16h besteht vollständig aus einem geschäumten Material.

Der Volumenkörper 16h bildet zumindest teilweise die Anwendungseinheit 12h und/oder die Griffeinheit 14h aus. Der Volumenkörper 16h bildet die Griffeinheit 14h vollständig aus. Der Volumenkörper 16h weist beispielhaft eine tropfenförmige Grundform auf, wobei sich eine Mittelachse entlang einer Längsachse 38h des Hygienemittels 10h erstreckt. Ferner weist der Volumenkörper 16h Fingereinbuchtungen auf. Es sind jedoch auch andere, einem Fachmann als sinnvoll erscheinende Formen denkbar.

Ferner weist das Hygienemittel 10h einen mit dem Volumenkörper 16h verbundenen Grundkörper 18h auf. Der Grundkörper 18h besteht zumindest teilweise aus einer Hartkomponente und/oder einem Metall. Der Grundkörper 18h bildet zumindest teilweise die Anwendungseinheit 12h aus. Der Grundkörper 18h bildet den Grundkörper des Kopfbereichs 46h der Anwendungseinheit 12h aus.

Der Volumenkörper 16h ist an den Grundkörper 18h angeformt. Der Grundkörper 18h und der Volumenkörper 16h bilden einen Formschluss aus. Der Grundkörper 18h greift teilweise in den Volumenkörper 16h ein.

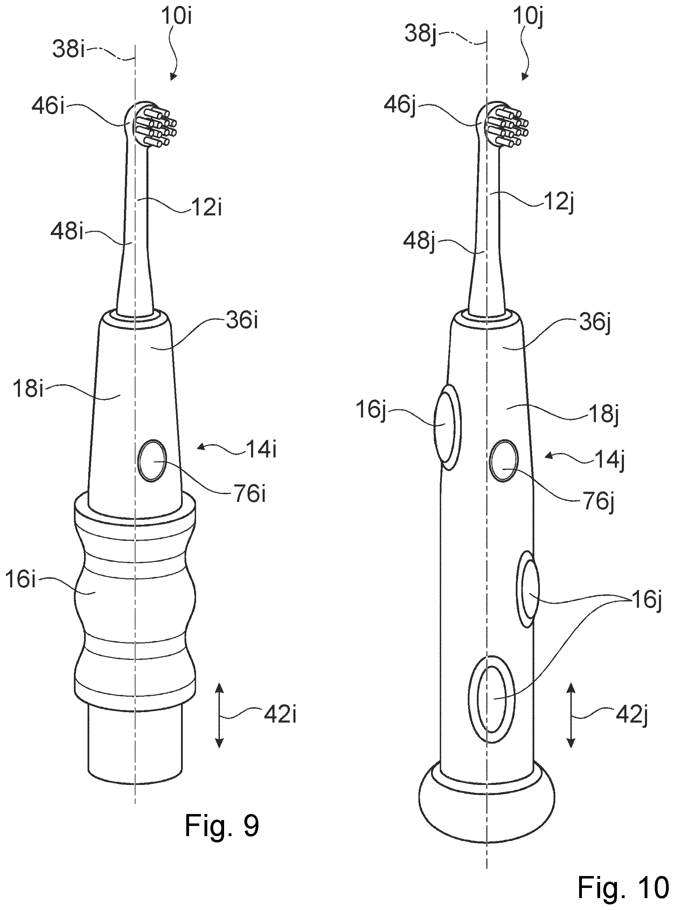

Die Figur 9 zeigt eine Vorderseite 36i eines Hygienemittels 10i in einer schematischen perspektivischen Darstellung. Das Hygienemittel 10i ist im vorliegenden Fall als eine elektrische Zahnbürste ausgebildet.

Das Hygienemittel 10i weist zumindest eine Anwendungseinheit 12i auf. Ferner weist das Hygienemittel 10i zumindest eine Griffeinheit 14i auf. Die Griffeinheit 14i ist von einem elektrischen Bürstenhandteil gebildet.

Die zumindest eine Anwendungseinheit 12i ist von einer Aufsteckbürste gebildet. Die Anwendungseinheit 12i ist an der Oberseite des Hygienemittels 10i angeordnet. Die Anwendungseinheit 12i bildet einen obersten Punkt des Hygienemittels 10i.

Das Hygienemittel 10i weist ferner einen Volumenkörper 16i auf. Der Volumenkörper 16i besteht zumindest teilweise aus einem geschäumten Material. Der Volumenkörper 16i besteht vollständig aus einem geschäumten Material. Der Volumenkörper 16i bildet zumindest teilweise die Anwendungseinheit 12i und/oder die Griffeinheit 14i aus. Der Volumenkörper 16i bildet teilweise die Griffeinheit 14i aus. Der Volumenkörper 16i bildet eine Außenhülle eines Griffbereichs der Griffeinheit 14i aus. Der Volumenkörper 16i weist beispielhaft eine kreiszylindrische Grundform auf, wobei sich eine Mittelachse entlang einer Längsachse 38i des Hygienemittels 10i erstreckt. Der Volumenkörper 16i ist hohlzylindrisch ausgebildet. Es sind jedoch auch andere, einem Fachmann als sinnvoll erscheinende Formen denkbar.

Ferner weist das Hygienemittel 10i einen mit dem Volumenkörper 16i verbundenen Grundkörper 18i auf. Der Grundkörper 18i besteht zumindest teilweise aus einer Hartkomponente. Der Grundkörper 18i bildet zumindest teilweise die Anwendungseinheit 12i und/oder die Griffeinheit 14i aus. Der Grundkörper 18i bildet teilweise die Griffeinheit 14i aus. Der Grundkörper 18i bildet ein Gehäuse der Griffeinheit 14i aus. Der Grundkörper 18i weist eine zumindest annähernd zylindrische Grundform auf. Der Grundkörper 18i bildet ein zylindrisches Gehäuse der Griffeinheit 14i aus. Das Gehäuse dient zu einer Aufnahme eines Antriebs sowie eines Energiespeichers der Griffeinheit 14i. Der Grundkörper 18i erstreckt sich entlang der Längsachse 38i entlang der gesamten Griffeinheit 14i. Der Grundkörper 18i besteht mindestens teilweise aus einer Weichkomponente. Die Weichkomponente bildet vorzugsweise die Gehäusepartie 76i im Bereich der Ein-/Aus-Schalters aus.

Der Volumenkörper 16i ist an den Grundkörper 18i angeformt. Der Volumenkörper 16i ist direkt an dem Grundkörper 18i in einem Schäumverfahren hergestellt. Der Grundkörper 18i ist in einem Spritzgussverfahren hergestellt, wobei der Grundkörper 18i mit dem Volumenkörper 16i umschäumt wird. Der Volumenkörper 16i umschließt den Grundkörper 18i zumindest teilweise. Der Volumenkörper 16i umschließt den Grundkörper 18i in einem Bereich der Griffeinheit 14i. Der Volumenkörper 16i umschließt den Grundkörper 18i in zumindest einer Ebene senkrecht zu der Längsachse 38i vollständig. Der Volumenkörper 16i bildet einen Ring aus. Der Grundkörper 18i und der Volumenkörper 16i bilden einen Formschluss aus.

Die Figur 10 zeigt eine Vorderseite 36j eines Hygienemittels 10j in einer schematischen perspektivischen Darstellung. Das Hygienemittel 10j ist im vorliegenden Fall als eine elektrische Zahnbürste ausgebildet.

Das Hygienemittel 10j weist zumindest eine Anwendungseinheit 12j auf. Ferner weist das Hygienemittel 10j zumindest eine Griffeinheit 14j auf. Die Griffeinheit 14j ist von einem elektrischen Bürstenhandteil gebildet.

Die zumindest eine Anwendungseinheit 12j ist von einer Aufsteckbürste gebildet. Die Anwendungseinheit 12j ist an der Oberseite des Hygienemittels 10j angeordnet. Die Anwendungseinheit 12j bildet einen obersten Punkt des Hygienemittels 10j.

Das Hygienemittel 10j weist ferner einen Volumenkörper 16j auf. Der Volumenkörper 16j besteht zumindest teilweise aus einem geschäumten Material. Der Volumenkörper 16j besteht vollständig aus einem geschäumten Material. Der Volumenkörper 16j bildet zumindest teilweise die Anwendungseinheit 12j und/oder die Griffeinheit 14j aus. Der Volumenkörper 16j bildet teilweise die Griffeinheit 14j aus. Der Volumenkörper 16j bildet eine Außenhülle eines Griffbereichs der Griffeinheit 14j aus. Der Volumenkörper 16j ist von mehreren voneinander beabstandeten Inseln gebildet. Die Inseln weisen beispielhaft eine ovale Form auf. Es wäre jedoch auch eine andere, einem Fachmann als sinnvoll erscheinende Form der Inseln denkbar.

Ferner weist das Hygienemittel 10j einen mit dem Volumenkörper 16j verbundenen Grundkörper 18j auf. Der Grundkörper 18j besteht zumindest teilweise aus einer Hartkomponente. Der Grundkörper 18j bildet zumindest teilweise die Anwendungseinheit 12j und/oder die Griffeinheit 14j aus. Der Grundkörper 18j bildet teilweise die Griffeinheit 14j aus. Der Grundkörper 18j bildet ein Gehäuse der Griffeinheit 14j aus. Der Grundkörper 18j weist eine zumindest annähernd zylindrische Grundform auf. Der Grundkörper 18j bildet ein zylindrisches Gehäuse der Griffeinheit 14j aus. Das Gehäuse dient zu einer Aufnahme eines Antriebs sowie eines Energiespeichers der Griffeinheit 14j. Der Grundkörper 18j erstreckt sich entlang der Längsachse 38j entlang der gesamten Griffeinheit 14j. Der Grundkörper 18j besteht mindestens teilweise aus einer Weichkomponente. Die Weichkomponente bildet vorzugsweise die Gehäusepartie 76j im Bereich des Ein-/Aus-Schalters aus.

Der Volumenkörper 16j ist an den Grundkörper 18j angeformt. Der Volumenkörper 16j ist direkt an dem Grundkörper 18j in einem Schäumverfahren hergestellt. Der Grundkörper 18j ist in einem Spritzgussverfahren hergestellt, wobei der Volumenkörper 16j an den Grundkörper 18j angeschäumt wird. Der Grundkörper 18j und der Volumenkörper 16j bilden einen Formschluss aus.

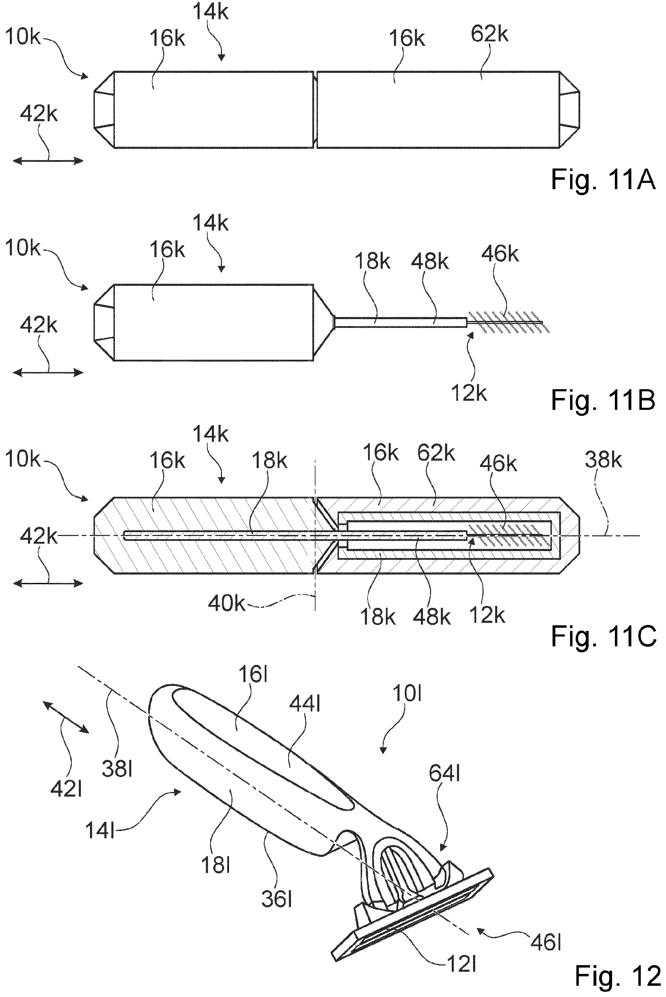

Die Figur 11A zeigt ein Hygienemittel 10k in einer schematischen Seitenansicht. Das Hygienemittel 10k ist im vorliegenden Fall als ein Mascara ausgebildet.

Das Hygienemittel 10k weist zumindest eine Anwendungseinheit 12k auf. Ferner weist das Hygienemittel 10k zumindest eine Griffeinheit 14k auf. Des Weiteren weist das Hygienemittel 10k einen Tank 62k auf. Der Tank 62k dient zu einer Speicherung einer Mascaraflüssigkeit. Ferner dient der Tank 62k insbesondere zu einem Verstauen der Anwendungseinheit 12k und zur Aufnahme eines Fluids. Vorzugsweise ist die Griffeinheit 14k über einen Schraubverschluss oder einen Steckverschluss mit dem Tank 62k verbindbar, wobei die Anwendungseinheit 12k in einem verbundenen Zustand in dem Tank 62k aufgenommen ist.

Die zumindest eine Anwendungseinheit 12k weist einen Kopfbereich 46k auf. Der Kopfbereich 46k bildet einen Mascarabürstenkopf des Hygienemittels 10k. Der Kopfbereich 46k weist insbesondere einen als Borstenträger ausgebildeten Grundkörper auf. Der Kopfbereich 46k ist vorzugsweise mindestens teilweise von einer eingedrehten Bürste gebildet.

Das Hygienemittel 10k weist ferner einen Volumenkörper 16k auf. Der Volumenkörper 16k besteht zumindest teilweise aus einem geschäumten Material. Der Volumenkörper 16k besteht vollständig aus einem geschäumten Material. Der Volumenkörper 16k bildet zumindest teilweise die Anwendungseinheit 12k und/oder die Griffeinheit 14k aus. Der Volumenkörper 16k bildet die Griffeinheit 14k vollständig aus. Der Volumenkörper 16k weist in einem Bereich der Griffeinheit 14k beispielhaft eine zylindrische Grundform auf, wobei sich eine Mittelachse entlang einer Längsachse 38k des Hygienemittels 10k erstreckt. Es sind jedoch auch andere, einem Fachmann als sinnvoll erscheinende Formen denkbar.

Ferner bildet der Volumenkörper 16k die Griffeinheit 14k vollständig aus. Der Volumenkörper 16k weist beispielhaft in einem Bereich des Tanks 62k eine hohlzylindrische Grundform auf, wobei sich eine Mittelachse entlang der Längsachse 38k des Hygienemittels 10k erstreckt. Es sind jedoch auch andere, einem Fachmann als sinnvoll erscheinende Formen denkbar.

Ferner weist das Hygienemittel 10k einen mit dem Volumenkörper 16k verbundenen Grundkörper 18k auf. Der Grundkörper 18 besteht zumindest teilweise aus einer Hartkomponente oder einem Metall. Der Grundkörper 18k bildet zumindest teilweise die Anwendungseinheit 12k aus. Der Grundkörper 18k bildet den Grundkörper des Kopfbereichs 46k der Anwendungseinheit 12k aus. Ferner bildet der Grundkörper 18k einen Innenteil des Tanks 62k aus.

Der Volumenkörper 16k ist an den Grundkörper 18k angeformt. Der Grundkörper 18k und der Volumenkörper 16k bilden einen Formschluss aus. Der Grundkörper 18k greift teilweise in den Volumenkörper 16k ein. Der Grundkörper 18k ist von dem Volumenkörper 16k umspritzt. Der die Anwendungseinheit 12k ausbildende Teil des Grundkörpers 18k ragt teilweise in den die Griffeinheit 14k ausbildenden Teil des Volumenkörpers 16k. Ferner ist der Innenteil des Tanks 62k, welcher von dem Grundkörper 18k ausgebildet ist, vollständig von dem eine Außenhülle des Tanks 62k bildenden Teil des Volumenkörpers 16k umschlossen.

Analog zur Mascara kann eine Dose für eine Creme geschaffen werden. Dazu wird im Prinzip die Anwendungseinheit der Mascara entfernt. Die Griffeinheit stellt einen Deckel der Dose dar, der auf einen Behälter aufgebracht wird. Der Behälter entspricht dem Tank, bestehend aus einem im Spritzguss-Verfahren hergestellten Grundkörper, der mit einem Volumenkörper überschäumt wird.

Die Figur 12 zeigt eine Rückseite 44l eines Hygienemittels 10l in einer schematischen perspektivischen Darstellung. Das Hygienemittel 10l ist im vorliegenden Fall als ein Rasierer ausgebildet.

Das Hygienemittel 10l weist zumindest eine Anwendungseinheit 12l auf. Ferner weist das Hygienemittel 10l zumindest eine Griffeinheit 14l auf. Die Griffeinheit 14l weist einen Kopplungsbereich 64l zu einer lösbaren Kopplung mit der Anwendungseinheit 12l auf. Die zumindest eine Anwendungseinheit 12l weist einen Kopfbereich 46l auf. Die Anwendungseinheit 12l ist von einem Rasierklingenkopf gebildet.

Das Hygienemittel 10l weist ferner einen Volumenkörper 16l auf. Der Volumenkörper 16l besteht zumindest teilweise aus einem geschäumten Material. Der Volumenkörper 16l besteht vollständig aus einem geschäumten Material. Der Volumenkörper 16l bildet zumindest teilweise die Anwendungseinheit 12l und/oder die Griffeinheit 14l aus. Der Volumenkörper 16l bildet teilweise die Griffeinheit 14l aus. Der Volumenkörper 16l bildet einen Teil der Außenhülle eines Griffbereichs der Griffeinheit 14l aus. Der Volumenkörper 16l weist beispielhaft eine kreiszylinderartige Grundform auf, wobei sich eine Mittelachse zumindest annähernd entlang einer Längsachse 38l des Hygienemittels 10l erstreckt. Es sind jedoch auch andere, einem Fachmann als sinnvoll erscheinende Formen denkbar.

Ferner weist das Hygienemittel 10l einen mit dem Volumenkörper 16l verbundenen Grundkörper 18l auf. Der Grundkörper 18l besteht zumindest teilweise aus einer Hartkomponente. Der Grundkörper 18l ist schalenartig aufgebaut. Der Grundkörper 18l hat eine Ausnehmung, an welcher ein Teil des Volumenkörpers 16l anliegt.

Der Grundkörper 18l bildet zumindest teilweise die Anwendungseinheit 12l und/oder die Griffeinheit 14l aus. Der Grundkörper 18l bildet die Anwendungseinheit 12l aus. Der Grundkörper 18l bildet teilweise die Griffeinheit 14l aus. Der Grundkörper 18l bildet einen Kern der Griffeinheit 14l aus. Der Grundkörper 18l weist in einem Bereich der Griffeinheit 14l einen annähernd U-förmigen Querschnitt auf. Ferner bildet der Grundkörper 18l den Kopplungsbereich 64l aus.

Der Volumenkörper 16l ist an den Grundkörper 18l angeformt. Der Volumenkörper 16l ist direkt an dem Grundkörper 18l in einem Schäumverfahren hergestellt. Der Grundkörper 18l ist in einem Spritzgussverfahren hergestellt, wobei der Grundkörper 18l mit dem Volumenkörper 16l umschäumt wird. Der Volumenkörper 16l umschließt den Grundkörper 18l zumindest teilweise. Der Volumenkörper 16l umschließt den Grundkörper 18l in einem Bereich der Griffeinheit 14l.

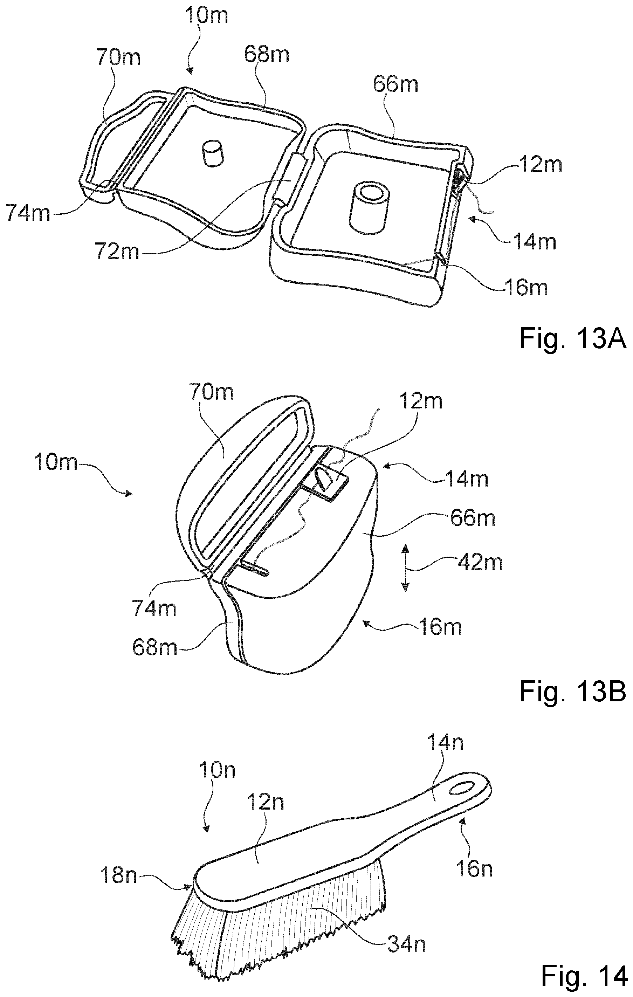

Die Figur 13A zeigt ein Hygienemittel 10m in einer schematischen perspektivischen Darstellung. Das Hygienemittel 10m ist im vorliegenden Fall als eine Zahnseidenbox ausgebildet.

Das Hygienemittel 10m weist zumindest eine Anwendungseinheit 12m auf. Die Anwendungseinheit 12m ist von einem Messer zum Schneiden der Zahnseide gebildet. Ferner weist das Hygienemittel 10m zumindest eine Griffeinheit 14m auf. Die Griffeinheit 14m ist von einem Boxgrundkörper zu Aufnahme einer Zahnseidenrolle gebildet. Die Anwendungseinheit 12m ist fest in der Griffeinheit 14m aufgenommen. Die Anwendungseinheit 12m besteht beispielhaft aus einem Metall, insbesondere einem Blech. Die Anwendungseinheit 12m kann in der Griffeinheit 14m montiert sein oder auch als Einlegeteil umschäumt sein.

Das Hygienemittel 10m weist ferner einen Volumenkörper 16m auf. Der Volumenkörper 16m besteht zumindest teilweise aus einem geschäumten Material. Der Volumenkörper 16m besteht vollständig aus einem geschäumten Material. Der Volumenkörper 16m bildet die Griffeinheit 14m aus. Die Griffeinheit 14m ist von dem Volumenkörper 16m gebildet. Der Volumenkörper 16m bildet vorzugsweise zwei Halbschalen 66m, 68m und einen Deckel 70m der Griffeinheit 14m aus. Ferner bildet der Volumenkörper 16m ein erstes Scharnier 72m aus, welches die erste Halbschale 66m mit der zweiten Halbschale 68m verbindet. Des Weiteren bildet der Volumenkörper 16m ein zweites Scharnier 74m aus, welches die zweite Halbschale 68m mit dem Deckel 70m verbindet. Die Scharniere 72m, 74m sind jeweils von einem Filmscharnier gebildet.

In der ersten wie der zweiten Halbschale 66m, 68m ist im späteren innenliegenden Teil ein vorstehendes Element ausgebildet. In der ersten Halbschale 66m ist ein Hohlzylinder angeformt, dieser hat zwei Funktionen. Zum einen wird eine Zahnseidenrolle (Spule mit Zahnseide darauf) auf ihn gelegt, sodass er als Drehzentrum dient. Die zweite Funktion ist die Aufnahme des vorstehenden Zylinders der zweiten Halbschale 68m, die beiden Halbschalen 66m, 68m werden zusammengeklappt und der Zylinder wird in den Hohlzylinder eingeführt. Damit wird eine Fixierung der Halbschalen 66m, 68m aneinander erreicht.

Der Volumenkörper 16m ist in einem Bereich der Griffeinheit 14m abschnittsweise nachträglich verdichtet. Der Volumenkörper 16m ist in einem Bereich der Scharniere 72m, 74m verdichtet. Das geschäumte Material des Volumenkörpers 16m ist in einem Bereich der Scharniere 72m, 74m der Griffeinheit 14m nach einer Herstellung des Volumenkörpers 16m verdichtet, um die Scharniere 72m, 74m jeweils als Filmscharnier auszubilden.

Alternativ kann eine Zahnseidenbox wie heute im Spritzgussverfahren hergestellt werden und einzelne Stellen enthalten, die aus geschäumtem Material bestehen. Dabei kann eine Form ähnlich dem Gehäuse der elektrischen Zahnbürste in Figur 10 geschaffen werden, es werden nämlich einzelne Inseln aus geschäumtem Material geschaffen, die die Ergonomie des Produkts verbessern.

Die Figur 14 zeigt ein Hygienemittel 10n in einer schematischen perspektivischen Darstellung. Das Hygienemittel 10n ist im vorliegenden Fall als ein Handbesen ausgebildet.

Das Hygienemittel 10n weist zumindest eine Anwendungseinheit 12n auf. Ferner weist das Hygienemittel 10n zumindest eine Griffeinheit 14n auf.

Die zumindest eine Anwendungseinheit 12n weist einen Kopfbereich 46n auf. Der Kopfbereich 46n weist insbesondere einen als Borstenträger ausgebildeten Grundkörper auf, an dem Borstenbündel 34n befestigt sind.

Das Hygienemittel 10n weist ferner einen Volumenkörper 16n auf. Der Volumenkörper 16n besteht zumindest teilweise aus einem geschäumten Material. Der Volumenkörper 16n besteht vollständig aus einem geschäumten Material. Der Volumenkörper 16n bildet zumindest teilweise die Anwendungseinheit 12n und/oder die Griffeinheit 14n aus. Der Volumenkörper 16n bildet die Griffeinheit 14n vollständig aus. Der Volumenkörper 16n weist beispielhaft eine längliche Grundform auf, wobei sich eine Mittelachse entlang einer Längsachse 38n des Hygienemittels 10n erstreckt.

Ferner weist das Hygienemittel 10n einen mit dem Volumenkörper 16n verbundenen Grundkörper 18n auf. Der Grundkörper 18n besteht zumindest teilweise aus einer Hartkomponente. Der Grundkörper 18n bildet zumindest teilweise die Anwendungseinheit 12n aus. Der Grundkörper 18n bildet den Grundkörper des Kopfbereichs 46n der Anwendungseinheit 12n aus.

Der Volumenkörper 16n ist an den Grundkörper 18n angeformt. Der Grundkörper 18n und der Volumenkörper 16n bilden einen Formschluss aus. Der Grundkörper 18n greift teilweise in den Volumenkörper 16n ein.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

### Bezugszeichen

- 10: Hygienemittel
- 12: Anwendungseinheit
- 14: Griffeinheit
- 16: Volumenkörper
- 18: Grundkörper
- 20: Formschlusselement
- 22: Formschlusselement
- 24: Formschlusselement
- 26: Käfigelement
- 28: Hüllkörper
- 30: Borstenplättchen
- 32: Ausnehmung
- 34: Borstenbündel
- 36: Vorderseite
- 38: Längsachse
- 40: Höhenachse
- 42: Haupterstreckungsrichtung
- 44: Rückseite
- 46: Kopfbereich
- 48: Halsbereich
- 50: Daumenauflage
- 52: Teilkörper
- 54: Aussparung
- 56: Teilgrundkörper
- 58: Längssteg
- 60: Quersteg
- 62: Tank
- 64: Kopplungsbereich
- 66: Halbschale
- 68: Halbschale
- 70: Deckel
- 72: Scharnier
- 74: Scharnier
- 76: Gehäusepartie

## Patentansprüche

1. Hygienemittel, insbesondere Mundhygienemittel, mit zumindest einer Anwendungseinheit (12a; 12b; 12c; 12d; 12e; 12h; 12i; 12j; 12k; 12l; 12n), mit zumindest einer mit der Anwendungseinheit (12a; 12b; 12c; 12d; 12e; 12h; 12i; 12j; 12k; 12l; 12n) verbundenen Griffeinheit (14a; 14b; 14c; 14d; 14e; 14h; 14i; 14j; 14k; 14l; 14n), mit zumindest einem Volumenkörper (16a; 16b; 16c; 16d; 16e; 16h; 16i; 16j; 16k; 16l; 16n), welcher zumindest teilweise die Anwendungseinheit (12a; 12b; 12c; 12d; 12e; 12h; 12i; 12j; 12k; 12l; 12n) und/oder die Griffeinheit (14a; 14b; 14c; 14d; 14e; 14h; 14i; 14j; 14k; 14l; 14n) ausbildet und der zumindest teilweise aus einem geschäumten Material besteht, und mit
zumindest einem mit dem Volumenkörper (16a; 16b; 16c; 16d; 16e; 16h; 16i; 16j; 16k; 16l; 16n) verbundenen Grundkörper (18a; 18b; 18c; 18d; 18e; 18h; 18i; 18j; 18k; 18l; 18n), welcher zumindest teilweise die Anwendungseinheit (12a; 12b; 12c; 12d; 12e; 12h; 12i; 12j; 12k; 12l; 12n) und/oder die Griffeinheit (14a; 14b; 14c; 14d; 14e; 14h; 14i; 14j; 14k; 14l; 14n) ausbildet, und wobei der zumindest eine Volumenkörper (16a; 16b; 16c; 16d; 16e; 16h; 16i; 16j; 16k; 16l; 16n) an den zumindest einen Grundkörper (18a; 18b; 18c; 18d; 18e; 18h; 18i; 18j; 18k; 18l; 18n) angeformt ist, **dadurch gekennzeichnet, dass** das geschäumte Material von einem Partikelschaum aus expandierten Komponenten gebildet ist.

2. Hygienemittel nach Anspruch 1,
**dadurch gekennzeichnet, dass**
der zumindest eine Volumenkörper (16a; 16b; 16c; 16e; 16h; 16i; 16k; 16l; 16n) den zumindest einen Grundkörper (18a; 18b; 18c; 18e; 18h; 18i; 18k; 18l; 18n) zumindest teilweise umschließt.

3. Hygienemittel nach Anspruch 1 oder 2,
**dadurch gekennzeichnet, dass**
der zumindest eine Grundkörper (18a; 18b; 18c; 18e) zumindest ein Formschlusselement (20a, 22a, 24a; 20b, 22b, 24b; 20c; 20e, 22e, 24e) aufweist, welches mit dem zumindest einen Volumenkörper (16a; 16b; 16c; 16e) einen Formschluss ausbildet.

4. Hygienemittel nach einem der vorhergehenden Ansprüche,
**dadurch gekennzeichnet, dass**
die Griffeinheit (14d) zumindest ein Käfigelement (26d) aufweist, welches den zumindest einen Volumenkörper (16d) zumindest teilweise umgreift.

5. Hygienemittel nach Anspruch 4,
**dadurch gekennzeichnet, dass**
das zumindest eine Käfigelement (26d) direkt fest mit dem zumindest einen Grundkörper (18d) verbunden ist.

6. Hygienemittel nach einem der vorhergehenden Ansprüche,
**gekennzeichnet durch**
zumindest einen, den zumindest einen Volumenkörper (16b; 16e) zumindest teilweise umschließenden Hüllkörper (28b; 28e), welcher kraft- und/oder stoffschlüssig mit dem zumindest einen Volumenkörper (16b; 16e) verbunden ist.

7. Hygienemittel nach Anspruch 6,
**dadurch gekennzeichnet, dass**
der zumindest eine Hüllkörper (28b; 28e) zumindest teilweise aus einer Weichkomponente besteht.

8. Hygienemittel nach einem der vorhergehenden Ansprüche,
**dadurch gekennzeichnet, dass**
der zumindest eine Grundkörper (18a; 18b; 18c; 18d; 18e; 18h; 18i; 18j; 18k; 18l; 18n) zumindest teilweise aus einer Hartkomponente besteht.

9. Hygienemittel nach einem der vorhergehenden Ansprüche,
**gekennzeichnet durch**
zumindest einen, den zumindest einen Volumenkörper (16c) zumindest teilweise durchdringenden Hüllkörper (28c), welcher kraft- und/oder stoffschlüssig mit dem zumindest einen Volumenkörper (16c) verbunden ist.

10. Hygienemittel nach einem der vorhergehenden Ansprüche,
**dadurch gekennzeichnet, dass**
die Anwendungseinheit (12f; 12g) zumindest teilweise vom dem Volumenkörper (16f; 16g) gebildet ist, welche in einem Bereich der Anwendungseinheit (12f; 12g) zumindest abschnittsweise, insbesondere nachträglich, verdichtet ist.

11. Hygienemittel nach Anspruch 10,
**dadurch gekennzeichnet, dass**
die Griffeinheit (14f; 14g; 14m) zumindest teilweise vom dem Volumenkörper (16f; 16g; 16m) gebildet ist, welche in einem Bereich der Griffeinheit (14f; 14g; 14m) zumindest abschnittsweise, insbesondere nachträglich, verdichtet ist.

12. Hygienemittel nach einem der vorhergehenden Ansprüche,
**gekennzeichnet durch**
zumindest ein Borstenplättchen (30g), welches in eine Ausnehmung (32g) der Anwendungseinheit (12g) eingesetzt ist.

13. Hygienemittel zumindest nach Anspruch 10 oder 11,
**gekennzeichnet durch**
ein Borstenbündel (34f), welches mittels Stanzung mit der Anwendungseinheit (12f) verbunden ist.

14. Verfahren zu einer Herstellung eines Hygienemittels (10a; 10b; 10c; 10d; 10e; 10f; 10g; 10h; 10i; 10j; 10k; 10l; 10m; 10n) nach einem der vorhergehenden Ansprüche,
**dadurch gekennzeichnet, dass** in zumindest einem Verfahrensschritt der Volumenkörper (16a; 16b; 16c; 16d; 16e; 16h; 16i; 16j; 16k; 16l; 16n) mittels eines Partikelschaum-Verfahrens direkt an den Grundkörper (18a; 18b; 18c; 18d; 18e; 18h; 18i; 18j; 18k; 18l; 18n) angeformt wird.

15. Verfahren zumindest nach Anspruch 14,
**dadurch gekennzeichnet, dass**
in zumindest einem Verfahrensschritt der zumindest eine Hüllkörper (28b; 28c; 28d) und/oder der zumindest eine Grundkörper (18b; 18c; 18d) mittels eines Spritzgussverfahrens an den Volumenkörper (16b; 16c) angeformt wird.

16. Verfahren nach einem der Ansprüche 14 bis 15,
**dadurch gekennzeichnet, dass**
der Volumenkörper (16f; 16g; 16m) zumindest abschnittsweise nach einem Formgebungsprozess verdichtet wird.

17. Verfahren nach einem der Ansprüche 14 bis 16,
**dadurch gekennzeichnet, dass**
der Volumenkörper (16f; 16g) in einem Bereich der Anwendungseinheit (12f; 12g) zumindest abschnittsweise nach einem Formgebungsprozess verdichtet wird.

## Claims

1. Hygiene product, in particular oral hygiene product,
with at least one application unit (12a; 12b; 12c; 12d; 12e; 12h; 12i; 12j; 12k; 12l; 12n),
with at least one handle unit (14a; 14b; 14c; 14d; 14e; 14h; 14i; 14j; 14k; 14l; 14n) that is connected to the application unit (12a; 12b; 12c; 12d; 12e; 12h; 12i; 12j; 12k; 12l; 12n),
with at least one volume body (16a; 16b; 16c; 16d; 16e; 16h; 16i; 16j; 16k; 16l; 16n) which at least partially forms the application unit (12a; 12b; 12c; 12d; 12e; 12h; 12i; 12j; 12k; 12l; 12n) and/or the handle unit (14a; 14b; 14c; 14d; 14e; 14h; 14i; 14j; 14k; 14l; 14n) and which is made at least partially of a foamed material, and with
at least one base body (18a; 18b; 18c; 18d; 18e; 18h; 18i; 18j; 18k; 18l; 18n), which is connected to the volume body (16a; 16b; 16c; 16d; 16e; 16h; 16i; 16j; 16k; 16l; 16n) and which at least partially forms the application unit (12a; 12b; 12c; 12d; 12e; 12h; 12i; 12j; 12k; 12l; 12n) and/or the handle unit (14a; 14b; 14c; 14d; 14e; 14h; 14i; 14j; 14k; 14l; 14n),
and wherein the at least one volume body (16a; 16b; 16c; 16d; 16e; 16h; 16i; 16j; 16k; 16l; 16n) is moulded onto the at least one base body (18a; 18b; 18c; 18d; 18e; 18h; 18i; 18j; 18k; 18l; 18n),
**characterized in that** the foamed material consists of a particle foam that is implemented from expanded components.

2. Hygiene product according to claim 1,
**characterized in that**
the at least one volume body (16a; 16b; 16c; 16e; 16h; 16i; 16k; 16l; 16n) encloses the at least one base body (18a; 18b; 18c; 18e; 18h; 18i; 18k; 18l; 18n) at least partially.

3. Hygiene product according to claim 1 or 2,
**characterized in that**
the at least one base body (18a; 18b; 18c; 18e) comprises at least one form-fit element (20a, 22a, 24a; 20b, 22b, 24b; 20c; 20e, 22e, 24e), which forms a form fit connection with the at least one volume body (16a; 16b; 16c; 16e).

4. Hygiene product according to any one of the preceding claims,
**characterized in that**
the handle unit (14d) comprises at least one cage element (26d), which engages around the at least one volume body (16d) at least partially.

5. Hygiene product according to claim 4,
**characterized in that**
the at least one cage element (26d) is directly and fixedly connected with the at least one base body (18d).

6. Hygiene product according to any one of the preceding claims,
**characterized by**
at least one enveloping body (28b; 28e), which encloses the at least one volume body (16b; 16e) at least partially and which is connected to the at least one volume body (16b; 16e) in a force-fit manner and/or by substance-to-substance bond.

7. Hygiene product according to claim 6,
**characterized in that**
the at least one enveloping body (28b; 28e) is implemented at least partially of a soft component.

8. Hygiene product according to any one of the preceding claims,
**characterized in that**
the at least one base body (18a; 18b; 18c; 18d; 18e; 18h; 18i; 18j; 18k; 18l; 18n) is implemented at least partially of a hard component.

9. Hygiene product according to any one of the preceding claims,
**characterized by**
at least one enveloping body (28c), which penetrates the at least one volume body (16c) at least partially and which is connected with the at least one volume body (16c) in a force-fit manner and/or by substance-to-substance bond.

10. Hygiene product according to any one of the preceding claims,
**characterized in that**
the application unit (12f; 12g) is implemented at least partially by the volume body (16f; 16g), which is in a region of the application unit (12f; 12g) densified at least section-wise, in particular subsequently.

11. Hygiene product according to claim 10,
**characterized in that**
the handle unit (14f; 14g; 14m) is implemented at least partially by the volume body (16f; 16g; 16m), which is in a region of the handle unit (14f; 14g; 14m) densified at least section-wise, in particular subsequently.

12. Hygiene product according to any one of the preceding claims,
**characterized by**
at least one bristle platelet (30g), which is inserted in a recess (32g) of the application unit (12g).

13. Hygiene product at least according to claim 10 or 11,
**characterized by**
a bristle bundle (34f), which is connected with the application unit (12f) by punching.

14. Method for a production of a hygiene product (10a; 10b; 10c; 10d; 10e; 10f; 10g; 10h; 10i; 10j; 10k; 10l; 10m; 10n) according to any one of the preceding claims, **characterized in that** in at least one method step the volume body (16a; 16b; 16c; 16d; 16e; 16h; 16i; 16j; 16k; 16l; 16n) is moulded to the base body (18a; 18b; 18c; 18d; 18e; 18h; 18i; 18j; 18k; 18l; 18n) directly by means of a particle-foam method.

15. Method at least according to claim 14,
**characterized in that**
in at least one method step the at least one enveloping body (28b; 28c; 28d) and/or the at least one base body (18b; 18c; 18d) are/is moulded onto the volume body (16b; 16c) by means of an injection-moulding process.

16. Method according to any one of claims 14 to 15,
**characterized in that**
the volume body (16f; 16g; 16m) is at least section-wise densified after a shaping process.

17. Method according to any one of claims 14 to 16,
**characterized in that**
in a region of the application unit (12f; 12g), the volume body (16f; 16g) is at least section-wise densified after a shaping process.

## Revendications

1. Produit d'hygiène, en particulier produit d'hygiène buccale,
comprenant au moins une unité d'application (12a ; 12b ; 12c ; 12d ; 12e ; 12h ; 12i ; 12j ; 12k ; 12l ; 12n),
comprenant au moins une unité poignée (14a ; 14b ; 14c ; 14d ; 14e ; 14h ; 14i ; 14j ; 14k ; 12l ; 12n) reliée à l'unité d'application (12a ; 12b ; 12c ; 12d ; 12e ; 12h ; 12i ; 12j ; 12k ; 12l ; 12n),
comprenant au moins un corps volumique (16a ; 16b ; 16c ; 16d ; 16e ; 16h ; 16i ; 16j ; 16k ; 16l ; 16n) qui forme au moins en partie l'unité d'application (12a ; 12b ; 12c ; 12d ; 12e ; 12h ; 12i ; 12j ; 12k ; 12l ; 12n) et/ou l'unité poignée (14a ; 14b ; 14c ; 14d ; 14e ; 14h ; 14i ; 14j ; 14k ; 14l ; 14n) et qui est constitué au moins en partie d'un matériau moussé,
et comprenant
au moins un corps de base (18a ; 18b ; 18c ; 18d ; 18e ; 18h ; 18i ; 18j ; 18k ; 18l ; 18n) qui est relié au corps volumique (16a ; 16b ; 16c ; 16d ; 16e ; 16h ; 16i ; 16j ; 16k ; 16l ; 16n) et qui forme au moins en partie l'unité d'application (12a ; 12b ; 12c ; 12d ; 12e ; 12h ; 12i ; 12j ; 12k ; 12l ; 12n) et/ou l'unité poignée (14a ; 14b ; 14c ; 14d ; 14e ; 14h ; 14i ; 14j ; 14k ; 14l ; 14n),
et où l'au moins un corps volumique (16a ; 16b ; 16c ; 16d ; 16e ; 16h ; 16i ; 16j ; 16k ; 16l ; 16n) est moulé sur l'au moins un corps de base (18a ; 18b ; 18c ; 18d ; 18e ; 18h ; 18i ; 18j ; 18k ; 18l ; 18n),
**caractérisé en ce que** le matériau moussé est réalisé comme mousse particulaire de composants expansés.

2. Produit d'hygiène selon la revendication 1,
**caractérisé en ce que**
l'au moins un corps volumique (16a ; 16b ; 16c ; 16e ; 16h ; 16i ; 16k ; 16l ; 16n) entoure au moins en partie l'au moins un corps de base (18a ; 18b ; 18c ; 18e ; 18h ; 18i ; 18k ; 18l ; 18n).

3. Produit d'hygiène selon la revendication 1 ou 2,
**caractérisé en ce que**
l'au moins un corps de base (18a ; 18b ; 18c ; 18e) présente au moins un élément de liaison par forme (20a, 22a, 24a ; 20b, 22b, 24b ; 20c ; 20e, 22e, 24e) qui forme une liaison par forme avec l'au moins un corps volumique (16a ; 16b ; 16c ; 16e).

4. Produit d'hygiène selon l'une quelconque des revendications précédentes,
**caractérisé en ce que**
l'unité poignée (14d) présente au moins un élément de cage (26d) qui entoure au moins en partie l'au moins un corps volumique (16d).

5. Produit d'hygiène selon la revendication 4,
**caractérisé en ce que**
l'au moins un élément de cage (26d) est relié directement et fixement à l'au moins un corps de base (18d).

6. Produit d'hygiène selon l'une quelconque des revendications précédentes,
**caractérisé par**
au moins un corps d'enveloppe (28b ; 28e) qui entoure au moins en partie l'au moins un corps volumique (16b ; 16e) et qui est relié par liaison par adhérence et/ou par liaison matérielle à l'au moins un corps volumique (16b ; 16e).

7. Produit d'hygiène selon la revendication 6,
**caractérisé en ce que**
l'au moins un corps d'enveloppe (28b ; 28e) est constitué au moins en partie d'un composant souple.

8. Produit d'hygiène selon l'une quelconque des revendications précédentes,
**caractérisé en ce que**
l'au moins un corps de base (18a ; 18b ; 18c ; 18d ; 18e ; 18h ; 18i ; 18j ; 18k ; 18l ; 18n) est constitué au moins en partie d'un composant dur.

9. Produit d'hygiène selon l'une quelconque des revendications précédentes,
**caractérisé par**
au moins un corps d'enveloppe (28c) qui traverse au moins en partie l'au moins un corps volumique (16c) et qui est relié par liaison par adhérence et/ou par liaison matérielle à l'au moins un corps volumique (16c).

10. Produit d'hygiène selon l'une quelconque des revendications précédentes,
**caractérisé en ce que**
l'unité d'application (12f ; 12g) est formée au moins en partie par le corps volumique (16f ; 16g) compacté au moins en partie, en particulier ultérieurement, dans une région de l'unité d'application (12f ; 12g).

11. Produit d'hygiène selon la revendication 10,
**caractérisé en ce que**
l'unité poignée (14f ; 14g ; 14m) est formée au moins en partie par le corps volumique (16f ; 16g ; 16m) compacté au moins en partie, en particulier ultérieurement, dans une région de l'unité poignée (14f ; 14g ; 14m).

12. Produit d'hygiène selon l'une quelconque des revendications précédentes,
**caractérisé par**
au moins une plaquette de poils (30g) insérée dans un évidement (32g) de l'unité d'application (12g).

13. Produit d'hygiène au moins selon la revendication 10 ou 11,
**caractérisé par**
un faisceau de poils (34f) relié à l'unité d'application (12f) par poinçonnage.

14. Procédé de fabrication d'un produit d'hygiène (10a ; 10b ; 10c ; 10d ; 10e ; 10f ; 10g ; 10h ; 10i ; 10j ; 10k ; 10l ; 10m ; 10n) selon l'une quelconque des revendications précédentes,
**caractérisé en ce que** dans au moins une étape de procédé, le corps volumique (16a ; 16b ; 16c ; 16d ; 16e ; 16h ; 16i ; 16j ; 16k ; 16l ; 16n) est moulé directement sur le corps de base (18a ; 18b ; 18c ; 18d ; 18e ; 18h ; 18i ; 18j ; 18k ; 18l ; 18n) moyennant un procédé à mousse particulaire.

15. Procédé au moins selon la revendication 14,
**caractérisé en ce que**
dans au moins une étape de procédé, l'au moins un corps d'enveloppe (28b ; 28c ; 28d) et/ou l'au moins un corps de base (18b ; 18c ; 18d) est moulé sur le corps volumique (16b ; 16c) moyennant un procédé de moulage par injection.

16. Procédé selon l'une quelconque des revendications 14 à 15,
**caractérisé en ce que**
le corps volumique (16f ; 16g ; 16m) est compacté au moins par sections après un processus de formage.

17. Procédé selon l'une quelconque des revendications 14 à 16,
**caractérisé en ce que**
dans une région de l'unité d'application (12f ; 12g), le corps volumique (16f ; 16g) est compacté au moins par sections, après un processus de formage.
